(19)

Europäisches
Patentamt
European
Patent Office
Office européen
des brevets

(11) **EP 1 039 654 B1**

(12) **EUROPEAN PATENT SPECIFICATION**

(45) Date of publication and mention
of the grant of the patent:
**10.02.2010 Bulletin 2010/06**

(51) Int Cl.:
*H04B 1/707* (2006.01) *H04B 7/26* (2006.01)
*H04J 3/06* (2006.01)

(21) Application number: **00302093.0**

(22) Date of filing: **15.03.2000**

(54) **Pilot signals for synchronisation and/or channel estimation**

Pilotsignale zur Synchronisierung und/oder Kanalschätzung

Signaux de pilote à synchronisation et/ou estimation de canal

(84) Designated Contracting States:
**AT BE CH CY DE DK ES FI FR GB GR IE IT LI LU MC NL PT SE**

(30) Priority: **15.03.1999 KR 9908630**
**12.04.1999 KR 9912856**
**30.04.1999 KR 9915722**
**28.05.1999 KR 9919505**
**12.04.1999 KR 9912857**
**18.08.1999 KR 9934212**
**19.06.1999 KR 9923141**
**22.06.1999 KR 9923568**
**24.06.1999 KR 9923937**
**28.05.1999 KR 9919506**
**29.05.1999 KR 9919610**
**19.06.1999 KR 9923140**
**02.07.1999 KR 9926689**

(43) Date of publication of application:
**27.09.2000 Bulletin 2000/39**

(73) Proprietor: **LG Electronics Inc.**
**Seoul (KR)**

(72) Inventor: **Song, Young Joon**
**Dongan-gu,**
**Anyang-shi,**
**Kyonggi-do (KR)**

(74) Representative: **McLeish, Nicholas Alistair**
**Maxwell et al**
**Boult Wade Tennant**
**Verulam Gardens**
**70 Gray's Inn Road**
**London WC1X 8BT (GB)**

(56) References cited:
**EP-A- 0 886 385      WO-A-95/34154**
**WO-A-99/00912**

• **O'FARRELL T: "NEW SIGNATURE CODE SEQUENCE DESIGN TECHNIQUES FOR CDMA SYSTEMS" ELECTRONICS LETTERS, IEE STEVENAGE, GB, vol. 27, no. 4, 14 February 1991 (1991-02-14), pages 371-373, XP000219855 ISSN: 0013-5194**

**Description**

**BACKGROUND OF THE INVENTION**

**1. Field of the Invention**

The present invention relates to communication systems, and more particularly, wireless communication systems, preferably, wide band code division multiple access (W-CDMA) communication systems.

**2. Background of the Related Art**

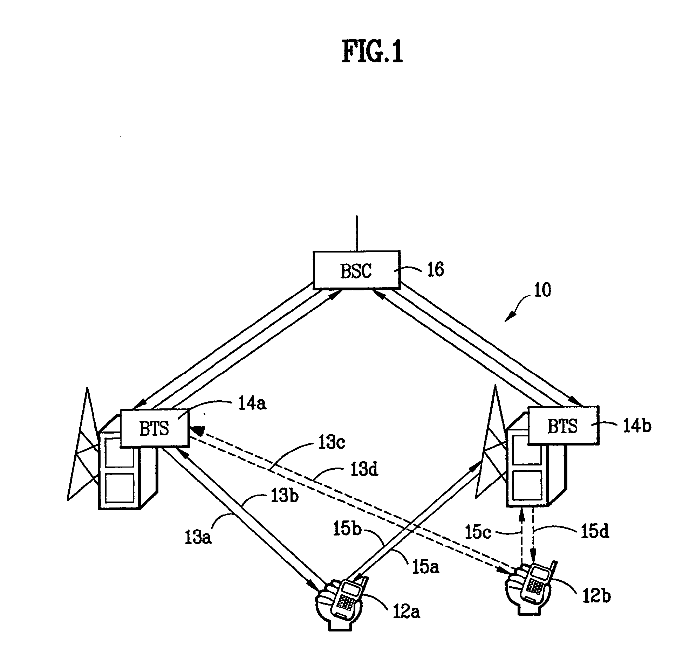

The use of code division multiple access (CDMA) modulation techniques is one of several techniques for facilitating communications in which a large number of systems are present. Figure 1 generally illustrates a system 10, which uses CDMA modulation techniques in communication between user equipment (UE) 12a and 12b, each UE including a cellular telephone, and base stations (BTS) 14a and 14b. A base station controller (BSC) 16 typically includes an interface and processing circuitry for providing system control to the BTS 14a, 14b. The BSC 16 controls the routing of telephone calls from the public switched telephone network (PSTN) to the appropriate BTS for transmission to the appropriate UE. The BSC 16 also controls the routing of calls from the UEs, via at least one BTS to the PSTN. The BSC 16 may direct calls between UEs via the appropriate BTS since UEs do not typically communicate directly with one another. The BSC 16 may be coupled to the BTS 14a and 14b by various means including dedicated telephone lines, optical fiber links or by microwave communication links.

The arrows 13a-13d define the possible communication links between the BTS 14a and UEs 12a and 12b. The arrows 15a-15d define the possible communication links between the BTS 14ba and UEs 12a and 12b. In the reverse channel or uplink (i.e., from UE to BTS), the UE signals is received by BTS 14a and/or BTS 14b, which, after demodulation and combining, pass the signal forward to the combining point, typically to the BSC 16. In the forward channel or downlink (i.e., from BTS to UE), the BTS signals are received by UE 12a and/or UE 12b. The above system is described in U.S. Patent Nos. 5,101,501; 5,103,459; 5,109,390; and 5,416,797, whose entire disclosure is hereby incorporated by reference therein.

A radio channel is a generally hostile medium in nature. It is rather difficult to predict its behavior. Traditionally, the radio channels are modeled in a statistical way using real propagation measurement data. In general, the signal fading in a radio environment can be decomposed into a large-scale path loss component together with a medium-scale slow varying component having a log-normal distribution, and a small-scale fast varying component with a Rician or Rayleigh distribution, depending on the presence or absence of the line-of-sight (LOS) situation between the transmitter and the receiver.

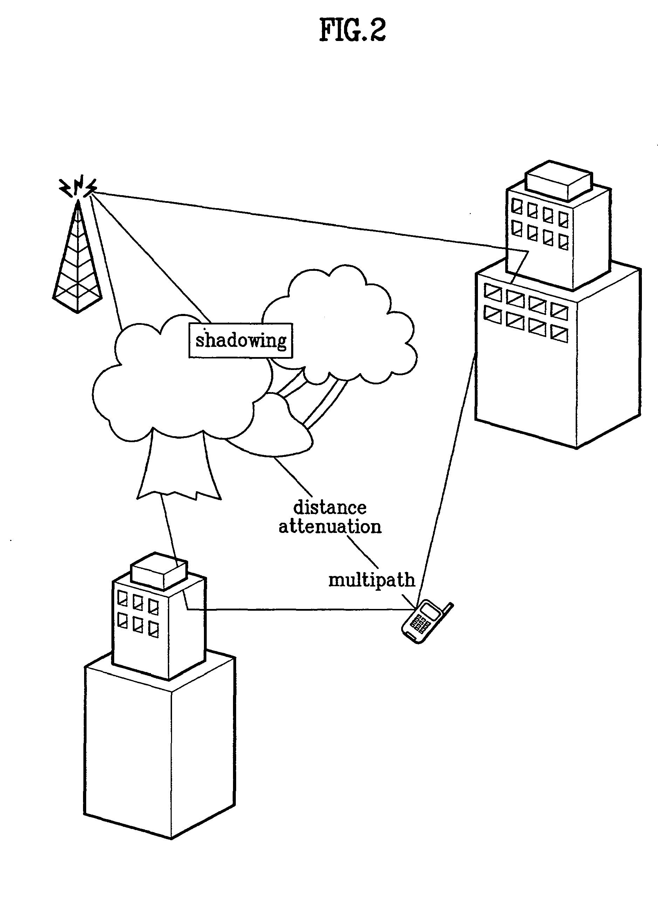

Figure 2 illustrates these three different propagation phenomena. An extreme variation in the transmission path between the transmitter and receiver can be found, ranging from direct LOS to severely obstructed paths due to buildings, mountains, or foliage. The phenomenon of decreasing received power with distance due to reflection, diffraction around structures, and refraction is known as path loss.

As shown, the transmitted signal is reflected by many obstacles between a transmitter and a receiver, thus creating a multipath channel. Due to the interference among many multipaths with different time delays, the received signal suffers from frequency selective multipath fading. For example, when the 2GHz carrier frequency band is used and a car having a UE is travelling at a speed of 100km/h, the maximum Doppler frequency of fading is 185Hz. While coherent detection can be used to increase link capacity, under such fast fading, the channel estimation for coherent detection is generally very difficult to achieve. Because of fading channels, it is hard to obtain a phase reference for the coherent detection of data modulated signal. Therefore, it is beneficial to have a separate pilot channel.

Typically, a channel estimate for coherent detection is obtained from a common pilot channel. However, a common pilot channel transmitted with an omnidirectional antenna experiences a different radio channel than a traffic channel signal transmitted through a narrow beam. It has been noticed that common control channels are often problematic in the downlink when adaptive antennas are used. The problem can be circumvented by user dedicated pilot symbols, which are used as a reference signal for the channel estimation. The dedicated pilot symbols can either be time or code multiplexed.

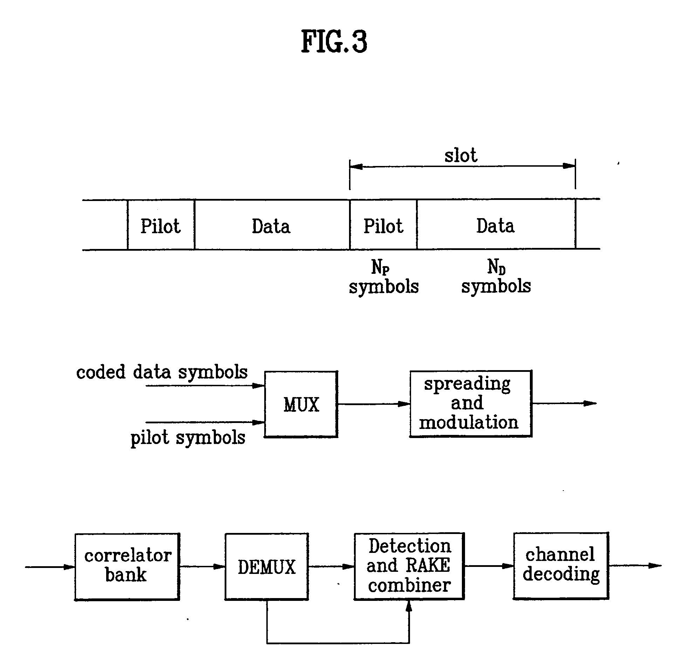

Figure 3 depicts a block diagram of a transmitter and a receiver for time multiplexed pilot symbols for an improved channel estimation method that works satisfactorily under slow-to-fast fading environments. Known pilot symbols are periodically multiplexed with the sequence of the transmitted data. The pilot symbols and data symbols following pilot symbols constitute a slot, as shown in Figure 3.

Further, in a DS-CDMA transmitter, the information signal is modulated by a spreading code, and in the receiver, it is correlated with a replica of the same code. Thus, low cross-correlation between the desired and interfering users is important to suppress the multiple access interference. Good autocorrelation properties are required for reliable initial synchronization, since large sidelobes of the autocorrelation function may lead to erroneous code synchronization decisions. Furthermore, good autocorrelation properties are important to reliably separate the multipath components.

Since the autocorrelation function of a spreading code should resemble, as much as possible, the autocorrelation function of white Gaussian noise, the DS code sequences are also called pseudo-noise (PN) sequences. The autocorrelation and cross-correlation functions are connected in such a way that it is not possible to achieve good autocorrelation and cross-correlation values simultaneously. This can be intuitively explained by noting that having good autocorrelation properties is also an indication of good randomness of a sequence. Random codes exhibit worse cross-correlation properties than deterministic codes.

Such mobile communication system has gone through different stages of evolution, and various countries used different standards. First generation mobile systems in the 1980s used analog transmission for speech services. Advanced Mobile Phone Service (AMPS) in the United States, Total Access Communication System (TACS) in the United Kingdom, Nordic Mobile Telephones (NMT) in Scandinavia, Nippon Telephone and Telegraph (NTT) in Japan, etc., belonged to the first generation.

Second generation systems using digital transmission were introduced in the late 1980s. They offer higher spectrum efficiency, better data services, and more advanced roaming than the first generation systems. Global System for Mobile Communications (GSM) in Europe, Personal Digital Cellular (PDC) in Japan, and IS-95 in the United States belonged to the second generation.

Recently, third generation mobile radio networks have been under intense research and discussion and will emerge around the year 2000. In the International Telecommunication Union (ITU), the third generation networks are called International Mobile Telecommunications - 2000 (IMT-2000) and in Europe, Universal Mobile Telecommunication System (UMTS). IMT-2000 will provide a multitude' of services, including multimedia and high bit rate packet data.

Wideband CDMA has emerged as the mainstream air interface solution for the third generation networks. Wideband CDMA systems are currently being standardized by the European Telecommunications Standards Institute (ETSI) of Europe, the Association for Radio Industry and Business (ARIB) of Japan, the TIA Engineering Committees TR45 and TR46 and the T1 committee T1P1 of the United States, and the Telecommunication Technology Association TTA I and TTA II (renamed Global CDMA I and II, respectively) in Korea. The above description and a background of various systems can be found in WIDEBAND CDMA FOR THIRD GENERATION MOBILE COMMUNICATIONS by T. Ojanpera et al, published 1998, by Artech House Publishers, whose entire disclosure is hereby incorporated by reference therein.

Recently, ARIB in Japan, ETSI in Europe, T1 in U.S.A., and TTA in Korea have mapped out a third generation mobile communication system based on a core network and radio access technique of an existing global system for mobile communications (GSM) to provide various services including multimedia, such as audio, video and data. They have agreed to a partnership study for the presentation of a technical specification on the evolved next generation mobile communication system and named a project for the partnership study as a third generation partnership project (3GPP).

The 3GPP is classified into three part technical studies. The first part is a 3GPP system structure and service capability based on the 3GPP specification. The second part is a study of a universal terrestrial radio access network (UTRAN), which is a radio access network (RAN) applying wideband CDMA technique based on a frequency division duplex (FDD) mode, and a TD-CDMA technique based on a time division duplex (TDD) mode. The third part is a study of a core network evolved from a second generation GSM, which has third generation networking capabilities, such as mobility management and global roaming.

Among the technical studies of the 3GPP, the UTRAN study defines and specifies the transport and physical channels. This technical specification, TS s1.11 v1.1.0, was distributed on March of 1999, whose entire disclosure is hereby incorporated by reference therein. The physical channel includes the dedicated physical channels (DPCHs) used in the uplink and downlink. Each DPCH is' generally provided with three layers, e.g., superframes, radio frames and timeslots. As specified in the 3GPP radio access network (RAN) standard, a superframe has a maximum frame unit of 720ms period. In view of the system frame numbers, one superframe is composed of seventy-two radio frames. Each radio frame has a period of 10ms, and a radio frame includes sixteen timeslots, each of which includes fields with corresponding information bits based on the DPCH.

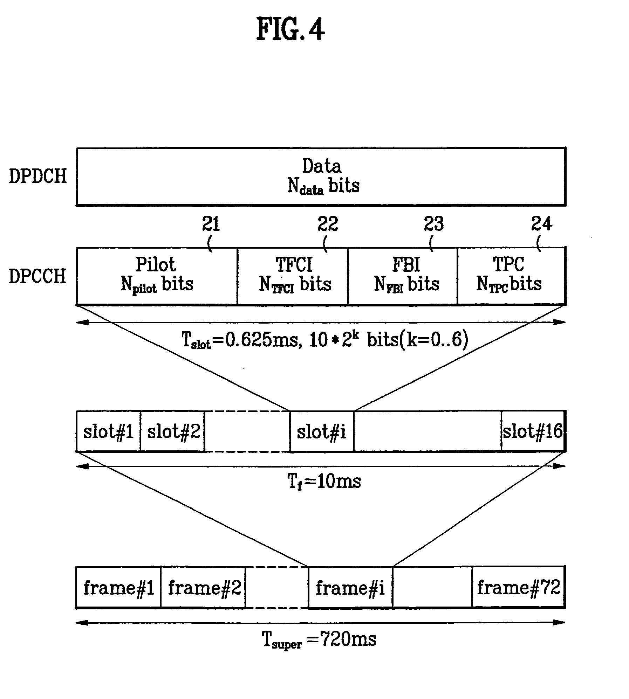

Figure 4 illustrates a frame structure of an uplink DPCH based on the 3GPP RAN standard. The uplink DPCH is provided with two types of channels, e.g., a dedicated physical data channel (DPDCH) and a dedicated physical control channel (DPCCH). The uplink DPDCH is adapted to transport the dedicated data and the uplink DPCCH is adapted to transport the control information.

The uplink DPCCH for the transport of the control information includes various fields such as a pilot field 21 of $N_{pilot}$ bits, a transmit power-control (TPC) field 22 of $N_{TPC}$ bits, a feedback information (FBI) field 23 of $N_{FBI}$ bits and an optional transport-combination indicator (TFCI) field 24 of $N_{TFCI}$ bits. The pilot field 21 includes pilot bits $N_{pilot}$ for supporting channel estimation for coherent detection. The TFCI field 4 supports the simultaneous provision of a plurality of services by the system. The absence of the TFCI field 4 in the uplink DPCCH signifies that the associated service is a fixed rate service. The parameter k determines the number of bits per uplink DPDCH/DPCCH slot. It is related to the spreading factor SF of the physical channel as SF=256/2$^k$. The spreading factor SF may thus range from 256 down to 4.

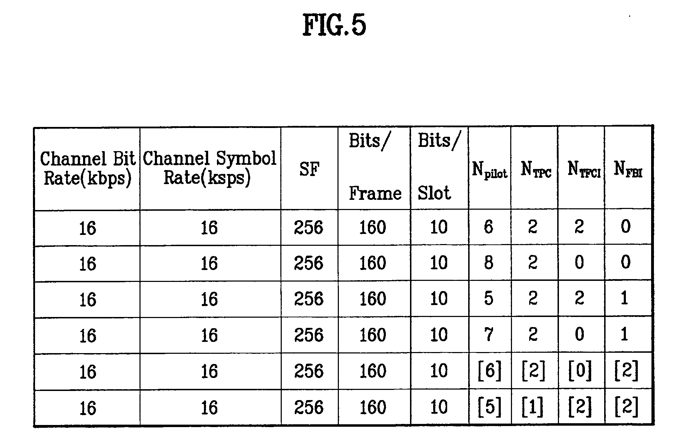

Figure 5 is a table showing various information of the uplink DPCCH, wherein channel bit and symbol rates are those just prior to spreading. (At the time of this technical specification, the exact number of bits of the different uplink DPCCH fields of Figure 4 ($N_{pilot}$, $N_{TPC}$, $N_{FBI}$ and $N_{TFCI}$) was not determined.)

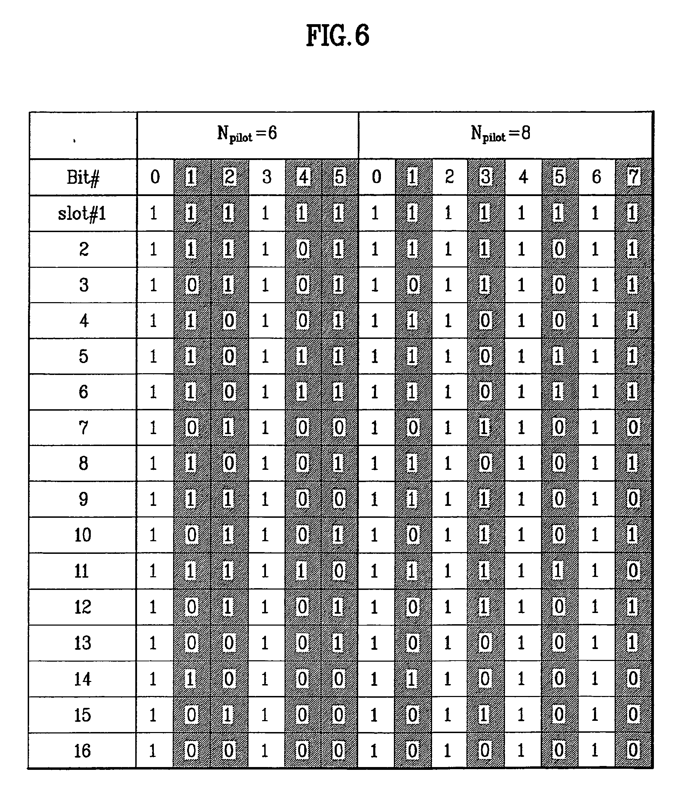

Figure 6 is a table illustrating pilot bit patterns of the uplink DPCCH, and more particularly, 6-bit and 8-bit pilot bit patterns for each slot. In Figure 6, the non-shaded sequence is used for channel estimation, and shaded sequence can be used as frame synchronization words or sequences. The pilot bits other than frame synchronization word, e.g., channel estimation word, have a value of 1.

For example, in the case where each slot includes six pilot bits $N_{pilot}$ = 6, the sequences formed by slot #1 to slot #16 at bit #1, at bit #2, at bit #4, and at bit #5 are used as the frame synchronization words. In the case where each slot is composed of eight pilot bits ($N_{pilot}$ = 8), the sequences at bit #1, at bit #3, at bit #5, and at bit #7 are used as the frame synchronization words. In the case where the pilot bits of each sequences slot are either 6 or 8 in number, a total of four is used as the frame synchronization word. As a result, because one radio frame is provided with sixteen timeslots, the number of pilot bits used as the frame synchronization word is 64 bits per frame.

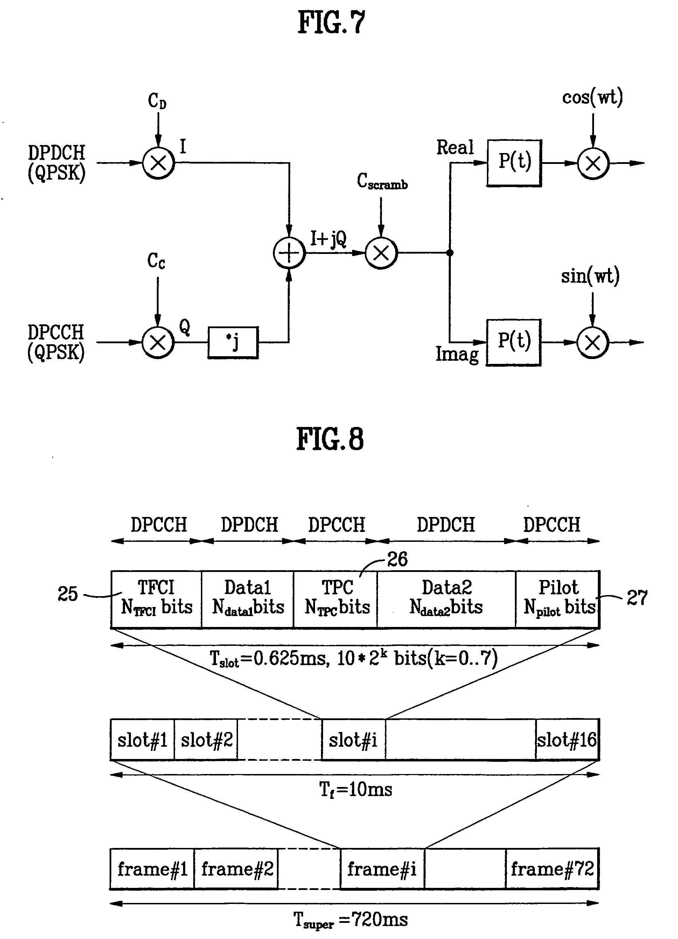

Figure 7 shows a spreading/scrambling arrangement for the uplink DPCH based on the 3GPP RAN standard. The arrangement of Figure 7 is provided for the execution of a quadrature phase shift keying (QPSK) operation where the uplink DPDCH and DPCCH are mapped into I and Q channel branches, respectively.

The spreading is an operation for switching all symbols through the respective channel branches to a plurality of chips. The I and Q channel branches are spread respectively at chip rates based on two different orthogonal variable spreading factors (OVSFs), or channelizing codes $C_D$ and $C_C$. The OVSF represents the number of chips per symbol on each channel branch. The spread of two channel branches are summed and then complex-scrambled by a specific complex scrambling code $C_{scramb}$. The complex-scrambled result is separated into real and imaginary and then transmitted after being placed on respective carriers.

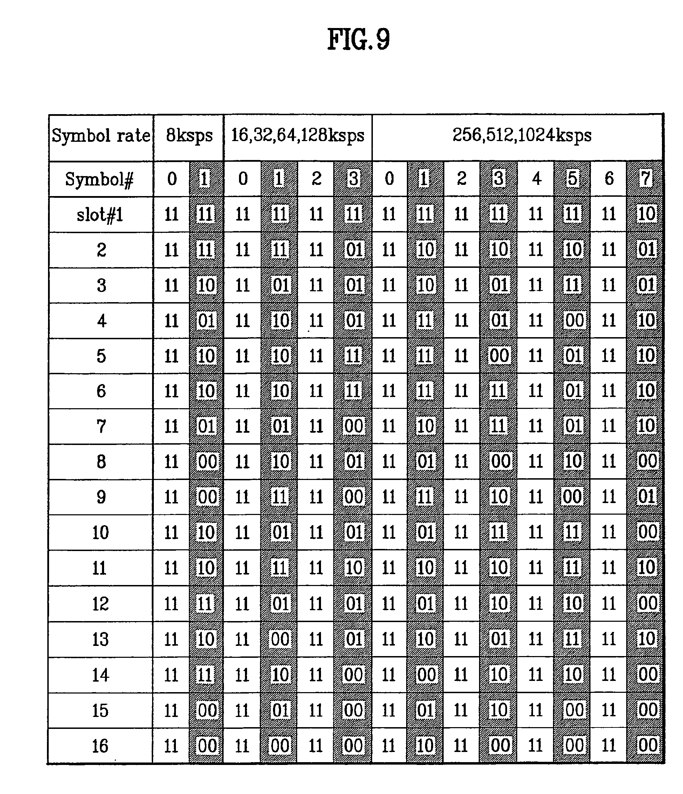

Figure 8 illustrates a frame structure of a downlink DPCH based on the 3GPP RAN standard. The number of pilot bits (or symbols) in the uplink DPCH is 6 or 8 because the uplink DPCH is activated at a fixed rate of 16Kbps. However, since the downlink DPCH is activated at a variable rate, it has pilot symbol patterns illustrated in Figure 9.

With reference to Figure 8, similar to the uplink DPCH, the downlink DPCH is provided with two types of channels, e.g., a dedicated physical data channel (DPDCH) and a dedicated physical control channel (DPCCH). In the downlink DPCH, the downlink DPDCH is adapted to transport the dedicated data and the downlink DPCCH is adapted to transport the control information. The downlink DPCCH for transporting the control information is composed of various fields such as a pilot field 27, TPC field 26 and TFCI field 25. The pilot field 27 includes pilot symbols for supporting the channel estimation for coherent detection.

Figure 9 is a table illustrating pilot symbol patterns contained in the downlink DPCCH, which are classified according to different symbol rates of the downlink DPCCH. For example, in the case where the symbol rate is 16, 32, 64 or 128Kbps, each slot includes four pilot symbols for an I channel branch and four pilot symbols for a Q channel branch, totaling eight pilot symbols.

In Figure 9, the non-shaded sequence is used for channel estimation and shaded sequences can be used as frame synchronization words. The remaining pilot symbols other than the frame synchronization word (e.g., channel estimation) have a value of 11. For example, in the case where the symbol rate is 16, 32, 64 or 128Kbps, the sequences, formed by pilot symbols from slot #1 to slot #16, at symbol #1 and at symbol #3 are used as the frame synchronization words. Accordingly, because the number of pilot symbols used as the frame synchronization words is 4 per slot, 64 pilot symbols are used in each radio frame.

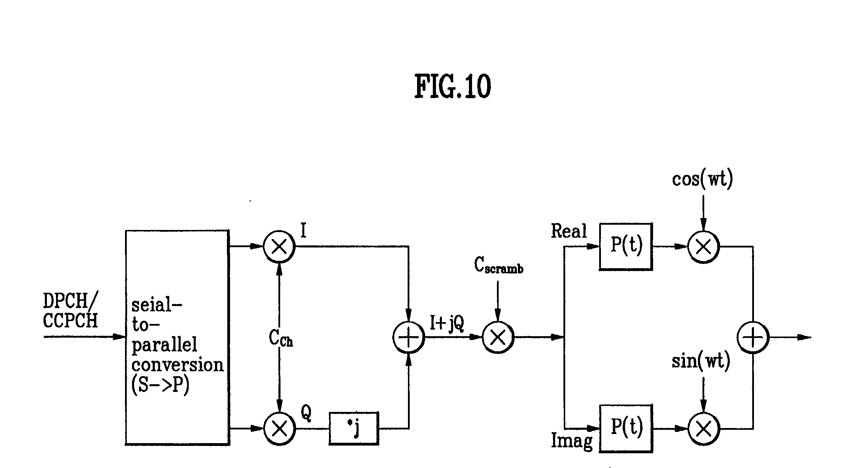

Figure 10 illustrates a spreading/scrambling arrangement for the downlink DPCH based on the' 3GPP RAN standard. The arrangement of Figure 10 is provided for the spreading and scrambling of the downlink DPCH and a common control physical channel (CCPCH). A QPSK operation is performed with respect to a pair of symbols of the two channels in such a manner that they are serial-to-parallel converted and then mapped into I and Q channel branches, respectively.

The I and Q channel branches are spread respectively at chip rates based on two equal channelizing codes $C_{ch}$. The spread of the two channel branches are summed and then complex-scrambled by a specific complex scrambling code $C_{scramb}$. The complex-scrambled result is separated into real and imaginary and then transmitted, after being placed on respective carriers. Noticeably, the same scrambling code is used for all physical channels in one cell, whereas different channelizing codes are used for different physical channels. Data and various control information are transported to a receiver through the uplink and downlink DPCHs subjected to the above-mentioned spreading and scrambling.

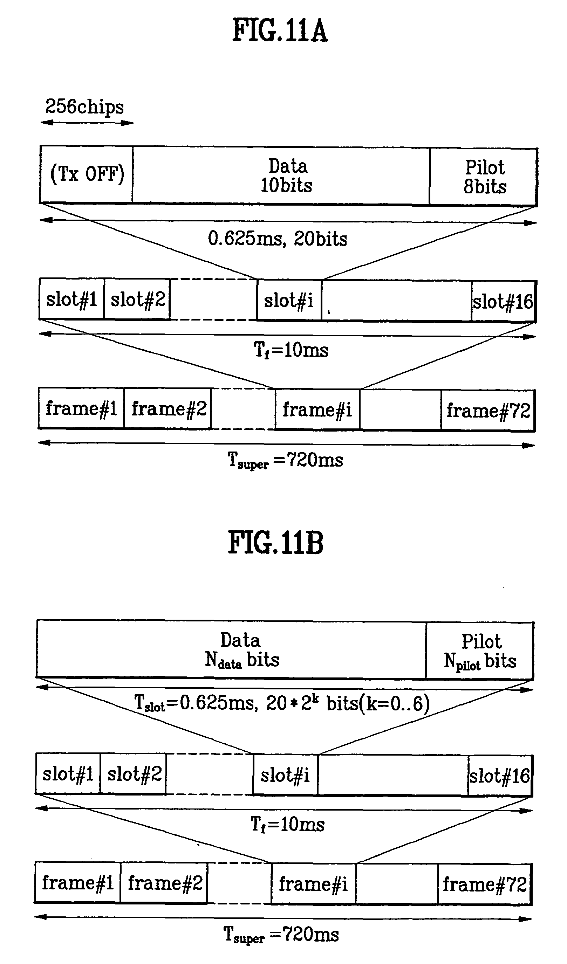

The TS S1.11 v1.1.0 specification also specified a primary common control physical channel (PCCPCH), which is a fixed rate downlink physical channel used to carry the broadcast channel (BCH), and a secondary common control physical channel (SCCPCH) used to carry the forward access channel (FACH) and the paging channel (PCH) at a constant rate. Figures 11A and 11B illustrate the frame structure of PCCPCH and SCCPCH, each having a pilot field. The TS S1.11 v1.1.0 specification recommended the pilot patterns for the PCCPCH and SCCPCH. Further, the TS S1.11 v1.1.0 specification recommended the pilot pattern of the DPCH channel for the diversity antenna using open loop antenna diversity based on space time block coding based transmit diversity (STTD) and diversity antenna pilot patterns for PCCPCH and SCCPCH. Those patterns can be found in the TS S1.11 v1.1.0 specification, and detailed description is being omitted.

For frame synchronization, an autocorrelation function must be performed on the basis of the pilot pattern sequence. In the pilot sequence design, finding an autocorrelation of a sequence with the lowest out-of-phase coefficient is important to decrease the probability of false alarm regarding the synchronization. A false alarm is determined when a peak is detected when there should not be a peak detection.

Optimally, the result of the autocorrelation for a frame with a sequence at a prescribed pilot bit should have same maximum values at zero and middle time shifts of one correlation period, which are different in polarity, and the remaining sidelobes at time shifts other than zero and middle should have a value of zero. However, the various pilot patterns recommended in the TS S1.11 v1.1.0 do not meet this requirement, both in the uplink and downlink.

In an article entitled "Synchronization Sequence Design with Double Thresholds for Digital Cellular Telephone" by Young Joon Song et al. (August 18-20, 1998), the present inventor being a co-author, the article describes a correlator circuit for GSM codes where the out-of-phase coefficients are all zero except one exception at zero and middle shift having a first peak and a second peak, where the first and second peaks are opposite in polarity, but the peaks are not equal to one another. Further, the article describes lowest out-of-phase coefficients of +4 and -4. However, the article does not provide how such sequences and autocorrelation can be used to achieve the above described optimal results, and the article does not provide sufficient disclosure that the sequences achieve or can achieve the lowest autocorrelation sidelobes.

As described above, the pilot patterns used as frame synchronization words or sequences do not achieve the optimal results. Further, the background pilot patterns do not rapidly and accurately perform the frame synchronization. Moreover, the above pilot patterns and frame synchronization sequences do not provide optimal cross-correlation and autocorrelation. Additionally, neither the TS specification nor the article provides a solution of the use of the pilot patterns for slot-by-slot double check frame synchronization scheme, and neither discloses the use of the frame synchronization sequence for channel estimation.

## SUMMARY OF THE INVENTION

An object of the present invention is to obviate at least the problems and disadvantages of the related art.

An object of the present invention is to provide frame synchronization words resulting in optimal autocorrelation results.

A further object of the present invention is to eliminate or prevent sidelobes.

A further object of the present invention is to provide maximum values at zero and middle time shifts.

Another object of the present invention is to provide a synchronization word for at least ohe of rapid and accurate frame synchronization.

Another object of the present invention is to provide a slot-by-slot double check frame synchronization scheme.

Still another object of the present invention is to provide a frame synchronization word which can be used for channel estimation.

Still another object of the present invention is to provide good cross-correlation and autocorrelation simultaneously.

An object of the present invention is to provide a mathematical basis for using an optimal pilot pattern with a slot length having a minimum side lobe value for frame synchronization when the chip rate of 3.8Mcps is employed in processing without any change, making it possible accurate frame synchronization.

An object of the present invention is to provide a method of exactly confirming a frame synchronization based on respective slots, by using an optimum pilot pattern of a slot length per radio frame for a correlation process as it is, in using a chip ratio of 3.8Mcps in an up-link and down-link of a third generation mobile communication system.

An object of the invention is to provide a frame synchronization apparatus and method for accomplishing frame synchronization by using upward and downward link pilot patterns proposed in a 3GPP radio access network standard.

According to an aspect of the invention, there is provided a method according to claim 1.

## BRIEF DESCRIPTION OF THE DRAWINGS

The invention will be described in detail with reference to the following drawings in which like reference numerals refer to like elements wherein:

Figure 1 generally illustrates a system, which uses CDMA modulation techniques in communication between user and base stations;

Figure 2 illustrates these three different propagation phenomena ;

Figure 3 depicts a block diagram of a transmitter and a receiver for time multiplexed pilot symbols;

Figure 4 illustrates a frame structure of an uplink DPCH based on the 3GPP RAN standard;

Figure 5 is a table showing various information of the uplink DPCCH;

Figure 6 is a table illustrating pilot bit patterns of the uplink DPCCH;

Figure 7 shows a spreading/scrambling arrangement for the uplink DPCH based on the 3GPP RAN standard;

Figure 8 illustrates a frame structure of a downlink DPCH based on the 3GPP RAN standard;

Figure 9 is a table illustrating pilot symbol patterns contained in the downlink DPCCH;

Figure 10 illustrates a spreading/scrambling arrangement for the downlink DPCH based on the 3GPP RAN standard;

Figures 11A and 11B illustrate the frame structure of PCCPCH and SCCPCH, respectively;

Figure 12A is a table illustrating frame synchronization words $C_1$ to $C_{i-th}$ ;

Figure 12B is a table illustrating the autocorrelation function of the sequences of pilot bits;

Figure 13A illustrates addition of two autocorrelation functions;

Figure 13B illustrates addition of the four autocorrelation functions;

Figures 14A and 14B are tables illustrating pilot patterns for uplink DPCCH;

Figure 14C is a table illustrating the mapping relationship between the 8 synchronization words $C_1$-$C_8$ of Figure 12A and shaded pilot bit patterns of Figures 14A and 14B;

Figure 14D illustrates a correlation circuit for frame synchronization based on pilot bits of the uplink DPCCH;

Figure 14E is a table illustrating the correlation results at points $A_1$-$A_4$, and the summing of the correlation results at point B of Figure 14D.

Figure 14F is a table illustrating various results of the addition of correlation results based on the uplink pilot patterns of the frame synchronization words ;

Figure 14G illustrates a correlator circuit for frame synchronization based on pilot bit sequences of an uplink DPCCH ;

Figure 14H illustrates the receiver circuit of a base station or a user equipment to recover the received spread signal including the frame synchronization words in the pilot field;

Figure 14I illustrates results of correlation circuit using the pilot pattern of the technical specification;

Figure 14J illustrates a time shift graph of the summation of results of Figure 14I;

Figure 15A illustrates the pilot symbol patterns for downlink DPCH;

Figure 15B illustrates the mapping relationship between the 8 frame synchronization words of Figure 12A, and shaded pilot symbol pattern of Figure 15A;

Figure 15C illustrates a correlation circuit for frame synchronization for downlink DPCCH;

Figure 16A illustrates pilot symbol pattern of PCCPCH;

Figure 16B illustrates the mapping relationship between the synchronization words $C_1$-$C_8$ of Figure 12A, and the shaded pilot symbol patterns of Figure 16A;

Figure 16C illustrates pilot symbol pattern of SCCHPCH;

Figure 16D illustrates the mapping relationship between the synchronization words $C_1$-$C_8$ of Figure 12A, and the shaded pilot symbol patterns of Figure 16C;

Figures 17A-17C illustrate addition of autocorrelation functions of frame synchronization word and current pilot patterns (described in TS S1.11 v1.1.0 specification) for DPCHs and PCCPCH;

Figure 18A illustrates the parameters used for obtaining $P_D$, $P_{FA}$, and $P_S$ on uplink DPCCH and downlink DPCH over additive white Gaussian noise (AWGN);

Figure 18B illustrates the probability of detection $P_D$ on downlink DPCCH over AWGN channel;

Figure 18C illustrates the probability of false alarm $P_{FA}$ on downlink DPCCH over AWGN channel;

Figure 18D illustrates the probability of a frame synchronization confirmation success $P_s$ on downlink DPCCH over AWGN channel;

Figure 19A illustrates pilot symbol patterns of downlink DPCH for the diversity antenna using a space time block coding based transmit diversity (STTD);

Figure 19B illustrates the mapping relationship between the 8 words $C_1$-$C_8$ of Figure 12A and shaded pilot symbol patterns of Figure 19A;

Figure 19C illustrates the diversity antenna pilot symbol pattern for PCCPCH;

Figure 19D illustrates the mapping relationship between the words $C_1$-$C_8$ of Figure 12A and shadowed pilot symbol patterns of Figure 19C;

Figure 19E illustrates the pilot symbol pattern for the diversity antenna when STTD encoding is used on the SCCPCH;

Figure 19F illustrates the mapping relationship between the words $C_1$-$C_8$ of Figure 12A and shaded pilot symbol patterns of Figure 19E;

Figure 20A is a table illustrating frame synchronization words $C_1$-$C_{16}$ (i=16) and autocorrelated function ;

Figure 20B is a table illustrating the autocorrelation function of the pilot bits of each frame synchronization word classified in the PCSP;

Figure 20C illustrates the pilot bit pattern of uplink DPCCH;

Figure 20D illustrates a mapping relationship between the alternative frame synchronization words $C_1$-$C_{16}$ of Figure 20A and the shaded frame synchronization words of Figure 20C;

Figures 20E and 20F illustrate the pilot symbol pattern of downlink DPCH;

Figure 20G illustrates a mapping relationship between the alternative frame synchronization words $C_1$-$C_{16}$ of Figure 20A and the shaded frame synchronization words of Figures 20E and 20F;

Figure 20H illustrates the pilot symbol pattern of downlink PCCPCH;

Figure 20I illustrates a mapping relationship between the alternative frame synchronization words $C_1$-$C_{16}$ of Figure 20A and the shaded frame synchronization words of Figure 20H.

Figure 21 illustrates a preferred embodiment for the new frame synchronization words $C_1$-$C_{i\text{-}th}$;

Figure 22A illustrates the addition of two auto-correlation functions;

Figure 22B illustrates the addition of two cross-correlation functions between the two frame synchronization words within the same class;

Figure 22C illustrates the addition of four auto-correlation functions;

Figure 22D illustrates the addition of four cross-correlation functions between the four frame synchronization words of two classes;

Figures 23A illustrates the pilot bit patterns on uplink DPCCH with $N_{pilot}$ = 2, 3, and 4;

Figure 23C illustrates the pilot bit patterns on uplink DPCCH with $N_{pilot}$ = 2,3, and 4 in accordance with an alternative embodiment compared to Figure 23A;

Figures 23E and 23F illustrate the pilot bit patterns on uplink DPCCH with $N_{pilot}$ = 5, 6, 7, and 8;

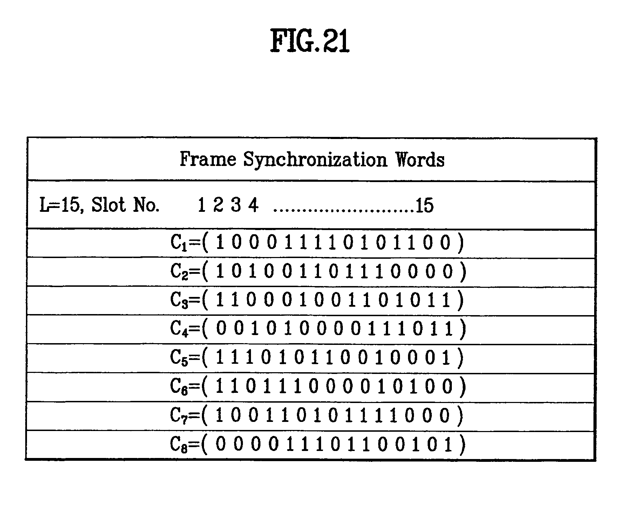

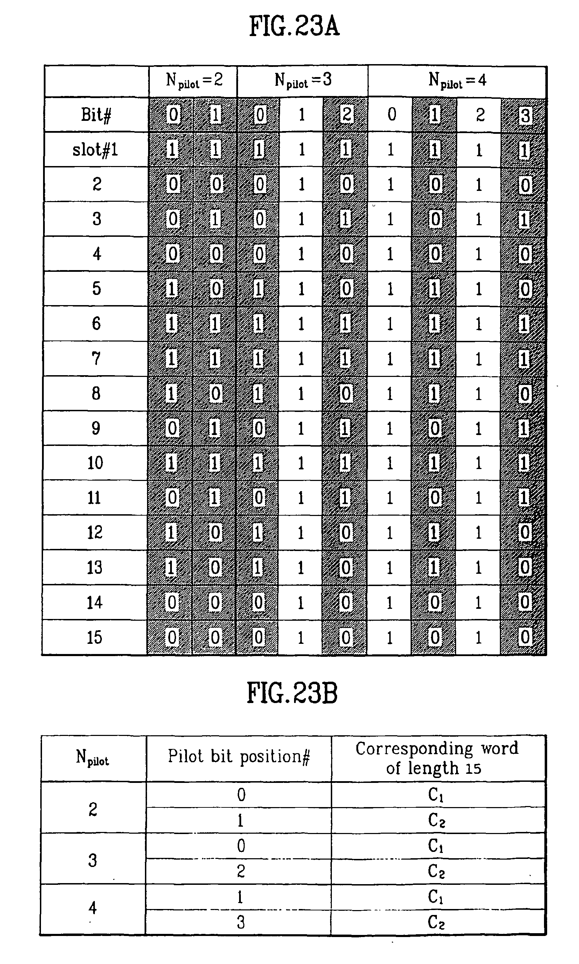

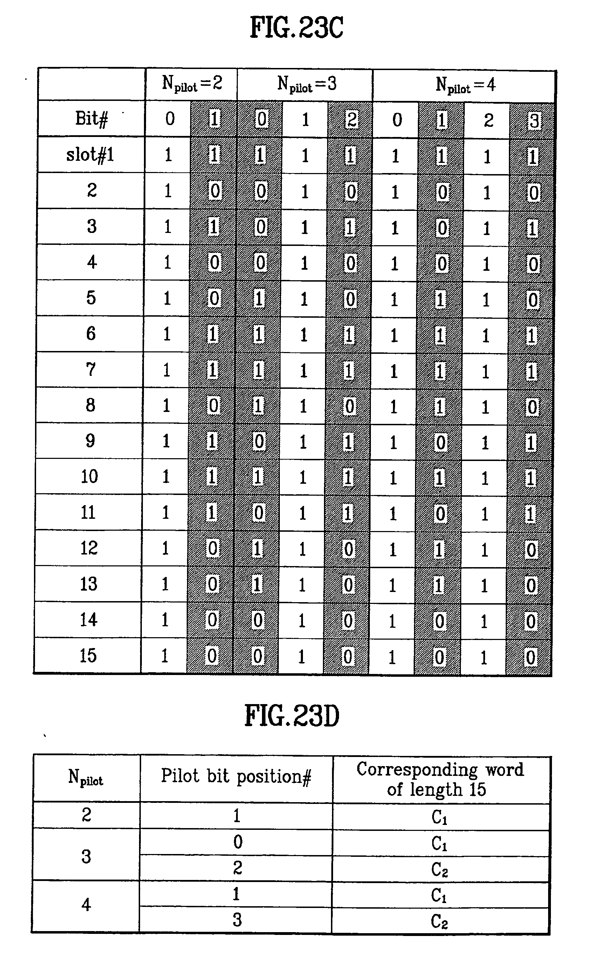

Figures 23B and 23D illustrate the mapping relationship between the frame synchronization words of Figure 21, and shaded frame synchronization words of Figures 23A and 23D, respectively;

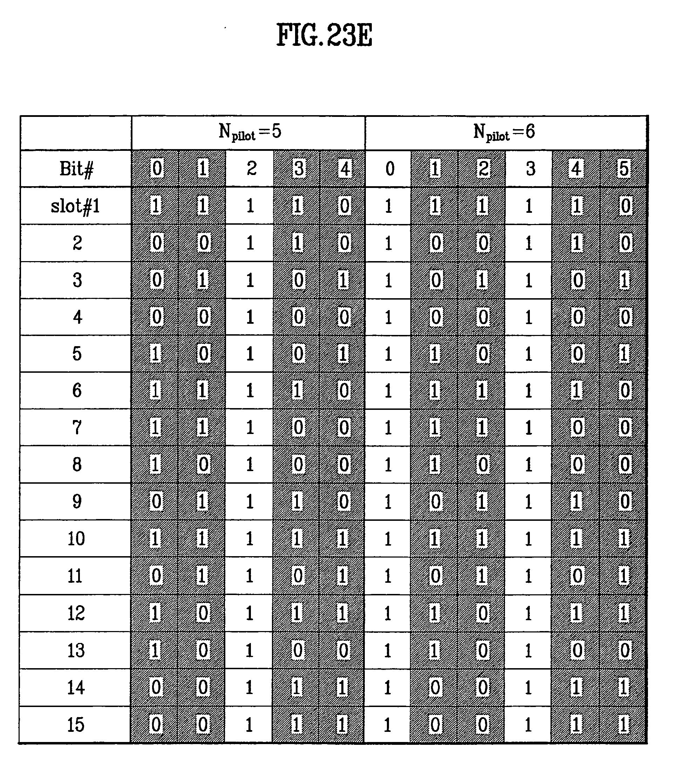

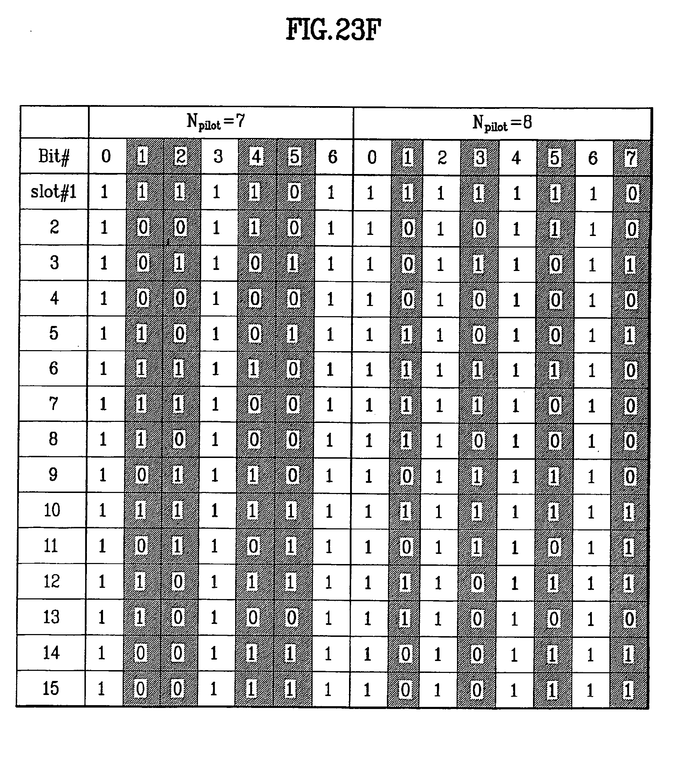

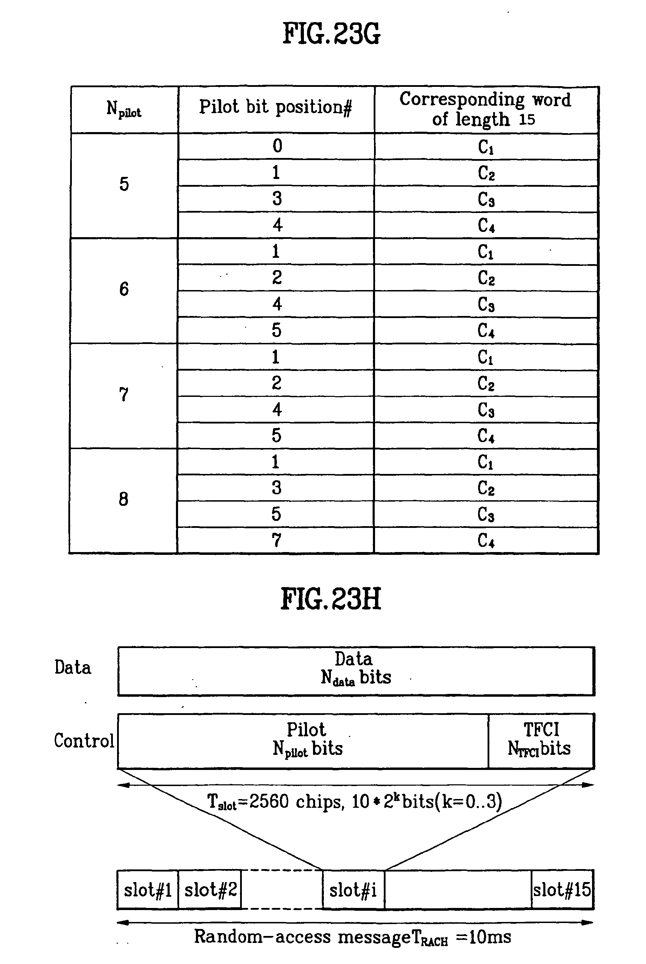

Figure 23G illustrates the mapping relationship between the frame synchronization words of Figure 21, and the shaded frame synchronization words of Figures 23E and 23F;

Figure 23H illustrates the structure of random access channel;

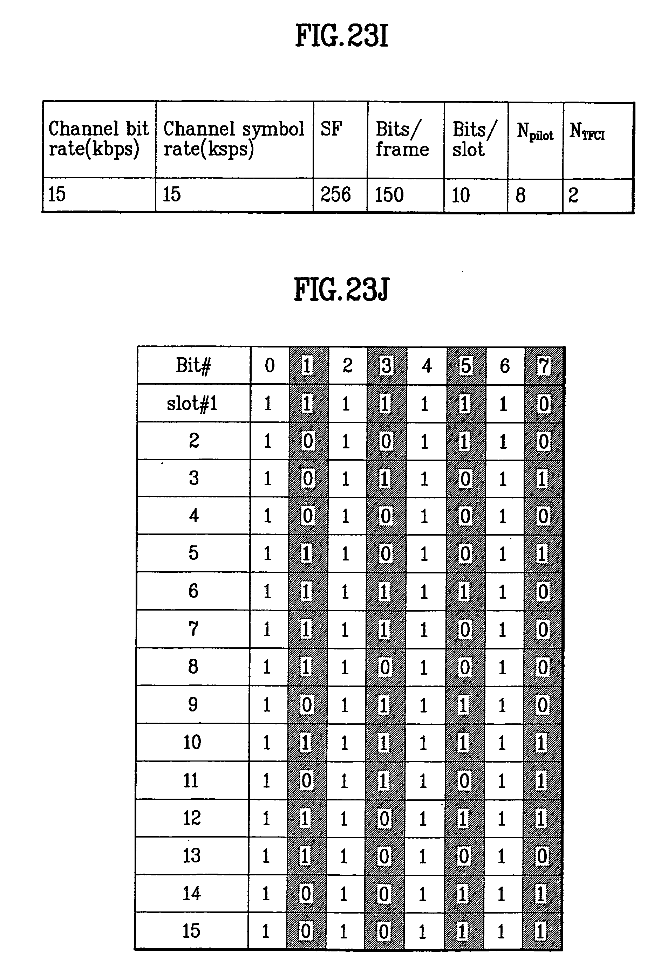

Figure 23I illustrates the random access message control fields;

Figure 23J illustrates the pilot bit pattern of the RACH;

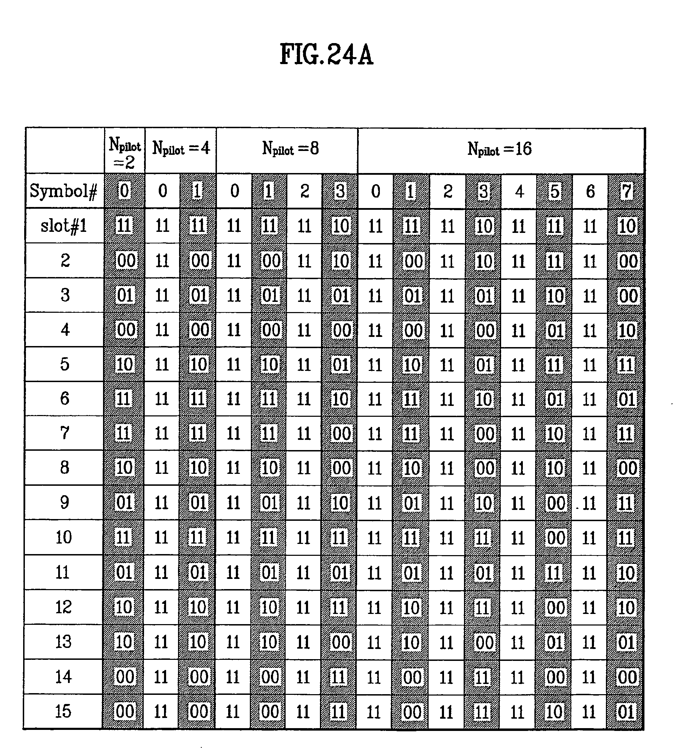

Figure 24A illustrates the pilot symbol patterns on downlink DPCH when $N_{pilot}$ = 2, 4, 8, and 16;

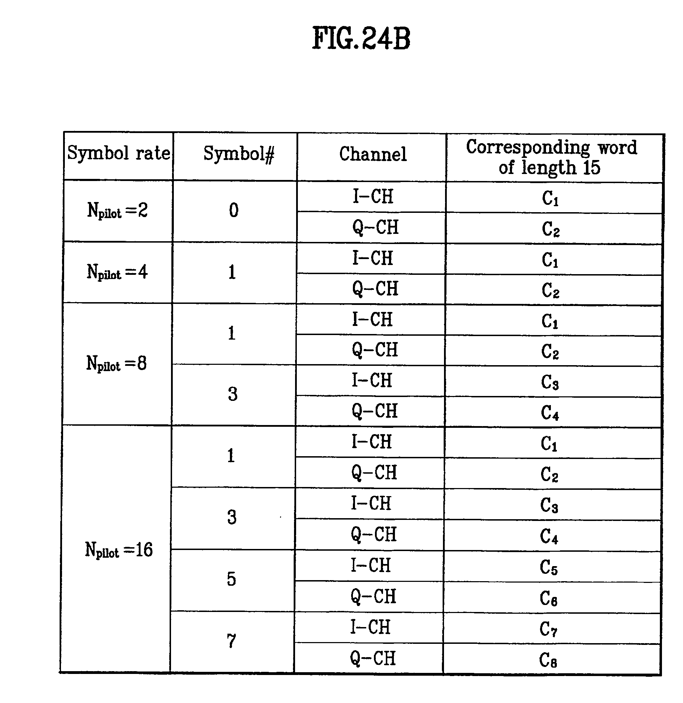

Figure 24B illustrates the mapping relationship between the frame synchronization words $C_1$-$C_8$ of Figure 21 and shaded pilot symbol patterns of Figure 24A;

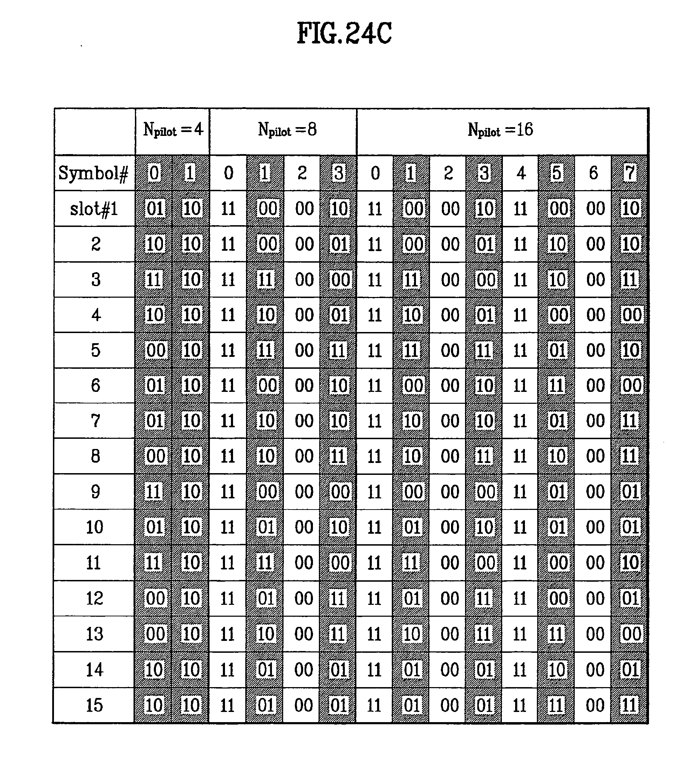

Figure 24C illustrates the pilot symbol patterns of downlink DPCH for the diversity antenna using STTD;

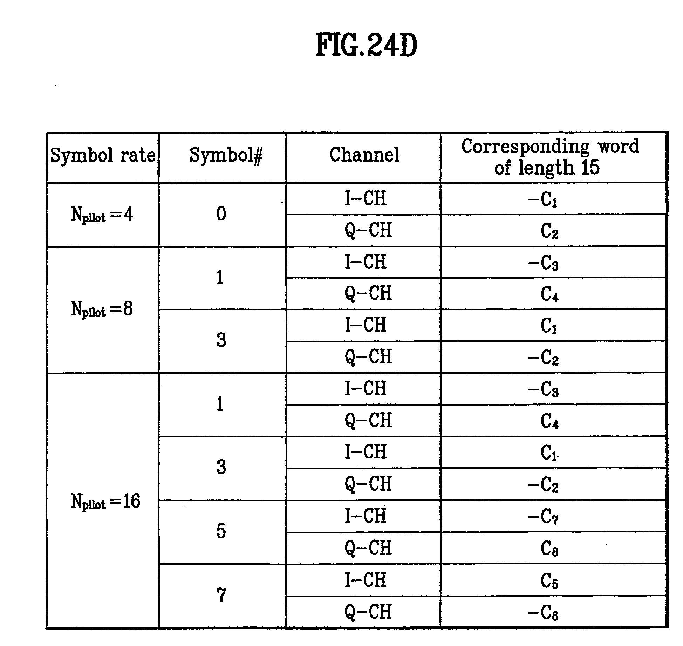

Figure 24D illustrates the mapping relationship between the frame synchronization words $C_1$-$C_8$ of Figure 21 and shaded pilot symbol patterns of Figure 24C;

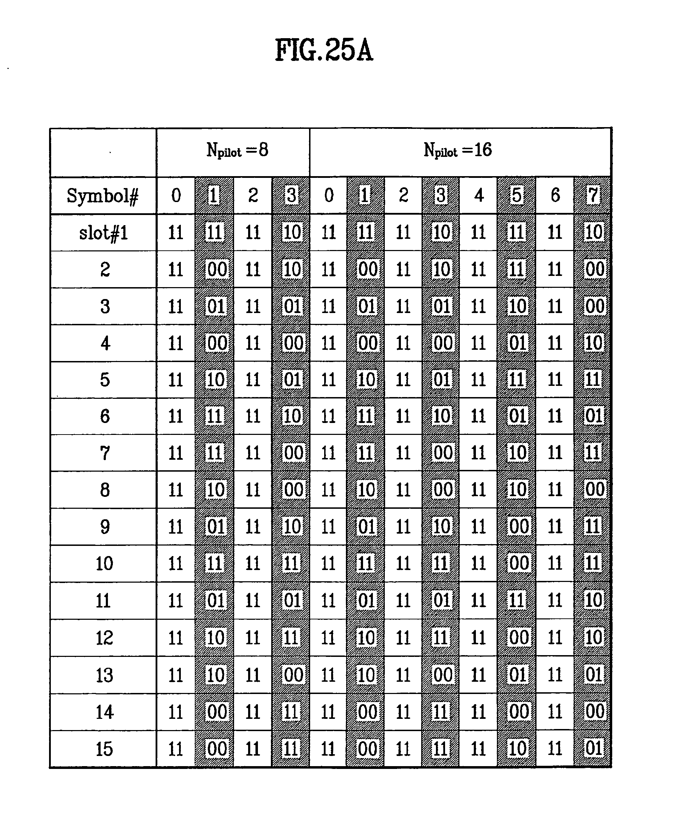

Figure 25A illustrates the pilot symbol patterns for downlink SCCPCH for $N_{pilot}$ = 8 and 16;

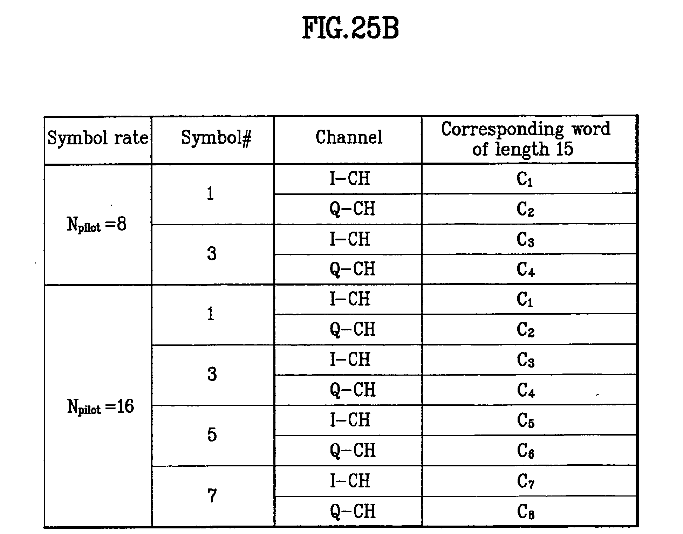

Figure 25B illustrates the mapping relationship of the frame synchronization words $C_1$-$C_8$ of Figure 21 and shaded pilot symbol patterns of Figure 25A;

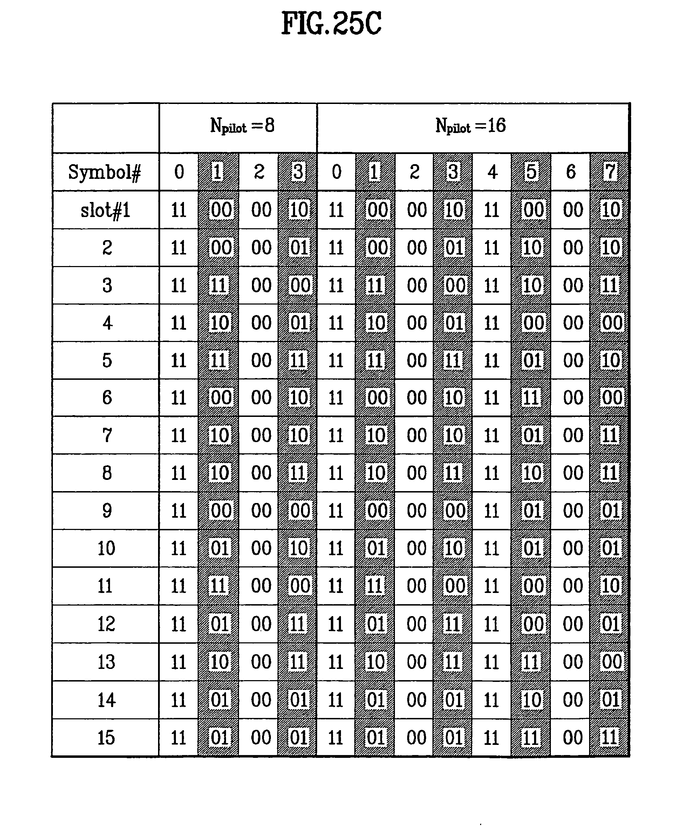

Figure 25C illustrates the pilot symbol patterns of downlink SCCPCH for Npilot = 8 and 16 for the diversity antenna using STTD;

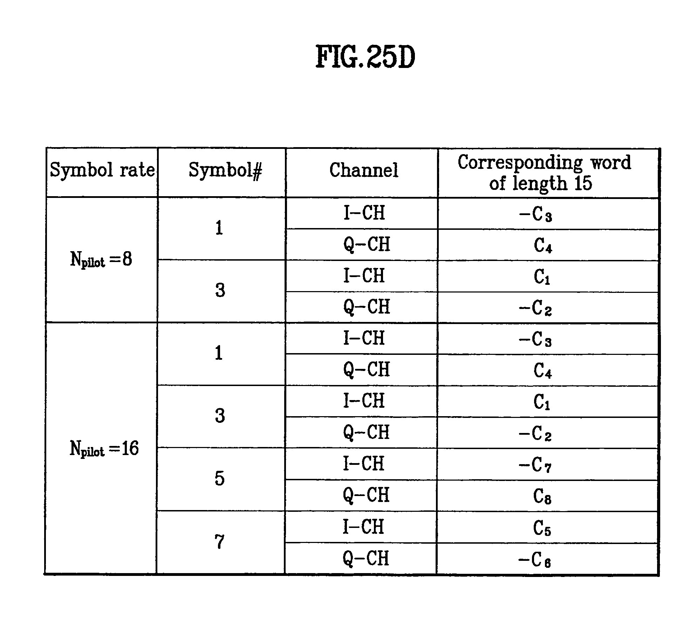

Figure 25D illustrates the mapping relationship between the frame synchronization words $C_1$-$C_8$ of Figure 21 and shaded pilot symbol patterns of Figure 25C;

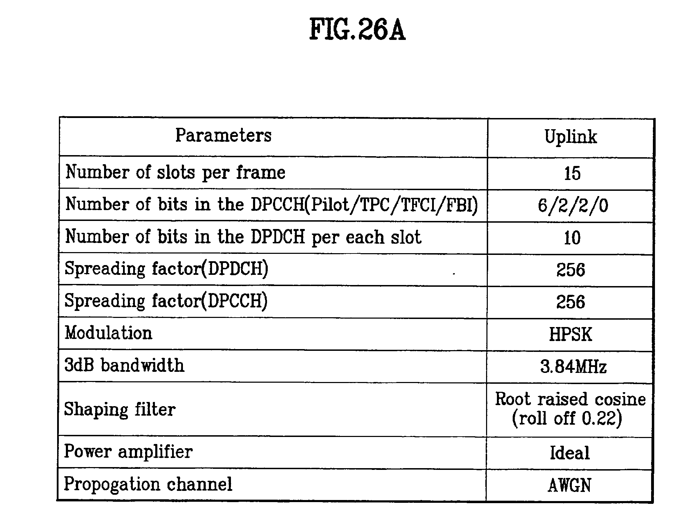

Figure 26A illustrates the parameters used to evaluate the performance of the pilot bit pattern on uplink DPCCH over AWGN;

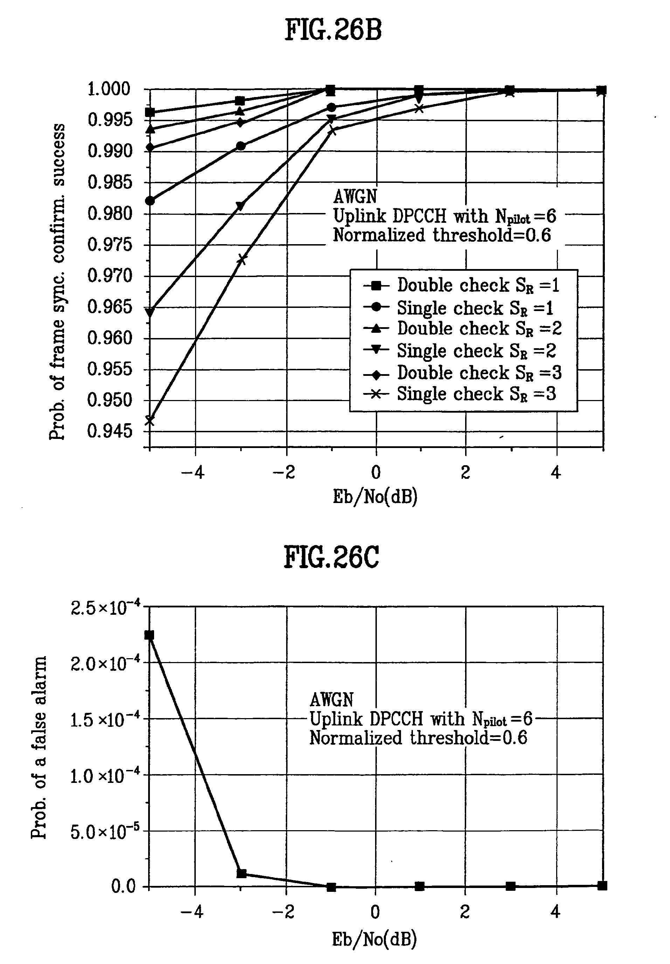

Figure 26B illustrates the probability of frame synchronization confirmation success $P_S$ on uplink DPCCH with $N_{pilot}$ =6 over AWGN channel;

Figure 26C illustrates the probability of a false alarm $P_{FA}$ on uplink DPCCH with $N_{pilot}$ =6 over AWGN channel;

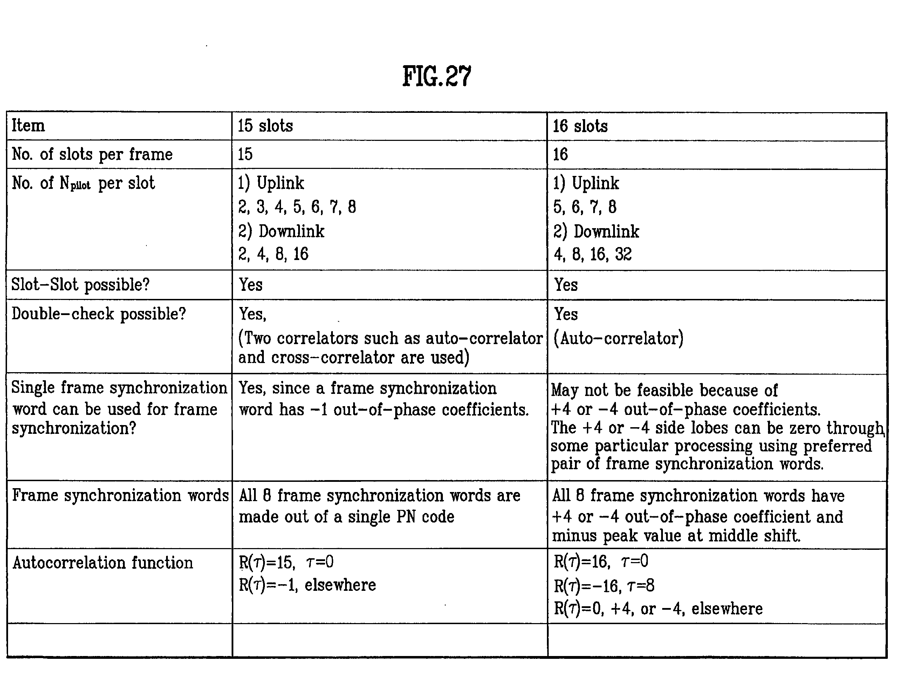

Figure 27 is a comparision chart between the systems for 15 timeslots and 16 slots;

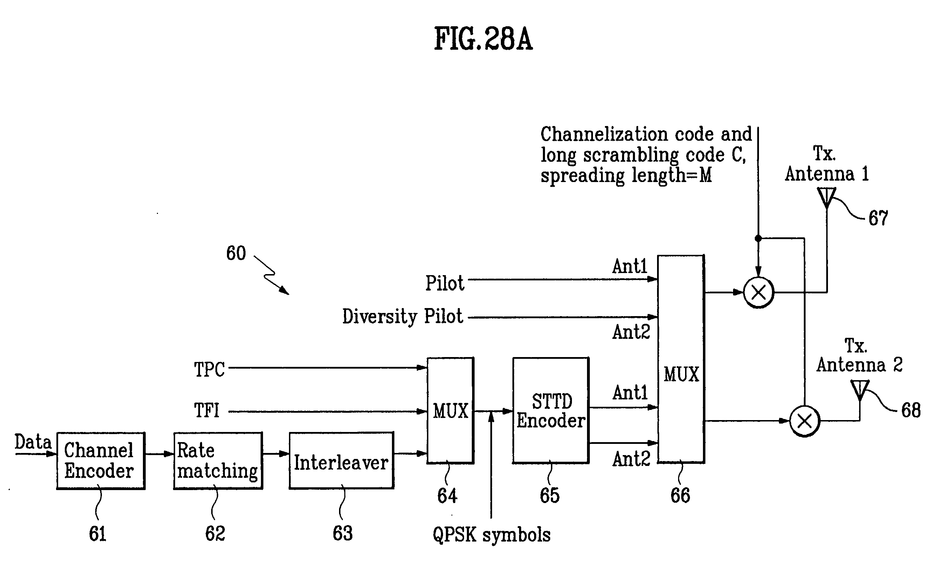

Figure 28A is a block diagram of an STTD transmitter according to the 3GPP RAN standards;

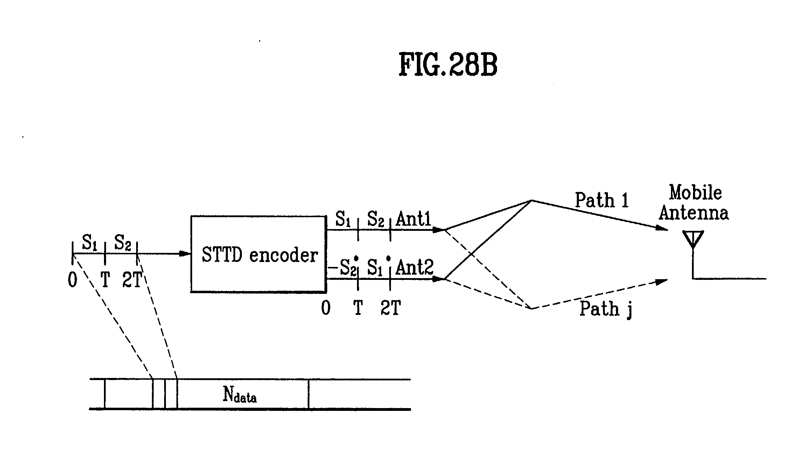

Figure 28B illustrates an STTD encoding based on the STTD transmitter of Figure 28A;

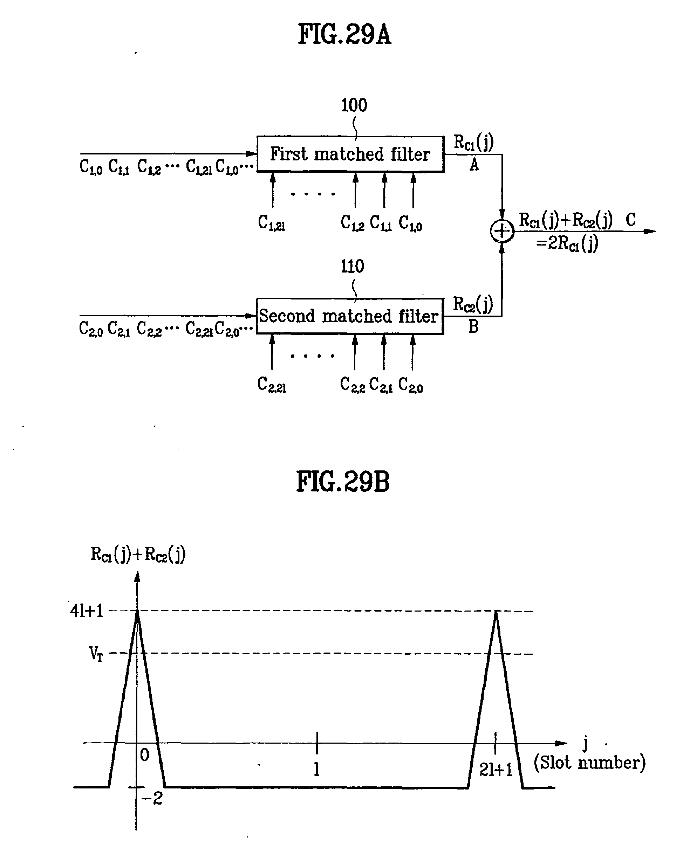

Figures 29A and 29B show an apparatus and correlation result, respectively, for illustrating a frame synchronization method using an optimal pilot pattern;

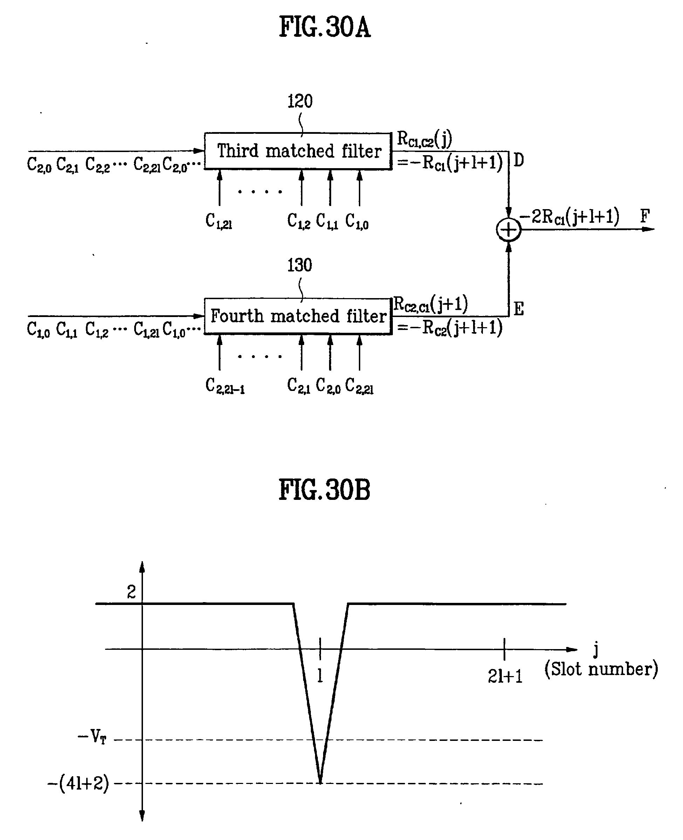

Figures 30A and 30B show an apparatus and correlation result, respectively, for illustrating a frame synchronization method using an optimal pilot pattern ;

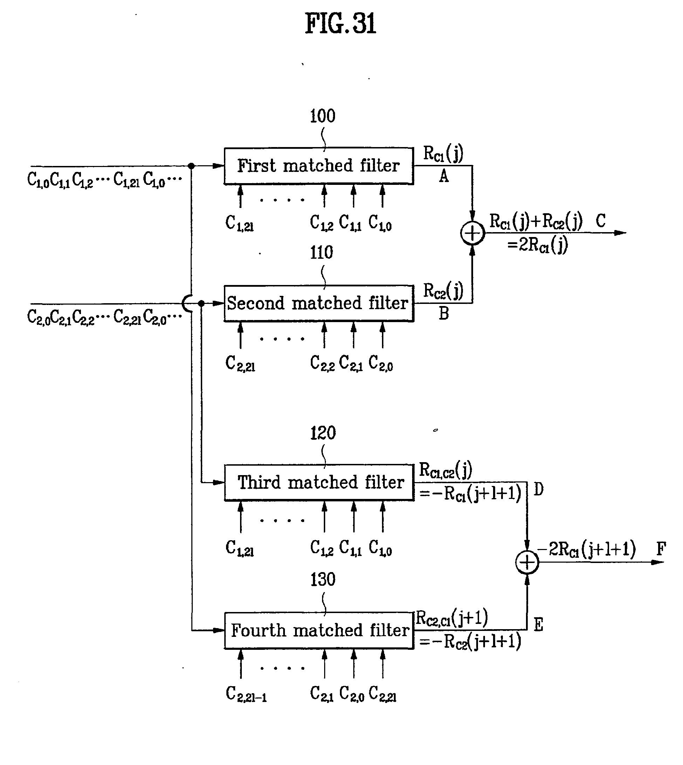

Figure 31 shows an apparatus for illustrating a frame synchronization method using an optimal pilot pattern according to an embodiment of the present invention;

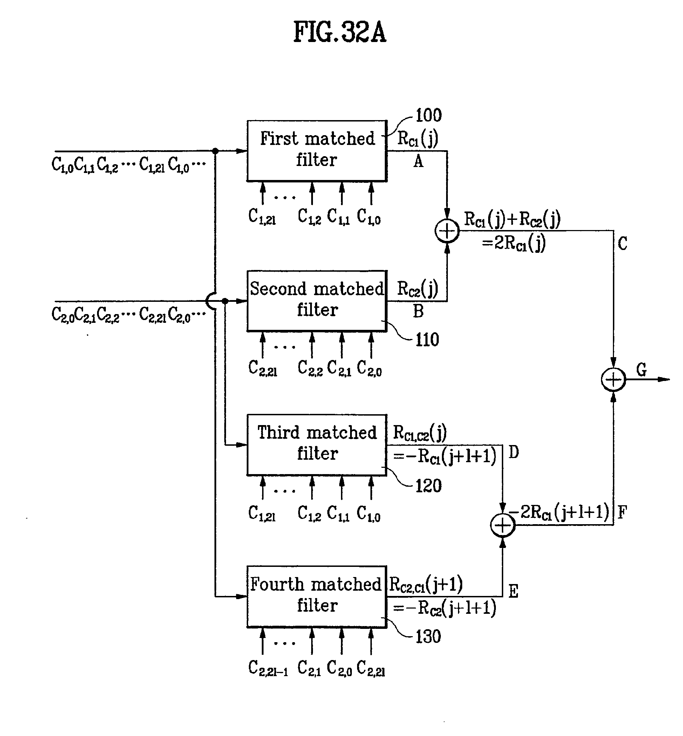

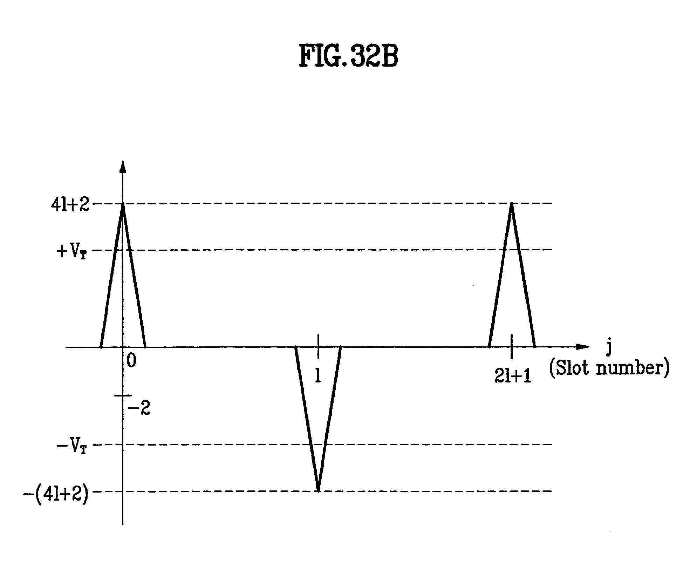

Figures 32A and 32B show an apparatus and correlation result, respectively, for illustrating a frame synchronization method using an optimal pilot pattern according to another embodiment of the present invention;

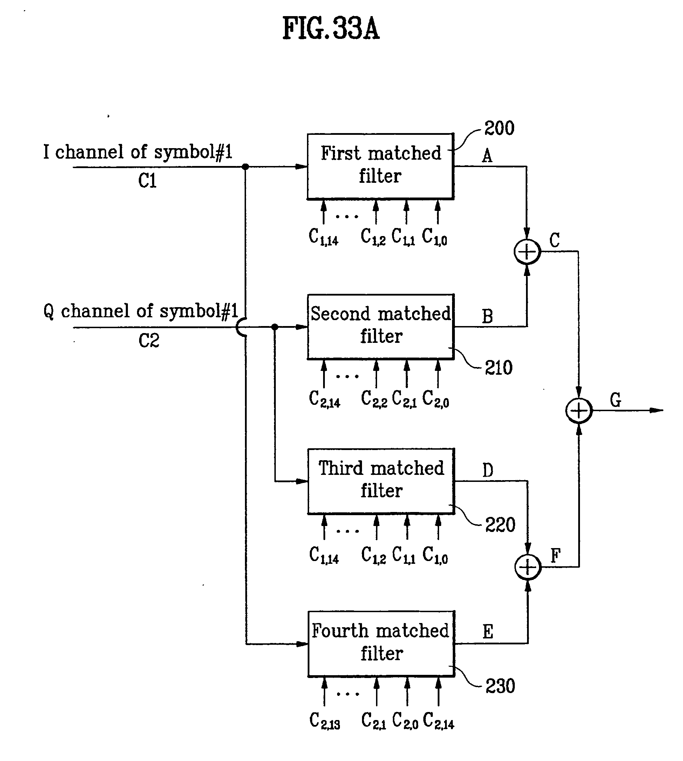

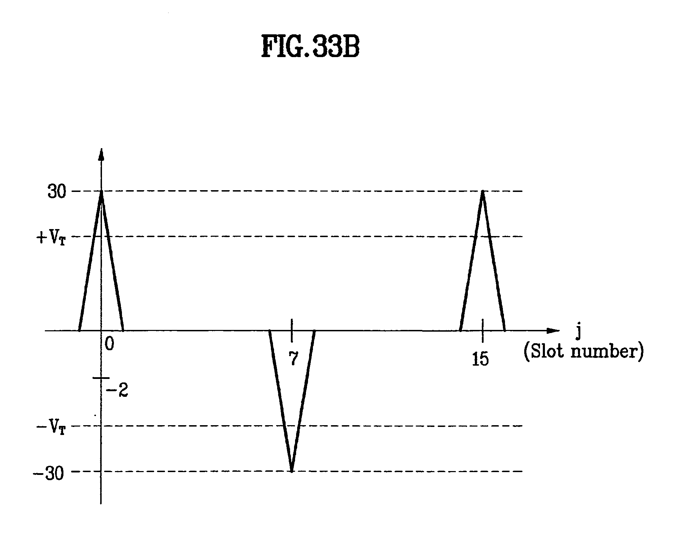

Figures 33A and 33B show an apparatus and correlation result, respectively, for illustrating a frame synchronization method according to an embodiment of the present invention, when the symbol rate is 8Ksps ($N_{pilot}$=4) in the down-link physical channel ;

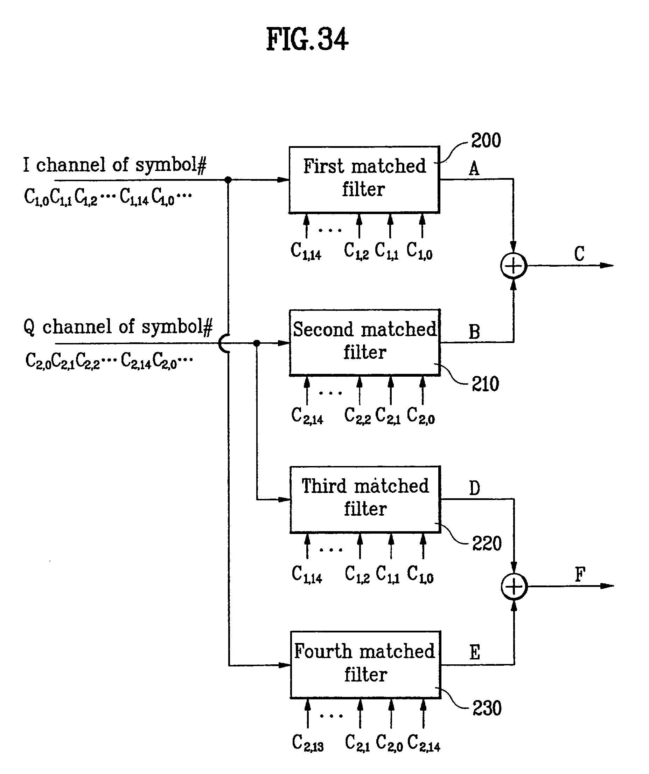

Figure 34 shows an apparatus for illustrating a frame synchronization method according to another embodiment of the present invention, when the symbol rate is 8Ksps ($N_{pilot}$=4) in the down-link physical channel;

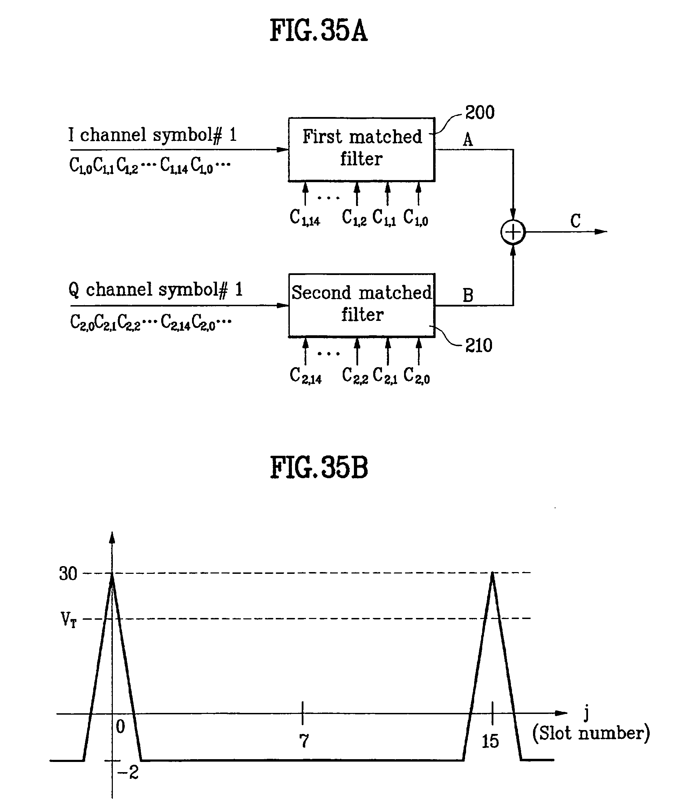

Figures 35A and 35B show an apparatus and correlation result, respectively, for illustrating a frame synchronization method when the symbol rate is 8Ksps ($N_{pilot}$=4) in the down-link physical channel;

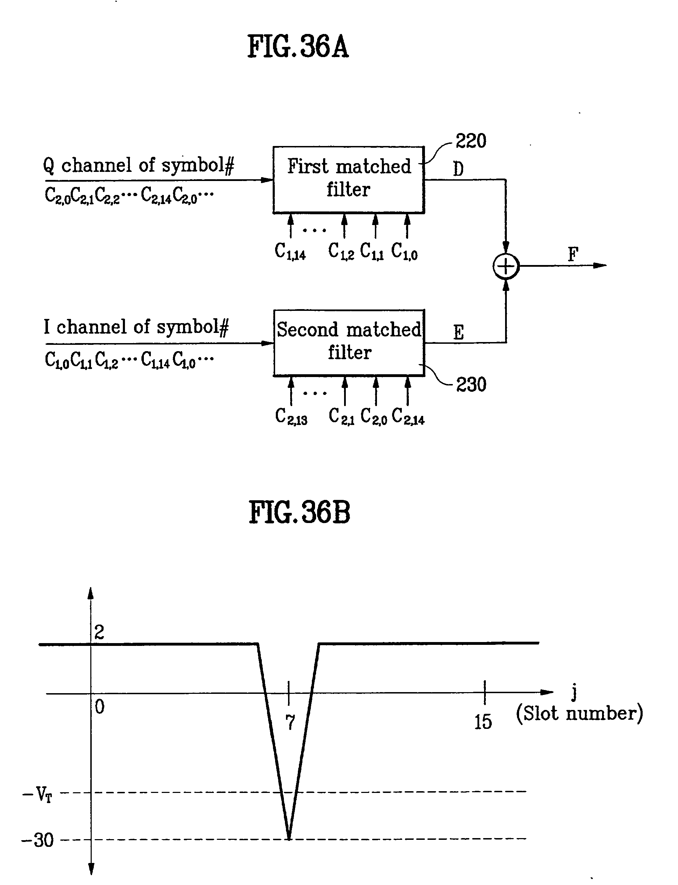

Figures 36A and 36B show an apparatus and correlation result, respectively, for illustrating a frame synchronization method when the symbol rate is 8Ksps ($N_{pilot}$=4) in the down-link physical channel;

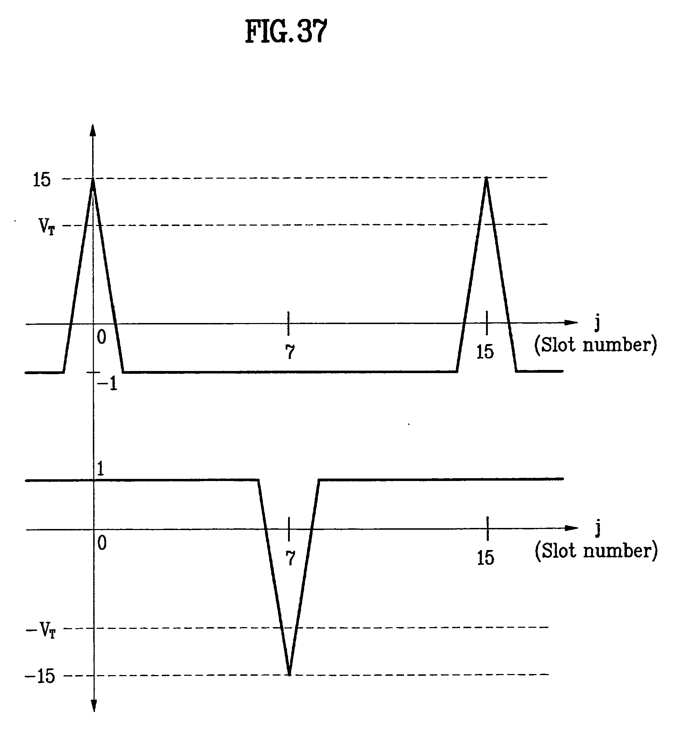

Figure 37 shows the correlation result for illustrating a frame synchronization method according to another embodiment of the present invention, when the symbol rate is 8Ksps ($N_{pilot}$=4) in the down-link physical channel;

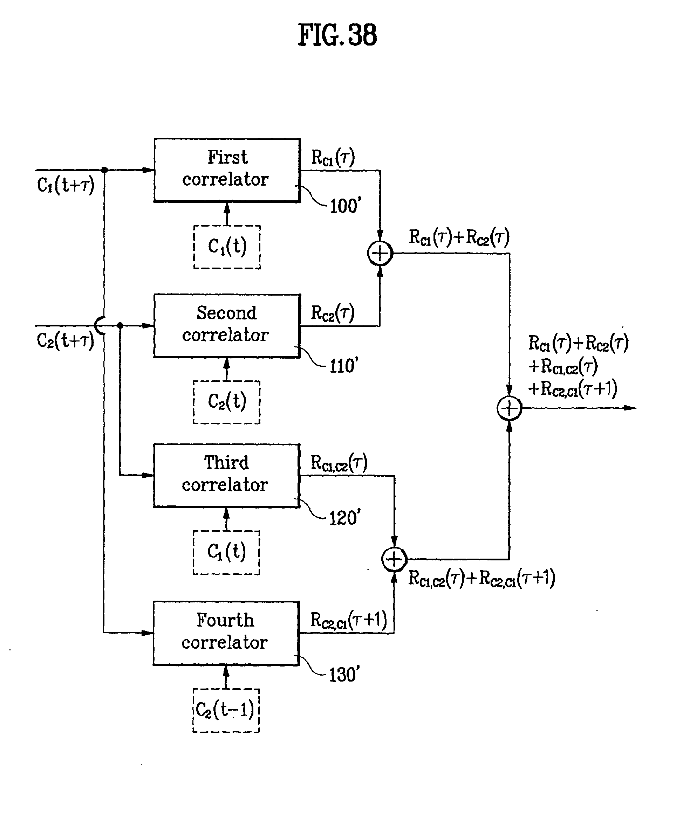

Figure 38 shows the configuration of a general apparatus for illustrating the frame synchronization method using an optimal pilot pattern according to a preferred embodiment of the present invention;

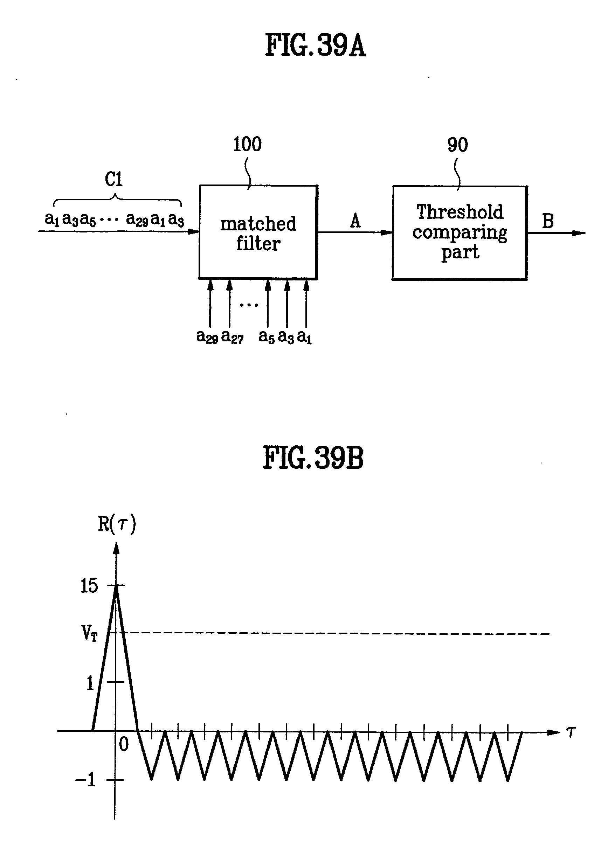

Figures 39A and 39B illustrate another apparatus and correlation results, using a method of confirming a frame synchronization by using correlation results by each slot.

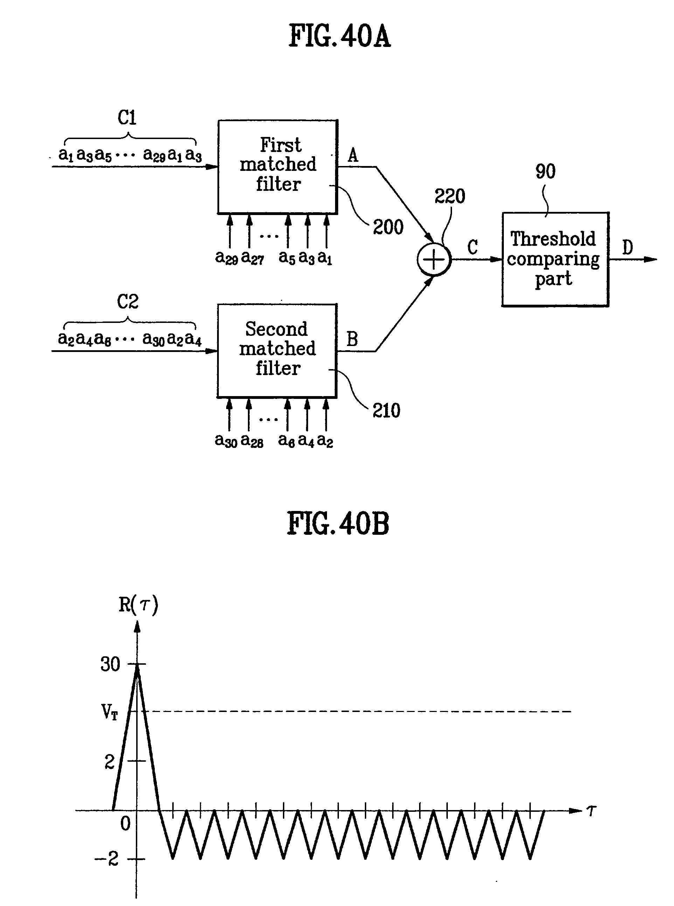

Figures 40A and 40B illustrate another apparatus and correlation results, respectively, using a method of confirming a frame synchronization by using correlation results by each slot; and

Figures 40A and 40B illustrate another apparatus and correlation results, respectively, using a method of confirming a frame synchronization by using correlation results by each slot.

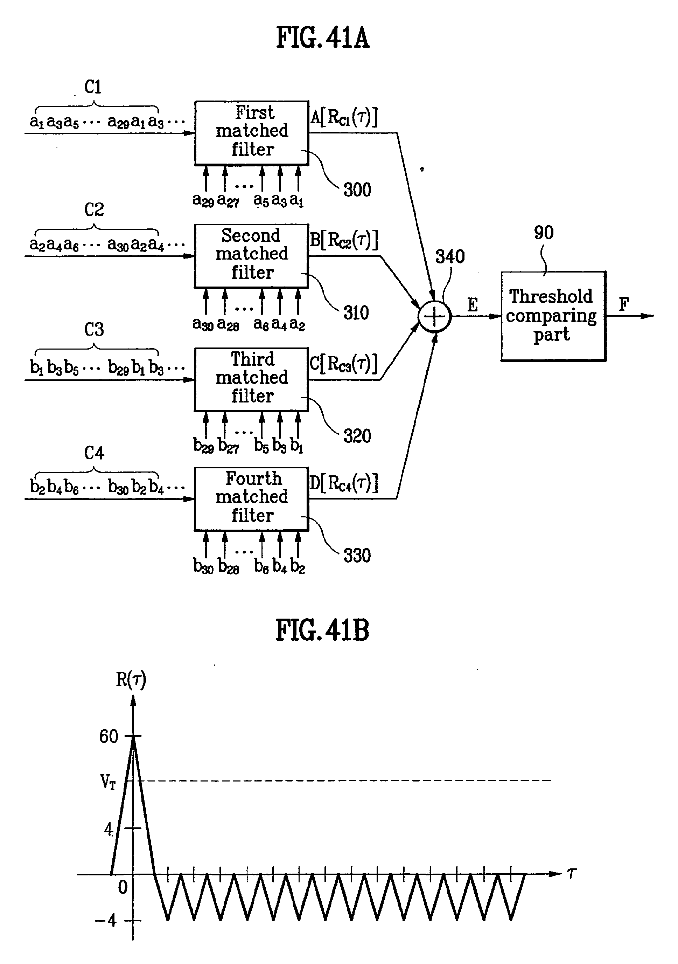

Figures 41A and 41B illustrate an apparatus and correlation results using a frame synchronization confirming method by each slot.

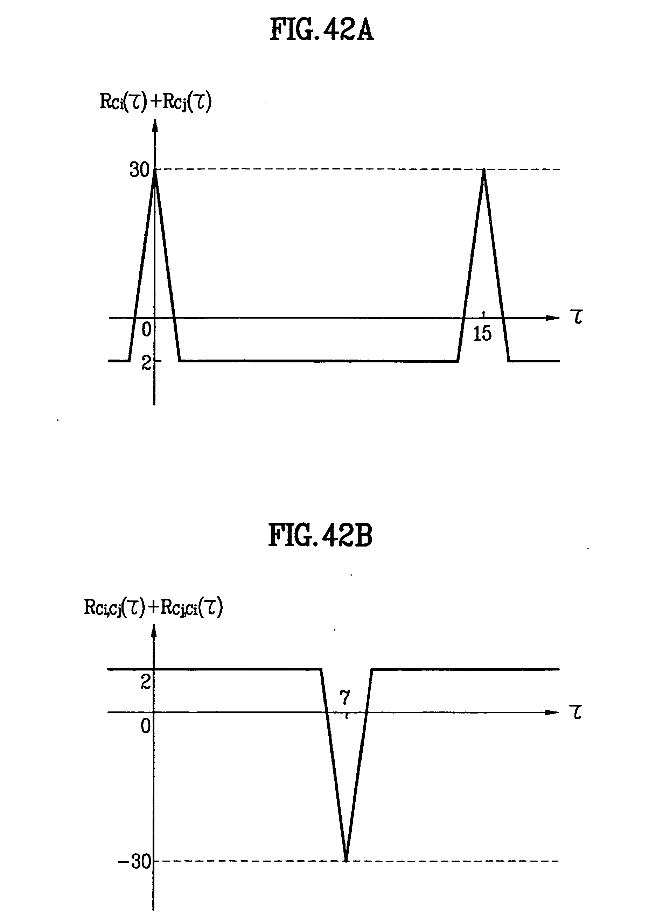

Figures 42A and 42B are graphs illustrating correlation results using a pilot pattern;

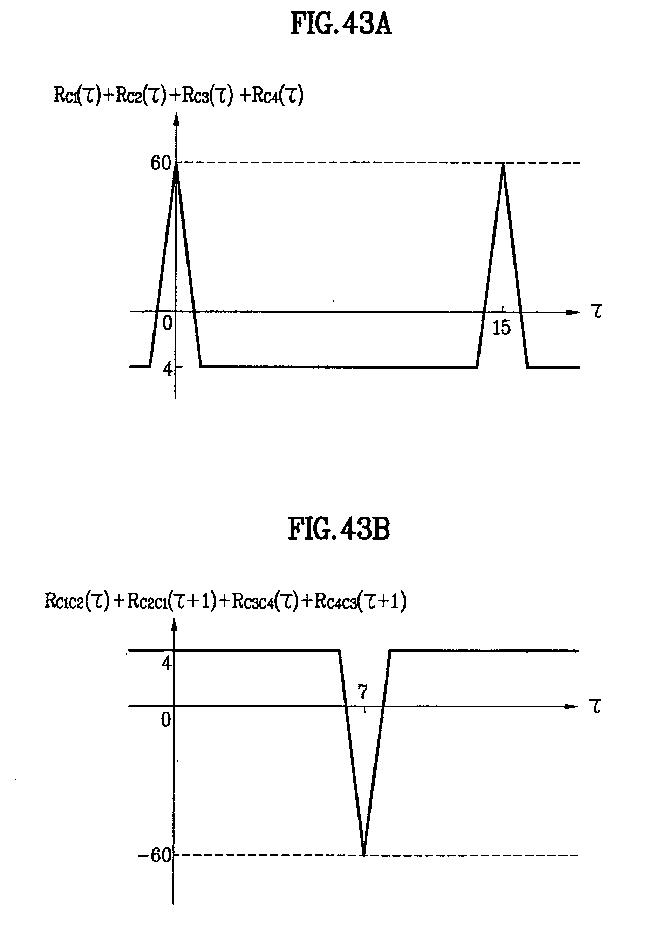

Figures 43A and 43B are graphs illustrating correlation results using a pilot pattern;

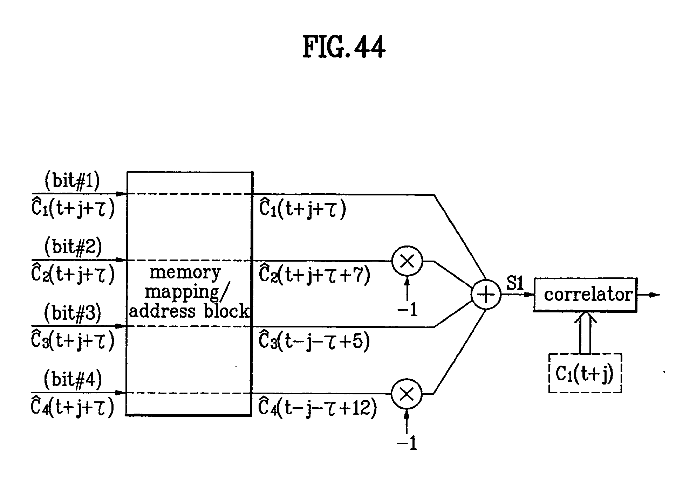

Figure 44 illustrates a correlation processing apparatus for an uplink channel ;

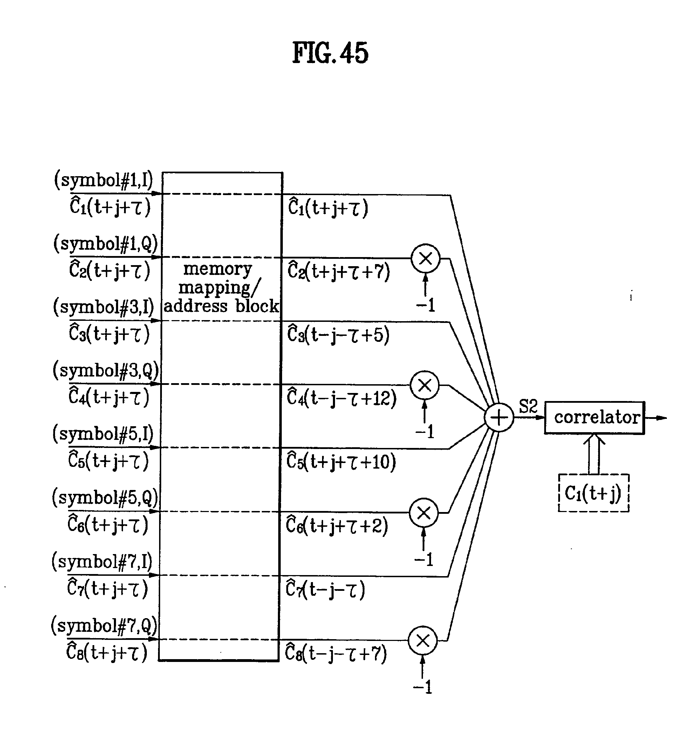

Figure 45 illustrates a correlation processing apparatus for a downlink channel and ;

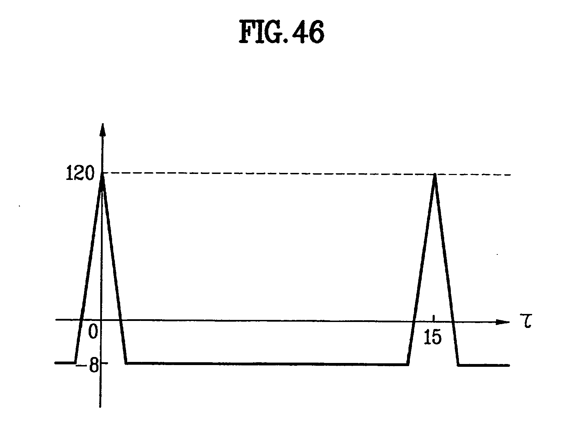

Figure 46 is a graph illustrating the correlation result of the correlation processing apparatus of Figure 45.

## DETAILED DESCRIPTION OF PREFERRED EMBODIMENTS

The new frame synchronization words in accordance with example systems have the lowest out-of-phase values of autocorrelation function with two peak values equal in magnitu de and opposite in polarity at zero and middle shifts. The frame synchronization words are suitable for frame synchronization c onfirmation since by simply adding autocorrelation functions o f such words, double maximum correlation values equal in magni tude and opposite polarity at zero and middle shifts can be ac hieved. This property can be used to double-check frame synchronization timing and reduce the synchronization search time.

The UE establishes downlink chip synchronization and fram e synchronization based on the Primary CCPCH synchronization t iming and the frame offset group, slot offset group notified f rom the network. The frame synchronization can be confirmed us ing the frame synchronization word. The network establishes up link channel chip synchronization and frame synchronization ba sed on the frame offset group and slot offset group. The frame synchronization can also be confirmed using the frame synchro nization word.

When long scrambling code is used on uplink channels or downlink channels, failure in frame synchronization confirmation using frame synchronization words always means losing frame and chip synchronizations since the phase of long scrambling code repeats every frame. Whereas in the case of short scrambling code on uplink DPCCH, failure in frame synchronization confirmation does not always implies losing chip synchronization since the length of short scrambling code is 256 and it corresponds to one symbol period of uplink DPCCH with SF = 256. Thus, the frame synchronization word of pilot pattern can detect synchronization status and this information can be used in RRC Connection Establishment and Release Procedures of Layer 2.

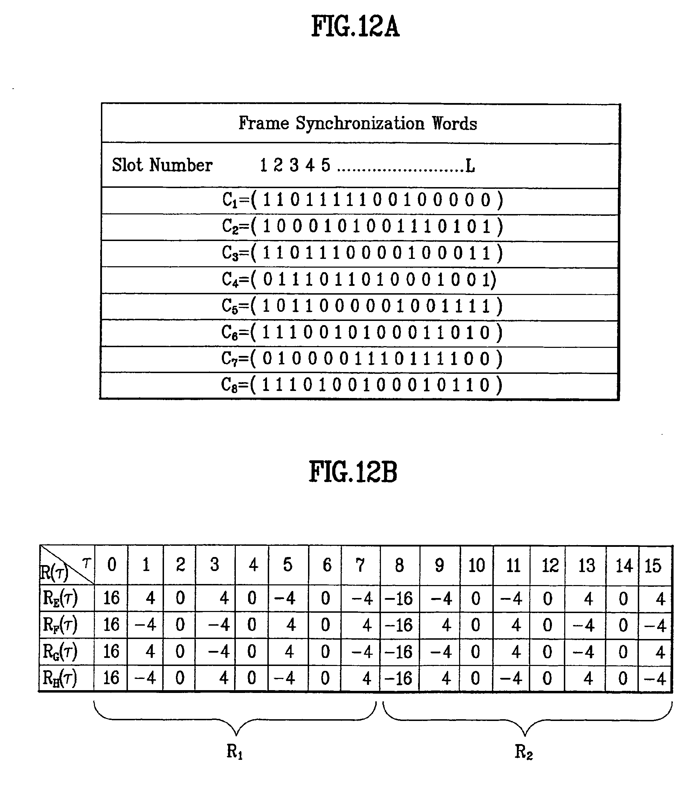

Figure 12A is a table illustrating exemplary frame synchronization words $C_1$ to $C_{i-th}$, where each word comprises L number (L>1) of sequence of pilot bits from a prescribed bit position of the $N_{pilot}$ bits ($N_{pilot}$>0) from each slot of L number of slots. In the preferred first example system described hereinafter, the number of synchronization words i equals 8, the number of slots L =16 and the number of pilot bits $N_{pilot}$ in each slot is between 4 and 16, but the example systems may have different variations of i, L, and $N_{pilot}$.

The synchronization words $C_1$, $C_2$, $C_3$, $C_4$, $C_5$, $C_6$, $C_7$, $C_8$ of the preferred example system can be divided into 4 classes (E, F, G, H), referred to as Preferred Correlation Sequence Pair (PCSP) according to the autocorrelation function of the synchronization words, as follows:

$$E = \{C_1, C_5\}$$

$$F = \{C_2, C_6\}$$

$$G = \{C_3, C_7\}$$

$$H = \{C_4, C_8\}$$

Figure 12B is a table illustrating the autocorrelation function of 1 to 16 sequences of pilot bits of each frame synchronization word classified in classes E, F, G and H within one correlation period from a time shift of 0 to 15. As shown in Figures 12A and 12B, each class contains 2 sequences, and sequences of the same class have the same autocorrelation function. From Figure 12B, the synchronization words have the lowest out-of-phase values of autocorrelation function with two peak values equal in magnitude and opposite in polarity at zero and middle shifts. Moreover, the results $R_1$ and $R_2$ of the autocorrelation function are complements of each other. The following relationships between the autocorrelation functions are expressed in equations (1)-(4):

$$R_E(\tau) = R_F(\tau) = R_G(\tau) = R_H(\tau), \ \tau \text{ is even} \tag{1}$$

$$R_E(\tau) = -R_F(\tau), \ \tau \text{ is odd} \tag{2}$$

$$R_G(\tau) = -R_H(\tau), \ \tau \text{ is odd} \tag{3}$$

$$R_i(\tau) + R_i(\tau + 8) = 0, \ i \in \{E, F, G, H\}, \text{ for all } \tau \tag{4}$$

From equations (1), (2), and (3), the following equation is obtained.

$$R_E(\tau) + R_F(\tau) = R_G(\tau) + R_H(\tau), \text{ for all } \tau \tag{5}$$

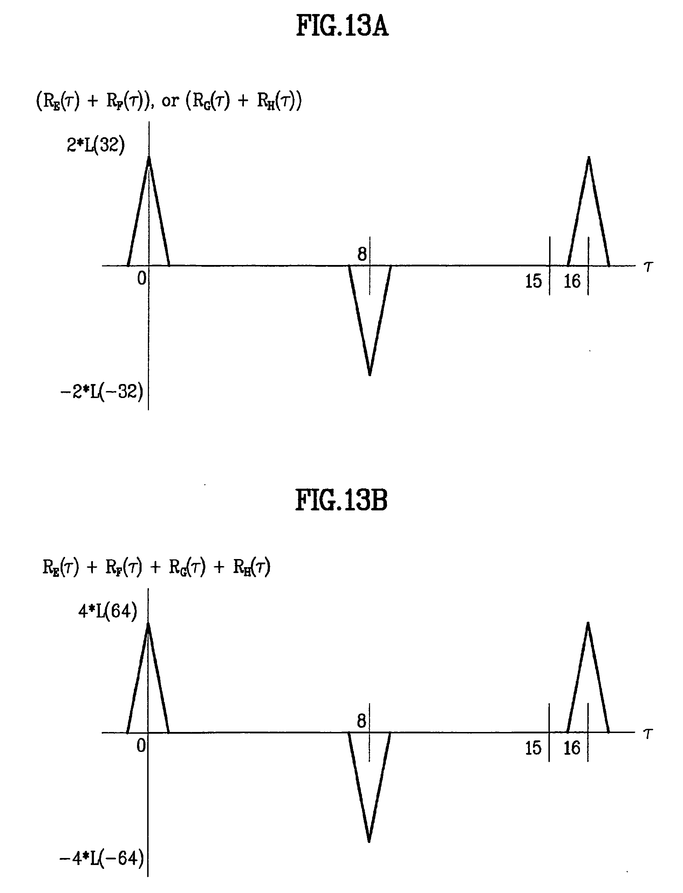

The addition of two autocorrelation functions $R_E(\tau)$ and $R_F(\tau)$, or $R_G(\tau)$ and $R_H(\tau)$ becomes the function with two peak values equal in magnitude and opposite in polarity at zero and middle shifts, and all zero values except the zero and middle shifts, which is depicted in Figure 13A, where the peak values equal 2*L or -2*L. In the preferred example system, the peak values of Figure 13A are 32 and -32, since L=16. The other combinations such as ($R_E(\tau) + R_G(\tau)$), ($R$E ($\tau$) + $R_H(\tau)$), ($R_F(\tau) + R_G(\tau)$), and ($R_F(\tau) + R_H(\tau)$) do not have the same value as in Figure 13A. By using the derived properties of the frame synchronization words, the following property is achieved.

$$\sum_{i=1}^{2\alpha} R_i(\tau) = \alpha \cdot (R_E(\tau) + R_F(\tau)), 1 \le \alpha \le 4 \tag{6}$$

where $R_i(\tau)$ is the autocorrelation function of sequence $C_i$, $1 \le i \le 8$.

The addition of the four autocorrelation functions is illustrated in Figure 13B, which is the same as Figure 13B except that the maximum value is doubled to 4*L or -4*L (the maximum values being 64 and -64 for the preferred example system) since $(R_E(\tau) + R_F(\tau) + R_G(\tau) + R_H(\tau)) = 2 (R_E(\tau) + R_F(\tau))$ by equations (5) and (6). This property allows the double-checking of the frame synchronization timing and the reduction of the synchronization search time.

**First Example for Uplink DPCCH**

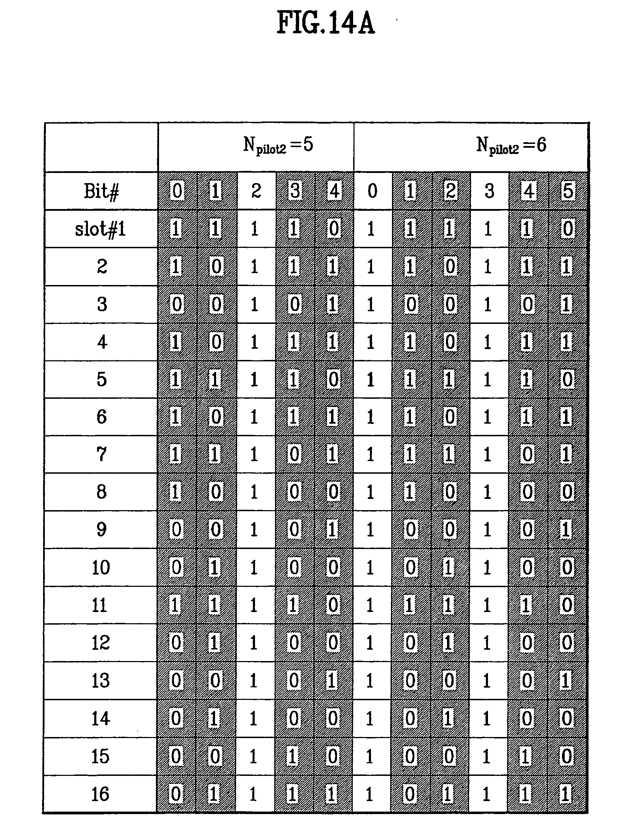

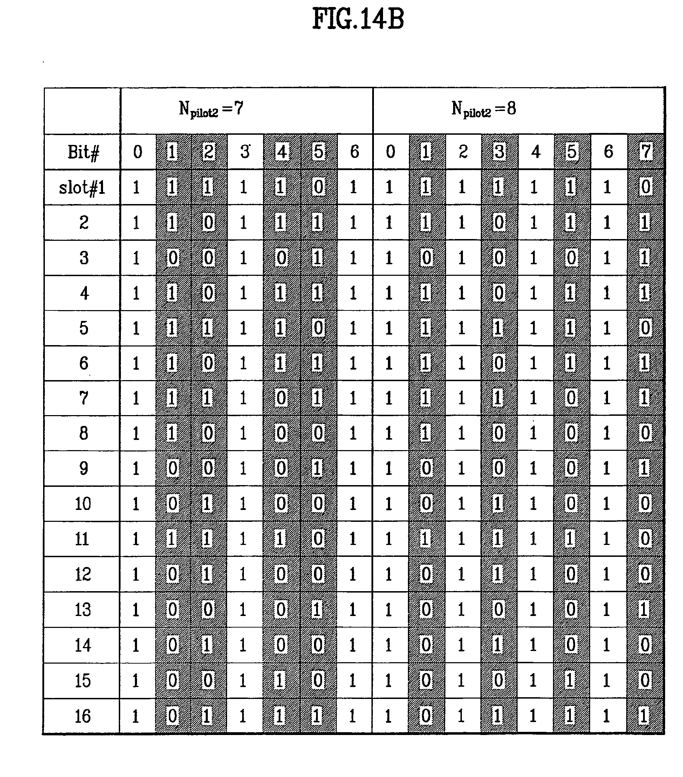

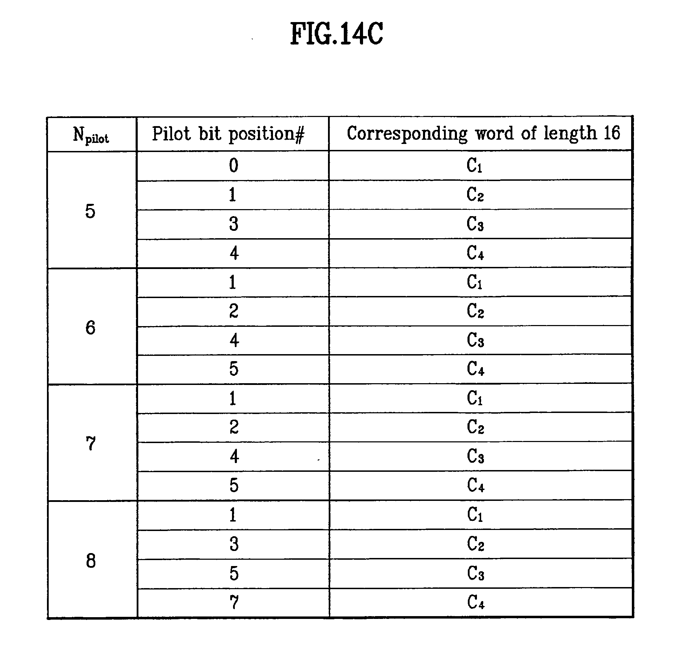

Figures 14A and 14B are tables illustrating the pilot patterns in accordance with a preferred example system for uplink DPCCH with $N_{pilot}$ = 5, 6, 7, and 8. The shaded pattern of Figures 14A and 14B are used for frame synchronization (which can also be used for channel estimation), and the pilot bit other than the frame synchronization words (e.g., channel estimation) has a value of 1. Figure 14C is a table illustrating the mapping relationship between the 8 synchronization words $C_1$-$C_8$ of Figure 12A and shaded pilot bit patterns of Figures 14A and 14B, where frame synchronization words $C_1$, $C_2$, $C_3$, and $C_4$ are the elements of the set {E, F, G, and H}, respectively. The results of Figures 13A and 13B are obtained by $\alpha$ = 1 and 2 in equation (6), respectively, which allows a double-check of the frame synchronization timing and a reduction of the synchronization time on uplink DPCCH with $N_{pilot}$ = 5, 6, 7, and 8.

For example, the frame synchronization words at bit #1 ($C_1$), at bit #2 ($C_2$), at bit #4 ($C_3$) and at bit #5 ($C_4$) are used in the autocorrelation process for the frame synchronization when $N_{pilot}$=6. For $N_{pilot}$=8, the frame synchronization words at bit #1 ($C_1$), at bit #3 ($C_2$), at bit #5 ($C_3$) and at bit #7 ($C_4$) are used in the autocorrelation process for the frame synchronization. For $N_{pilot}$=5, 6, 7, and 8 in each slot, a total of four frame synchronization words are used. As a result, since one radio frame has sixteen timeslots, the number of pilot bits used for the frame synchronization is only 64 per frame in the preferred example system. As can be appreciated, the number of words used for frame synchronization can vary depending on variations of $N_{pilot}$. For example, when $N_{pilot}$=1, one of the frame synchronization words $C_1$-$C_8$ can be used for both frame synchronization and channel estimation due to the novel feature of the preferred example system.

With the implementation of the novel pilot patterns, the values for the number of bits per field are shown below in Table 1and Table 2, with reference to Figure 4. The channel bit and symbol rates given in Table 1 are the rates immediately before spreading.

**Table 1: DPDCH fields**

| Channel Bit Rate (kbps) | Channel Symbol Rate (ksps) | SF | Bits/Frame | Bits/Slot | $N_{data}$ |
|---|---|---|---|---|---|
| 16 | 16 | 256 | 160 | 10 | 10 |
| 32 | 32 | 128 | 320 | 20 | 20 |
| 64 | 64 | 64 | 640 | 40 | 40 |
| 128 | 128 | 32 | 1280 | 80 | 80 |
| 256 | 256 | 16 | 2560 | 160 | 160 |
| 512 | 512 | 8 | 5120 | 320 | 320 |
| 1024 | 1024 | 4 | 10240 | 640 | 640 |

There are two types of Uplink Dedicated Physical Channels; those that include TFCI(e.g. for several simultaneous services) and those that do not include TFCI(e.g. for fixed-rate services). These types are reflected by the duplicated rows of Table 2. The channel bit and symbol rates given in Table 2 are the rates immediately before spreading.

**Table 2: DPCCH fields**

| Channel Bit Rate (kbps) | Channel Symbol Rate (ksps) | SF | Bits/Frame | Bits/Slot | $N_{pilot}$ | $N_{TPC}$ | $N_{TFCI}$ | $N_{FBI}$ |
|---|---|---|---|---|---|---|---|---|
| 16 | 16 | 256 | 160 | 10 | 6 | 2 | 2 | 0 |
| 16 | 16 | 256 | 160 | 10 | 8 | 2 | 0 | 0 |
| 16 | 16 | 256 | 160 | 10 | 5 | 2 | 2 | 1 |
| 16 | 16 | 256 | 160 | 10 | 7 | 2 | 0 | 1 |
| 16 | 16 | 256 | 160 | 10 | 6 | 2 | 0 | 2 |

(continued)

| Channel Bit Rate (kbps) | Channel Symbol Rate (ksps) | SF | Bits/Frame | Bits/Slot | $N_{pilot}$ | $N_{TPC}$ | $N_{TFCI}$ | $N_{FBI}$ |
|---|---|---|---|---|---|---|---|---|
| 16 | 16 | 256 | 160 | 10 | 5 | 1 | 2 | 2 |

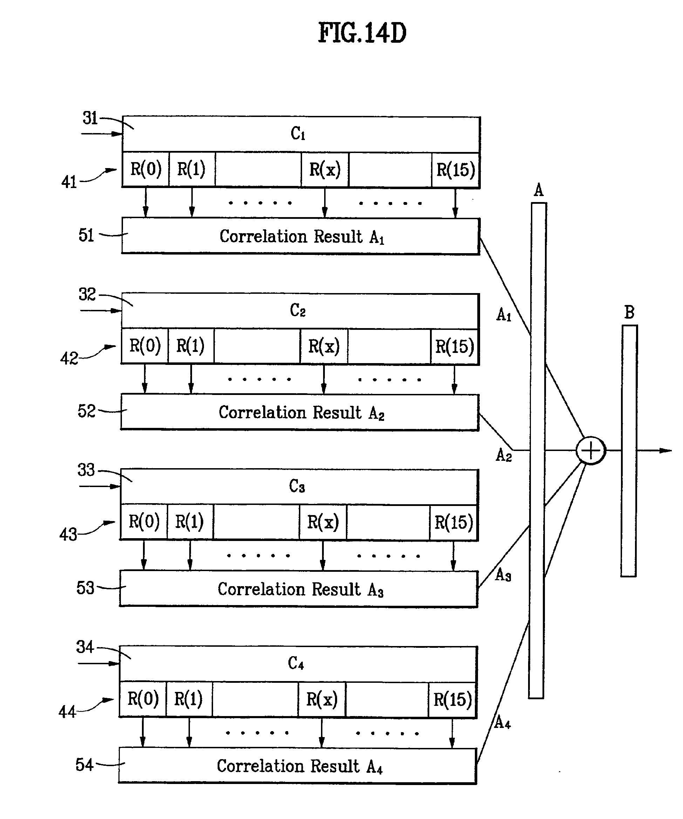

Figure 14D illustrates a correlation circuit for frame synchronization based on pilot bits of the uplink DPCCH in accordance with a preferred example system when frame synchronization words $C_1$-$C_4$ are used. The frame synchronization words $C_1$-$C_4$ are latched in latch circuits 31-34, respectively. The correlators 41-44 perform correlation function $R(x)$, where x=0 to L-1, of the frame synchronization words $C_1$-$C_4$, respectively, to generate the correlation results $A_1$-$A_4$, which are stored in buffers 51-53.

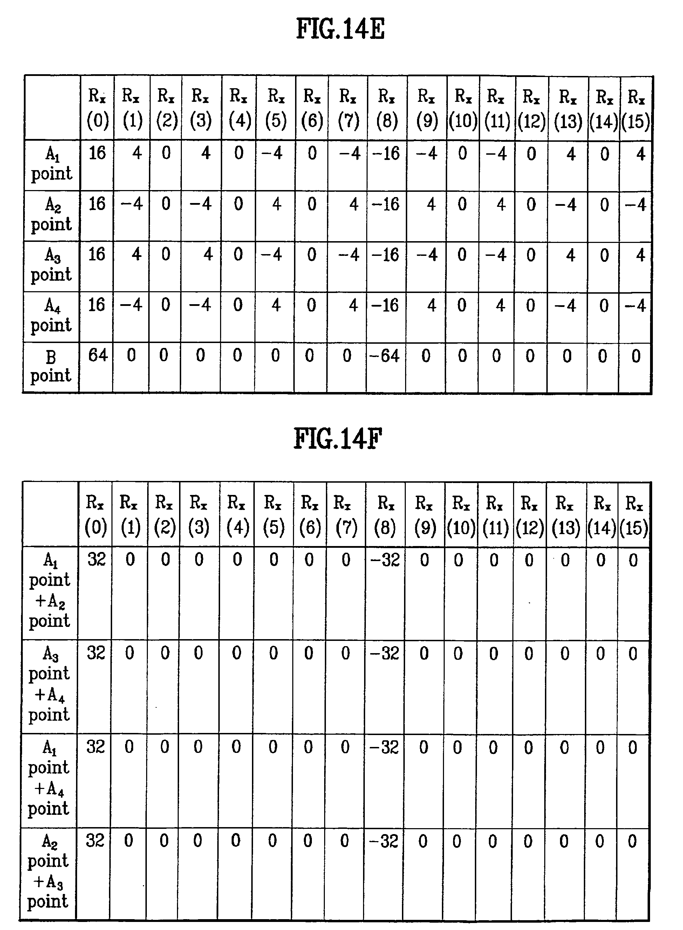

Figure 14E is a table illustrating the correlation results at points $A_1$-$A_4$, and the summing of the correlation results at point B. As shown, the result has maximum values of opposite polarity at zero and middle time shifts $R(0)$ and $R(8)$. Further, the remaining sidelobes at time shifts other than zero and middle have values of zero after the addition at point B. The sidelobes are eliminated or minimized, and the results at point B correspond to the optimal results of Figure 13B.

Figure 14F is a table illustrating various results of the addition of correlation results of points $A_1$-$A_4$ based on the uplink pilot patterns of the frame synchronization words $C_1$-$C_4$ in accordance with the preferred example system. The respective addition of the autocorrelation results of points $(A_1+A_2)$, $(A_3+A_4)$, $(A_1+A_4)$ and $(A_2+A_3)$ exhibit the same characteristics of the optimal results illustrated in Figure 13A.

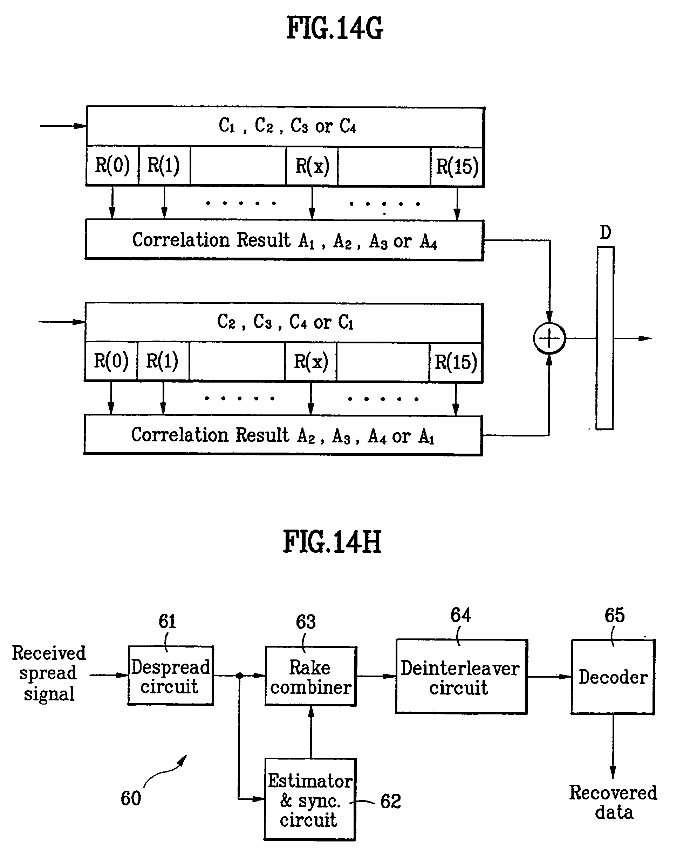

Figure 14G illustrates a correlator circuit for frame synchronization based on pilot bit sequences of an uplink DPCCH in accordance with an alternative example system. The elements are the same as the correlator circuit of Figure 14D. The frame synchronization words of ($C_1$ and $C_2$), ($C_2$ and $C_3$), ($C_3$ and $C_4$), or ($C_4$ and $C_1$) are correlated and summed to provide the results at point D. The summation result at point D of Figure 14G is similar to the correlator circuit of Figure 14D other than the maximum values of opposite polarity being 2*L (32) and -2*L (-32), rather than 4*L (64) and -4*L (-64), respectively, corresponding to the results of Figure 14F and optimal results of Figure 13A.

Figure 14H illustrates the receiver circuit 60 of a base station or a user equipment to recover the received spread signal including the frame synchronization words in the pilot field. After despreading the received spread signal by the despreading circuit 61, the channel estimator and frame synchronizer 62 performs the channel estimation and the frame synchronization based on the pilot field. The Rake combiner 63 uses the results of the channel estimator and frame synchronizer, and after rake combining, the data is deinterleaved by the deinterleaving circuit 64 in the reverse order of the transmitter side. Thereafter, the data is recovered after decoding by a decoder 65.

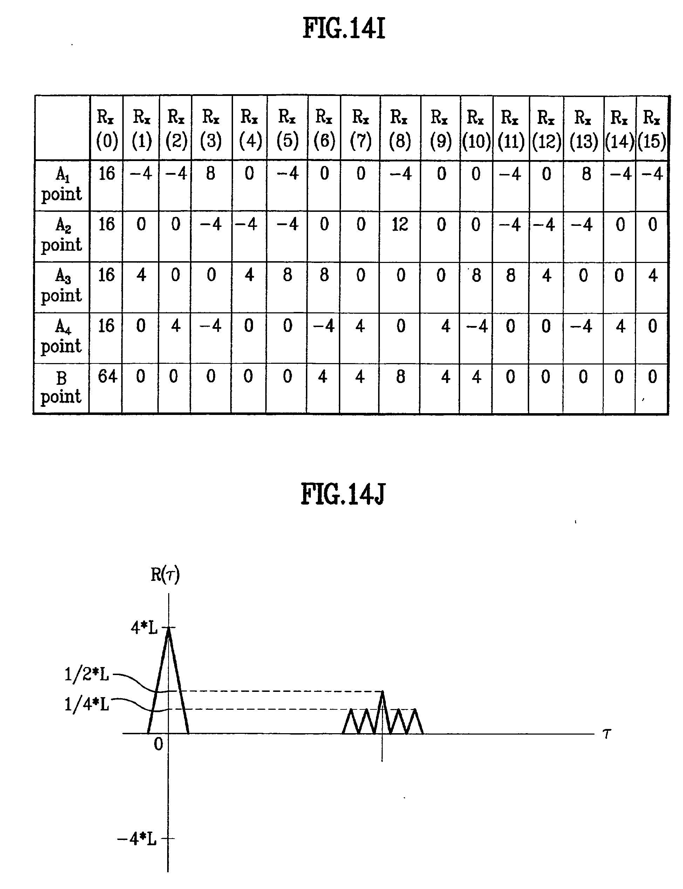

The advantages of the example system can be readily discerned based on comparison of the frame synchronization words previously recommended in TS S1.11 v1.1.0 specification and the frame synchronization words for, e.g., $N_{pilot}$=6. Applying the same principle of equations (1)-(6) and the correlator circuit of Figure 14D, the results in Figure 14I are obtained for the pilot pattern indicated in the technical specification. When the summation result at point B is mapped on a time shift graph, the problem of sidelobes is readily apparent, as shown in Figure 14J. In other words, there is no maximum peak values of opposite polarity at zero and middle time shifts, and sidelobes are present at time shifts other than zero and middle.

As described in the background art, obtaining good cross-correlation and autocorrelation simultaneous is difficult to achieve, where cross-correlation relates to different words at different time shifts and autocorrelation relates to same sequences which are time shifted version. The good cross-correlation and autocorrelation of the example system is based on unique properties of the frame synchronization words.

The unique characteristics of the frame synchronization words in accordance with the preferred example system can be readily discerned in view of Figures 12, 14A and 14B. As shown in frame synchronization words $C_1$-$C_8$ of Figure 12, each word has substantially the same number of 1 and 0. In other words, the number ($b_1$) of pilot bits of a frame synchronization words having a value of 1 minus the number ($b_0$) of pilot bits of the frame synchronization having a value of 0 is equal to zero or close to zero. In the preferred example system, when there are even number of slot numbers, there are the same number of pilot bits having a value of 1 and 0 in a single frame synchronization word such that $b_1$-$b_0$ is zero. As can be appreciated, when there are an odd number of pilot bits in a single frame synchronization word, the result of $b_1$-$b_0$ is plus or minus one, e.g., close to zero.

The second characteristic of the frame synchronization words can be discerned by an examination between a pair of adjacent frame synchronization words (shaded patterns of Figures 14A and 14B for $N_{pilot}$=5, 6, and 7), or between a pair of adjacent frame synchronization word and channel estimation word (shaded and non-shaded patterns of Figures 14A and 14B for $N_{pilot}$=5, 6, 7, and 8). Generally, the number ($b_3$) of bit values which are the same (0, 0 and 1,1) between a pair of adjacent words (i.e., between two adjacent frame synchronization words, or between a frame synchronization word and a channel estimation word, which are adjacent) minus the number ($b_4$) of bit values which are different (1,0 or 0,1) between adjacent words (i.e., between two adjacent frame synchronization words, or between a frame synchronization word and a channel estimation word, which are adjacent) equals zero or a prescribed number close to zero.

In the preferred example system, the number ($b_3$) of pilot bit values which are the same between two adjacent words equals the number ($b_4$) of pilot bit value which are different between the two adjacent words, i.e., $b_3$-$b_4$=0. In the preferred example system, when the $N_{pilot}$=5, between two synchronization words of $C_1$ at bit #0 and $C_2$ at bit #1, there same number of pilot bit values which are the same (0,0 and 1,1) and pilot bit values which are different (1,0 and 0,1) from slot #1 to slot #16, as shown in Figure 14A. Similarly, between a synchronization word $C_2$ at bit #1 and a channel estimation word at bit #2, there same number of pilot bit values which are the same (0,0 and 1,1) and pilot bit values which are different (1,0 and 0,1) from slot #1 to slot #16. The same applies between two adjacent words at bit #2 and bit #3, and between two adjacent words at bit #3 and bit #4. The above also applies to adjacent words of $N_{pilot}$=6, 7 and 8. As can be appreciated, when an odd number of slots are used, the result of $b_3$-$b_4$ equals plus or minus one, e.g., close to zero.

As a result of such a characteristic, cross-correlation between two adjacent words used for frame synchronization is zero (orthogonal) at zero time shift. Further, the cross-correlation between a word used for frame synchronization and the sequence used for channel estimation is zero (orthogonal) at all time shifts. In other word, within $N_{pilot}$ number of words of L-bits, there are an even number of words used for frame synchronization, but all words perform channel estimation, wherein between adjacent words used for frame synchronization, there is substantially zero cross-correlation. Moreover, the words used for frame synchronization has substantially zero cross-correlation with words not used for frame synchronization, i.e., channel estimation, at any time shifts.

Further, each $N_{pilot}$ words corresponds to a prescribed number by an autocorrelation function such that when a pair from a set of autocorrelated results corresponding to words used for frame synchronization is combined, two peak values equal in magnitude and opposite in polarity are achieved at zero and middle time shift while sidelobes are substantially eliminated at time shifts other than zero and middle. Autocorrelation in accordance with the example system can' be generally defined as a correlation between a word and its time shifted replica (including replica at zero time shift), where correlation is the number of bit values which are the same between two words minus the number of bit values which are different between the same two words. Further, as shown in Figure 12B, $R_1$ and $R_2$ are complements of each other.

**First Example for Downlink DPCH**

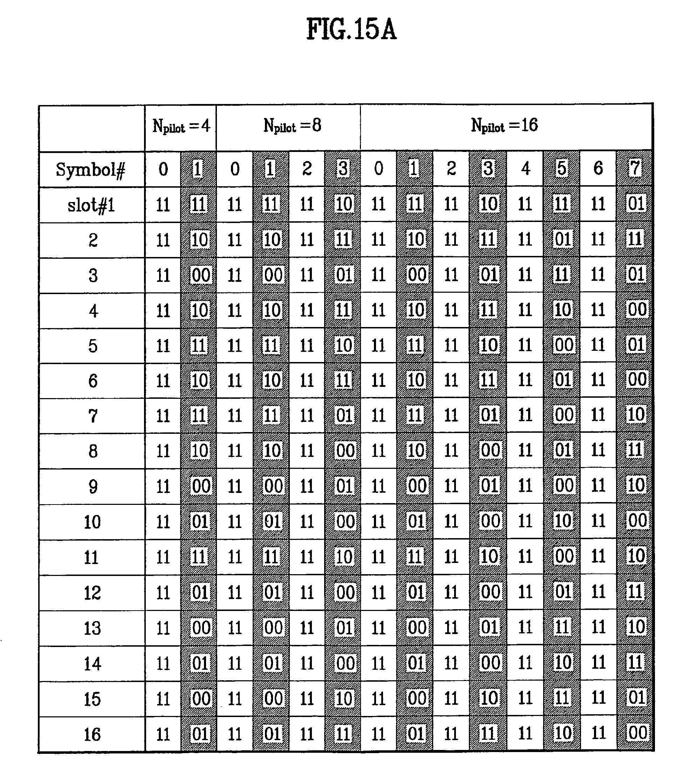

Figure 15A illustrates the pilot symbol patterns for downlink DPCH for $N_{pilot}$=4, 8 and 16, where two pilot bits form a symbol since the left bit is used for the I channel branch and the right bit is used for the Q channel branch. In the preferred example system, $N_{pilot}$=4 can be used for 8 ksps (kilo symbols per second); $N_{pilot}$=8 can be used for 16, 32, 64, and 128 ksps; and $N_{pilot}$=16 can be used for 256, 512, and 1024 ksps. The shaded symbols of Figure 15A can be used for frame synchronization, and the value of pilot symbol other than for frame synchronization word, e.g., channel estimation (channel estimation word), is 11. The results of Figure 15A is obtained by allowing $\alpha = 1$ for $N_{pilot}$=4, $\alpha = 2$ for $N_{pilot}$=8, and $\alpha = 4$ for $N_{pilot}$=16 in equation (6) for downlink DPCH.

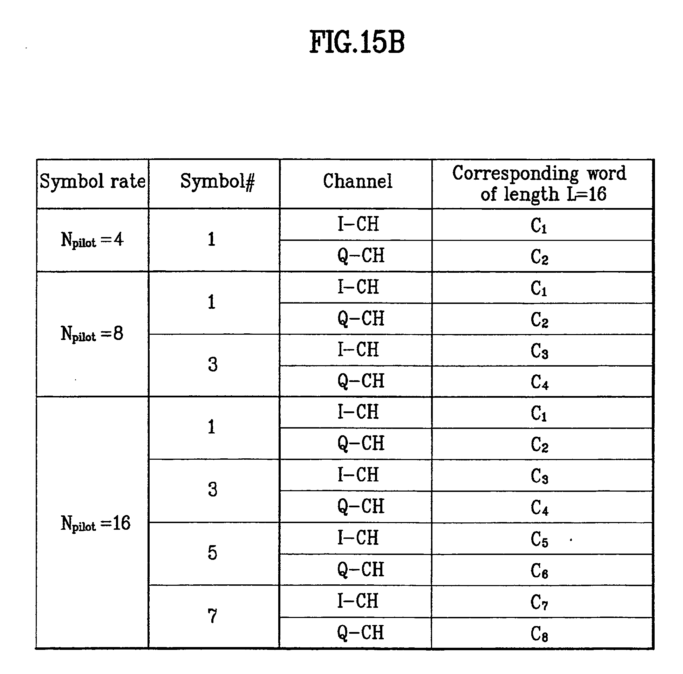

Figure 15B illustrates the mapping relationship between the 8 frame synchronization words of Figure 12A, and shaded pilot symbol pattern of Figure 15A. For example, in the preferred example system of $N_{pilot}$=4, the symbol #1 includes two frame synchronization words of $C_1$ (for the I channel branch I-CH, i.e., left sequence of bits from slot #1 to slot #16) and $C_2$ (for the Q channel branch Q-CH, i.e., right sequence of bits from slot #1 to slot #16). For $N_{pilot}$=8 and $N_{pilot}$=16, the correspondence of words to channels for corresponding symbols is self-explanatory in Figure 15B. Similar to the uplink DPCCH, slot-by-slot double-check of the frame synchronization timing and a reduction of the frame synchronization search time can be achieved by using the autocorrelation property of the pilot symbol pattern based on equation (6).

Because the frame synchronization words of the downlink DPCH is based on frame synchronization words of Figure 12A, the characteristics described for uplink DPCCH is applicable to downlink DPCH. For example, the number ($b_3$) of bit values which are the same (0,0 and 1,1) between adjacent words (i.e., between synchronization word of I channel branch and synchronization word of Q channel branch of a frame synchronization symbol, or between a channel estimation word of the Q channel branch and a frame synchronization word of the I channel branch, which are adjacent, or between a frame synchronization word of the Q channel branch and a channel estimation word of the I channel branch, which are adjacent) minus the number ($b_4$) of bit values which are different (1,0 and 0,1) between adjacent words (i.e., between synchronization word of I channel branch and synchronization word of Q channel branch of a frame synchronization symbol, or between a channel estimation word of the Q channel branch and a frame synchronization word of the I channel branch, which are adjacent, or between a frame synchronization word of the Q channel branch and a channel estimation word of the I channel branch, which are adjacent) equals zero or a prescribed number close to zero.

For example, for $N_{pilot}$=8, between the symbols #0 and #1, the number of a pair of adjacent bits, i.e., one bit from the Q channel branch of the symbol #0 and one bit from the I channel branch of the symbol #1, having bit values of 1,1 and 0,0 is the same as the number of adjacent bits having bit values of 1,0 and 0,1. In other words, $b_3-b_4=0$. As can be appreciated, if the number of slots L is an odd number, the result of $b_3-b_4$ is plus or minus one, e.g., a prescribed number close to zero.

With the implementation of the novel pilot symbols, the below Table 3 shows the number of bits per slot of the various fields with reference to Figure 8. There are basically two types of downlink Dedicated Physical Channel; those that include TFCI (e.g. for several simultaneous services) and those that do not include TFCI(e.g. for fixed-rate services). These types are reflected by the duplicated rows of Table 3. The channel bit and symbol rates given in Table 3 are the rates immediately before spreading. If there is no TFCI, then the TFCI field is left blank (*).

**Table 3: DPDCH and DPCCH fields**

| Channel Bit Rate (kbps) | Channel Symbol Rate (ksps) | SF | Bits/Frame | | | Bits/ Slot | DPDCH Bits/Slot | | DPCCH Bits/Slot | | |
|---|---|---|---|---|---|---|---|---|---|---|---|
| | | | DPDCH | DPCCH | TOT | | $N_{Data1}$ | $N_{Data2}$ | $N_{TFC}$ | $N_{TPC}$ | $N_{Pil}$ |
| 16 | 8 | 512 | 64 | 96 | 160 | 10 | 2 | 2 | 0 | 2 | 4 |
| 16 | 8 | 512 | 32 | 128 | 160 | 10 | 0 | 2 | 2 | 2 | 4 |
| 32 | 16 | 256 | 160 | 160 | 320 | 20 | 2 | 8 | 0 | 2 | 8 |
| 32 | 16 | 256 | 128 | 192 | 320 | 20 | 0 | 8 | 2 | 2 | 8 |
| 64 | 32 | 128 | 480 | 160 | 640 | 40 | 6 | 24 | 0 | 2 | 8 |
| 64 | 32 | 128 | 448 | 192 | 640 | 40 | 4 | 24 | 2 | 2 | 8 |
| 128 | 64 | 64 | 960 | 320 | 1280 | 80 | 4 | 56 | 8* | 4 | 8 |
| 256 | 128 | 32 | 2240 | 320 | 2560 | 160 | 20 | 120 | 8* | 4 | 8 |
| 512 | 256 | 16 | 4608 | 512 | 5120 | 320 | 48 | 240 | 8* | 8 | 16 |
| 1024 | 512 | 8 | 9728 | 512 | 10240 | 640 | 112 | 496 | 8* | 8 | 16 |
| 2048 | 1024 | 4 | 19968 | 512 | 20480 | 1280 | 240 | 1008 | 8* | 8 | 16 |

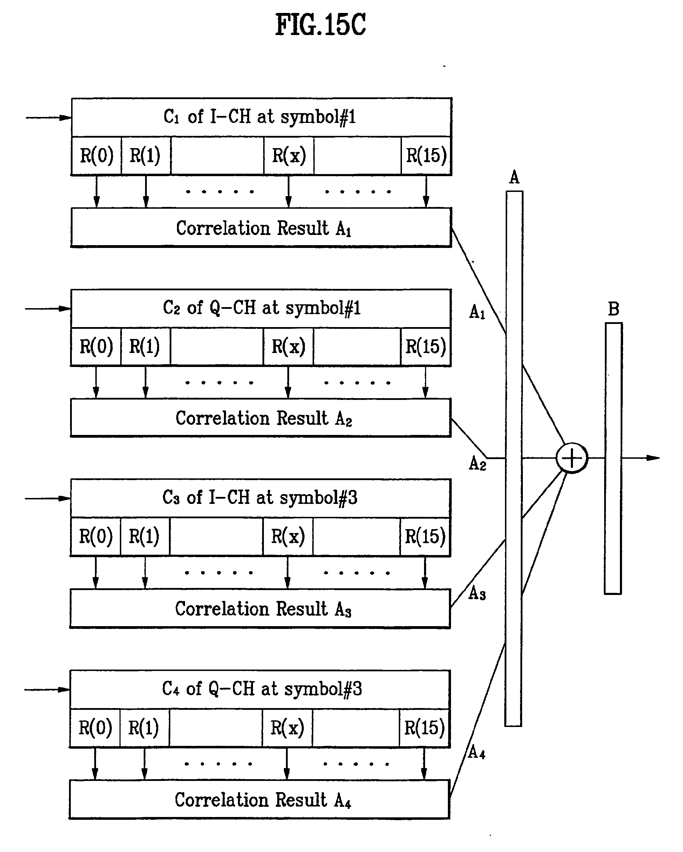

Figure 15C illustrates a correlation circuit for frame synchronization for downlink DPCCH of $N_{pilot}=8$ in accordance with the preferred example system. The operation and components are the same as the correlation circuit of Figure 14D for uplink DPCCH, except for the reception of I channel branch and Q channel branch synchronization words. The results of points $A_1$-$A_4$ and point B is the same as Figure 14E. Similarly, the sidelobes are eliminated or minimized, and the results correspond to the optimal results of Figure 13B. Because the number of pilot symbols (or pilot bits) used for the frame synchronization is 2 symbols per slot (or 4 bit per slot), 32 pilot symbols (or 64 pilot bits) are used in each radio frame for the frame synchronization.

For $N_{pilot}=4$ in the downlink DPCCH, the correlator circuit of Figure 14G can be used. In such a case, the I and Q channel frame synchronization words are inputted to the correlator circuit. The summation result would be the same as Figure 14F, which corresponds to the optimal results of Figure 13A. In this case, the number of pilot symbols (or pilot bits) used for the frame synchronization is 1 symbol per slot (or 2 bits per slot), and 16 symbols (or 32 pilot bits) are used in each radio frame for the frame synchronization.

As per $N_{pilot}=16$ in the downlink DPCCH, the correlation circuit of Figure 15C can be expanded to accommodate the additional frame synchronization words of the I and Q channel branches of pilot symbol #5 and symbol #7. The summation result would be similar to the optimal results of Figure 13B, but the maximum peak values of opposite polarity would be 128 (8*L) and -128 (-8*L). Further, the number of pilot symbols (or pilot bits) used for the frame synchronization is 4 symbols per slot (or 8 bits per slot), and 64 pilot symbols (or 128 pilot bits) are used in each radio frame for the frame synchronization.

**First Example of Downlink PCCPCH and SCCPCH :**

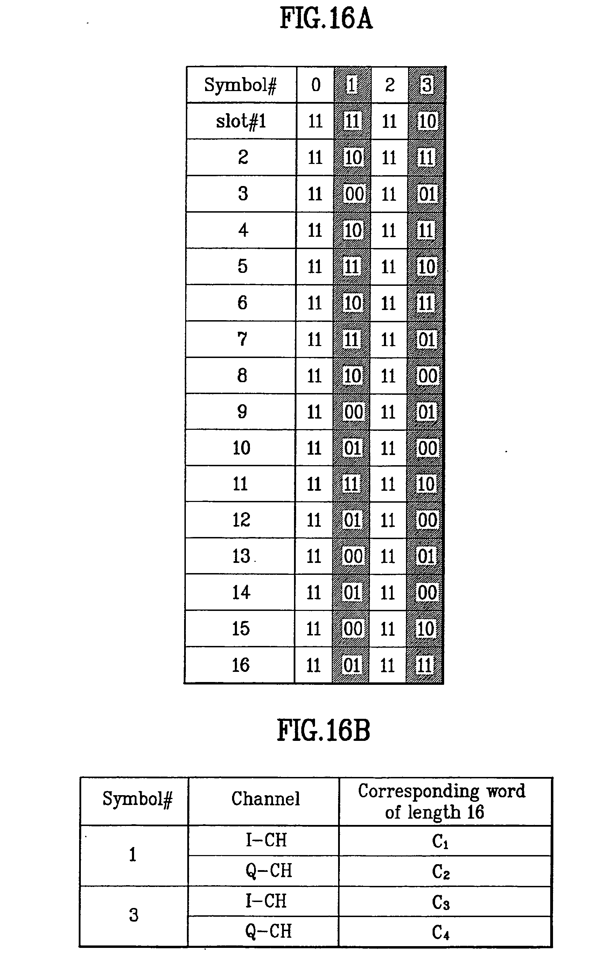

Figure 16A illustrates pilot symbol pattern of PCCPCH. The shaded symbols can be used for frame synchronization, and the value of pilot symbol other than for frame synchronization is 11. Figure 16B illustrates the mapping relationship between the synchronization words $C_1$-$C_8$ of Figure 12A, and the shaded pilot symbol patterns of Figure 16A. A double-check frame of the synchronization timing and the reduction of the synchronization search time can be achieved with $\alpha$ = 1 or 2 in equation (6).

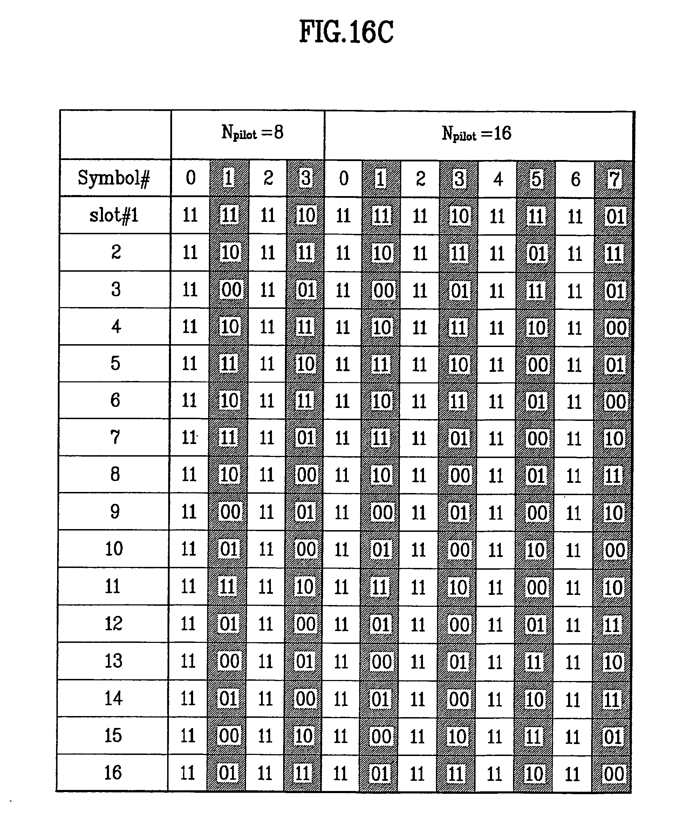

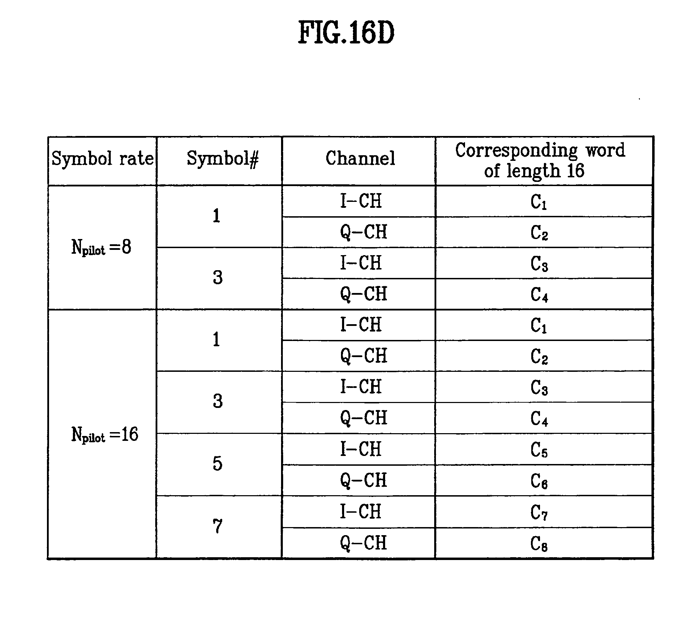

Figure 16C illustrates pilot symbol pattern of SCCPCH. The shaded symbols can be used for frame synchronization, and the value of pilot symbol other than for frame synchronization is 11. Figure 16D illustrates the mapping relationship between the synchronization words $C_1$-$C_8$ of Figure 12A, and the shaded pilot symbol patterns of Figure 16C.

As shown above, the frame synchronization words of PCCPCH and SCCPCH is based on the frame synchronization words $C_1$-$C_8$, and the disclosure for the uplink DPCCH and the downlink DPCH is applicable. Hence, a detailed description regarding the various characteristics including cross-correlation and autocorrelation, operations and implements are omitted since one of ordinary skill in the art can readily appreciate the example system based on the uplink DPCCH and downlink DPCH.

As described above, the non-shaded symbols are the pilot symbols not used for frame synchr onization comprises symbols of 11, and the shaded symbols are used for frame synchronization. The frame synchronization word s of the pilot pattern are used for frame synchronization conf irmation, and the summation of autocorrelated values for each frame synchronization words is required. The property of summation of autocorrelated values of frame synchronization words is very important.

With the implementation of the novel pilot symbols, the values for the number of bits per field are given in Table 4 with reference to Figure 11B. The channel bit and symbol rates given in Table 4 are the rates immediately before spreading.

**Table 4: Secondary CCPCH fields**

| Channel Bit Rate (kbps) | Channel Symbol Rate (ksps) | SF | Bits/Frame | Bits/Slo t | $N_{data}$ | $N_{pilot}$ | $N_{TFCI}$ |
|---|---|---|---|---|---|---|---|
| 32 | 16 | 256 | 320 | 20 | 12 | 8 | 0 |
| 32 | 16 | 256 | 320 | 20 | 10 | 8 | 2 |
| 64 | 32 | 128 | 640 | 40 | 32 | 8 | 0 |
| 64 | 32 | 128 | 640 | 40 | 30 | 8 | 2 |
| 128 | 64 | 64 | 1280 | 80 | 72 | 8 | 0 |
| 128 | 64 | 64 | 1280 | 80 | 64 | 8 | 8 |
| 256 | 128 | 32 | 2560 | 160 | 152 | 8 | 0 |
| 256 | 128 | 32 | 2560 | 160 | 144 | 8 | 8 |
| 512 | 256 | 16 | 5120 | 320 | 304 | 16 | 0 |
| 512 | 256 | 16 | 5120 | 320 | 296 | 16 | 8 |
| 1024 | 512 | 8 | 10240 | 640 | 624 | 16 | 0 |
| 1024 | 512 | 8 | 10240 | 640 | 616 | 16 | 8 |
| 2048 | 1024 | 4 | 20480 | 1280 | 1264 | 16 | 0 |
| 2048 | 1024 | 4 | 20480 | 1280 | 1256 | 16 | 8 |

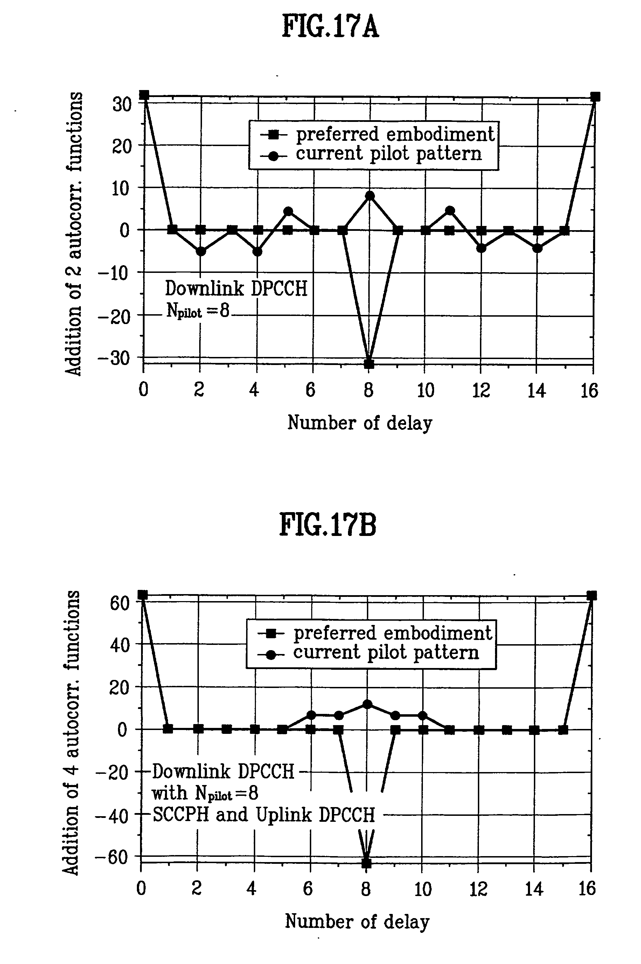

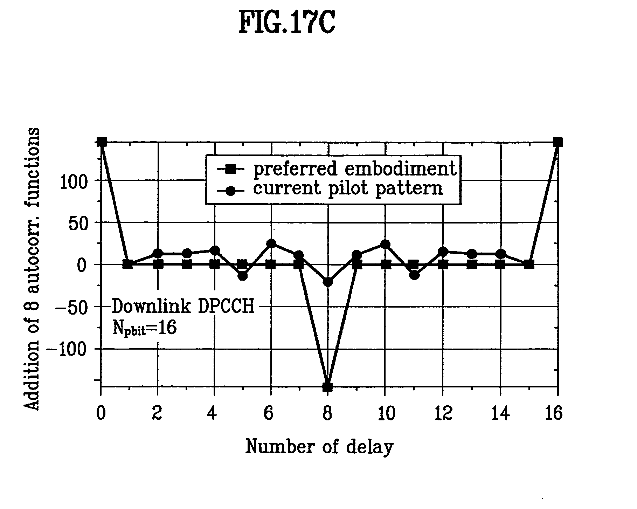

The addition of autocorrelation functions of frame synchr onization word of the preferred example system and current pilot p atterns (described in TS S1.11 v1.1.0 specification) for DPCHs and PCCPCH are depicted in Figures 17A ($N_{pilot}$=4), Figure 17B ($N_{pilot}$=8) and Figure 17C ($N_{pilot}$=16). As shown, the current pilot patterns have non-zero out-of-phase autocorrelation function with peak value at zero shift, whereas the frame synchronization words of the preferred example system have zero out-of-phase autocorrelation function with two peak values equal in magnitude and opposite in polarity at zero and middle time shifts (delays).

Correlation to a prescribed frame synchronization word is optimum method for frame synchronization. Since the frame synchronization word of pilot pattern is used for frame synchronization confirmation, the following events and parameters are used to evaluate the performance of frame synchronization confirmation using the frame synchronization words of the preferred example system and the current pilot patterns:

$H_1$ : The event that the correlator output exceeds the predetermined threshold when the code phase offset between the received shadowed column frame synchronization word and its corresponding receiver stored frame synchro-

nization word is zero.

$H_2$ : The event that the correlator output exceeds the predetermined threshold when the code phase offset between the received shadowed column frame synchronization word and its corresponding receiver stored frame synchronization word is not zero.

$H_3$ : One event of $H_1$ and no event of $H_2$ for one frame.

$H_4$ : The event that the correlator output exceeds the predetermined threshold or is smaller than -1x(predetermined threshold) when the code phase offset between the received shadowed column frame synchronization word and its corresponding receiver stored frame synchronization word is 0 or 8, respectively.

$H_5$ : The event that the correlator output exceeds the predetermined threshold or is smaller than $-1\times$(predetermined threshold) when the code phase offset between the received shadowed column frame synchronization word and its corresponding receiver stored frame synchronization word is not 0 and 8.

$H_6$ : One event of $H_4$ and no event of $H_5$ for one frame.

$P_D$ : Probability of a detection.

$P_{FA}$ : Probability of a false alarm.

$P_S$ : Probability of a frame synchronization confirmation success for one frame.

From the above definitions, when the current pilot pattern is used for frame synchronization confirmation, the probability of a detection and a false alarm can be expressed as:

$$P_D = Prob(H_1) \tag{7}$$

$$P_{FA} = Prob(H_2) \tag{8}$$

The probability of a frame synchronization confirmation success for one frame becomes $P_S = Prob(H_3)$ and it can be expressed as

$$P_S = P_D(1-P_{FA})^{15} \tag{9}$$

Whereas in the case of the frame synchronization words of the preferred example system, as has been stated, double thresholds are needed for double-check frame synchronization, and the probability of a detection and a false alarm can be expressed as:

$$P_D = Prob(H_4) \tag{10}$$

$$P_{FA} = Prob(H_5) \tag{11}$$

Similarly, in the case of frame synchronization words of the preferred example system, the probability of a frame confirmation success for one frame becomes $P_S = Prob(H_6)$ and it is given by

$$P_S = P_D(1-P_{FA})^{14} \qquad\qquad (12)$$

From equations (9) and (12), the probability of a frame synchronization confirmation is greatly affected by the probability of a false alarm since $P_S$ is proportional to $P_D$ and $(1-P_{FA})^{14}$ or $(1-P_{FA})^{15}$. For example, assume that $P_{FA} = 10^{-1}$, then $(1-P_{FA})^{14} = 0.2288$ and $(1-P_{FA})^{15} = 0.2059$. Now let $P_{FA} = 10^{-3}$, then $(1-P_{FA})^{14}= 0.9861$ and $(1-P_{FA})^{15} = 0.9851$. The performance of frame synchronization can be sufficiently evaluated by selecting the threshold so that the $P_{FA}$ is much smaller than $(1-P_D)$.

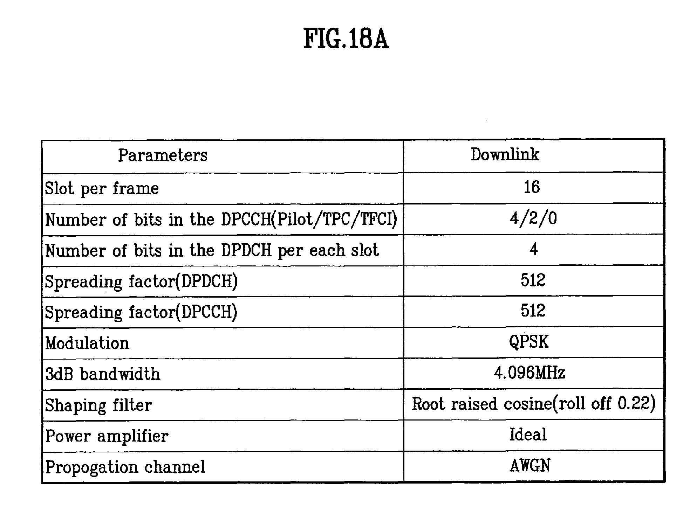

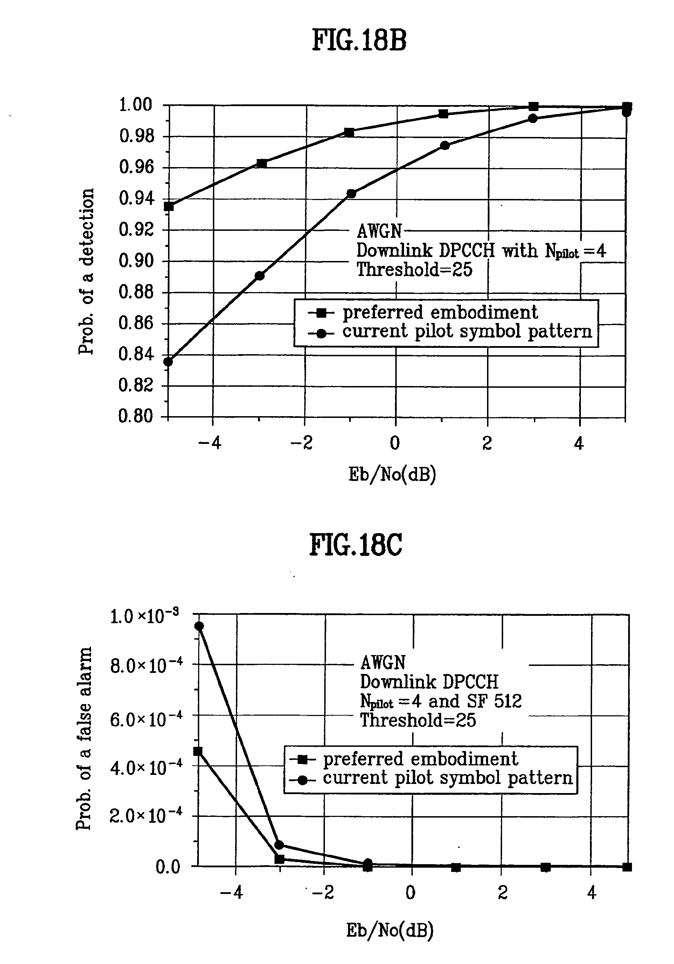

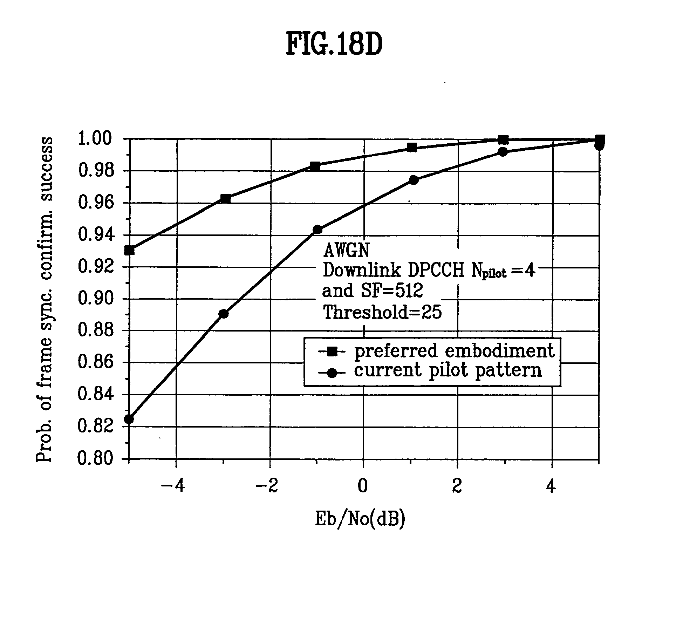

The parameters of Figure 18A are used for obtaining $P_D$, $P_{FA}$, and $P_S$ on uplink DPCCH and downlink DPCH over additive white Gaussian noise (AWGN). Figure 18B illustrates the probability of detection $P_D$ on downlink DPCCH with $N_{pilot}=4$ over AWGN channel, Figure 18C illustrates the probability of false alarm $P_{FA}$ on downlink DPCCH with $N_{pilot}=4$ over AWGN channel, and Figure 18D illustrates the probability of a frame synchronization confirmation success $P_S$ on downlink DPCCH with $N_{pilot}=4$ over AWGN between the pilot pattern of the preferred example system and the current pilot pattern, where $P_D$, $P_{FA}$, and $P_S$ are given as a function of $E_b/N_0$ ratio ($E_b$ = energy per bit, $N_0$ = noise power spectral density).

The $P_D$ and $P_S$ of the pilot patterns of the preferred example system are greater than that of current pilot pattern. Furthermore, the $P_{FA}$ of the pilot patterns in accordance with the preferred example system are also smaller than that of the current pilot patterns. The theoretical equations (9) and (12) are identical to simulation results of Figure 18D. Therefore, there is significant difference between the frame synchronization performance of pilot patterns of the preferred example system and that of current pilot pattern. For example, from Figure 18D, there is 3dB gain at $P_S = 0.93$ by employing the pilot patterns of the preferred example system.

The frame synchronization words of the preferred example system are especially suitable for frame synchronization confirmation. By adding the autocorrelation functions of shaded frame synchronization words, double maximum values equal in magnitude and opposite polarity at zero and middle shifts are obtained. This property can be used to slot-by-slot and double-check frame synchronization timing and reduce the synchronizat ion search time. The performance of frame synchronization conf irmation over AWGN using pilot pattern illustrate the signific ant differences between the frame synchronization performance of the pilot pattern of the preferred example system and the curre nt pilot pattern.

**First Example of Downlink DPCH, PCCPCH and SCCPH for STTD Diversity**

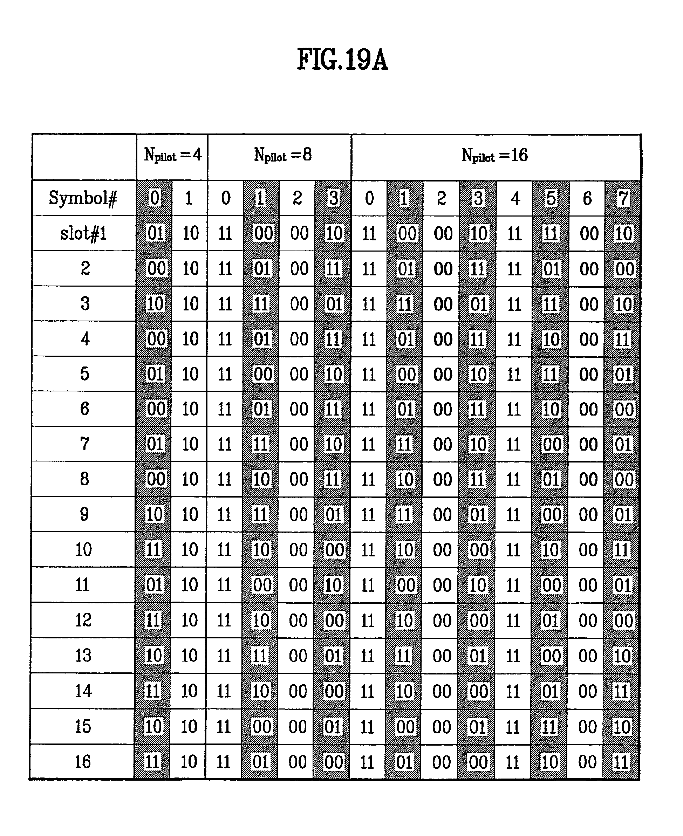

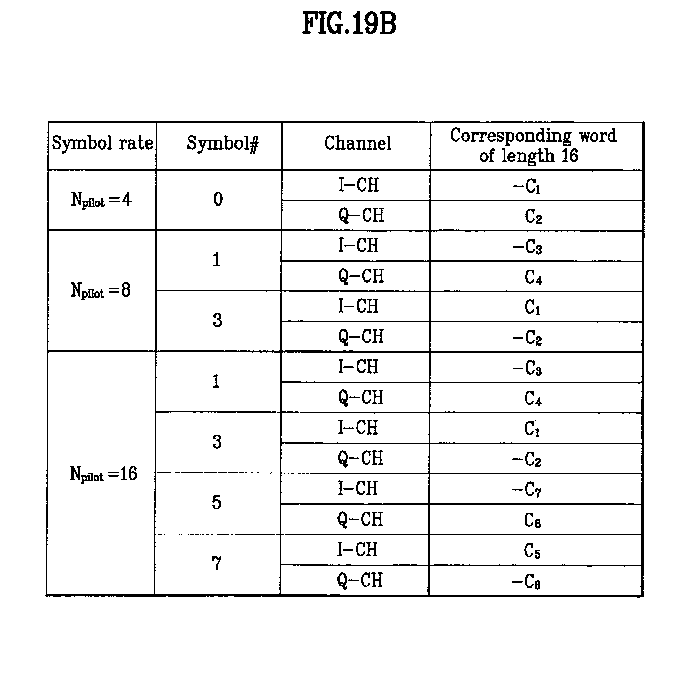

Figure 19A illustrates new pilot symbol patterns of Downlink DPCH for the diversity antenna using a space time block coding based transmit diversity (STTD). For the diversity pilot symbol pattern on downlink DPCH, STTD is applied to the shaded pilot symbols #1 and #3 for $N_{pilot} = 8$, and the shaded pilot symbols #1, #3, #5, and #7 for $N_{pilot} = 16$. The non-shaded pilot symbols #0 and #2 for $N_{pilot} = 8$ , and non-shaded pilot symbols #0, #2, #4,and #6 for $N_{pilot} = 16$ are encoded to be orthogonal to the pilot symbol of Figure 15A. However, the diversity pilot pattern for downlink DPCH with $N_{pilot} = 4$ are STTD encoded since STTD encoding requires two symbols. Figure 19B illustrates the mapping relationship between the 8 words $C_1$-$C_8$ of Figure 12A and shaded pilot symbol patterns of Figure 19A.

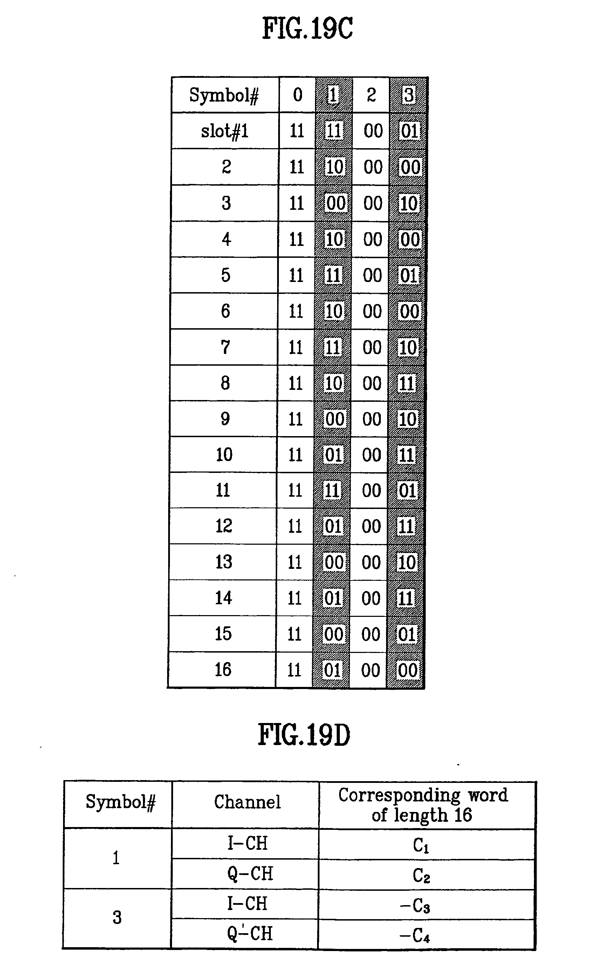

Figure 19C illustrates the new diversity antenna pilot symbol pattern for PCCPCH. The pilot symbols of Figure 19C are encoded to be orthogonal to the pilot symbols of Figure 16A. Figure 19D illustrates the mapping relationship between the words $C_1$-$C_8$ of Figure 12A and shadowed pilot symbol patterns of Figure 19C.

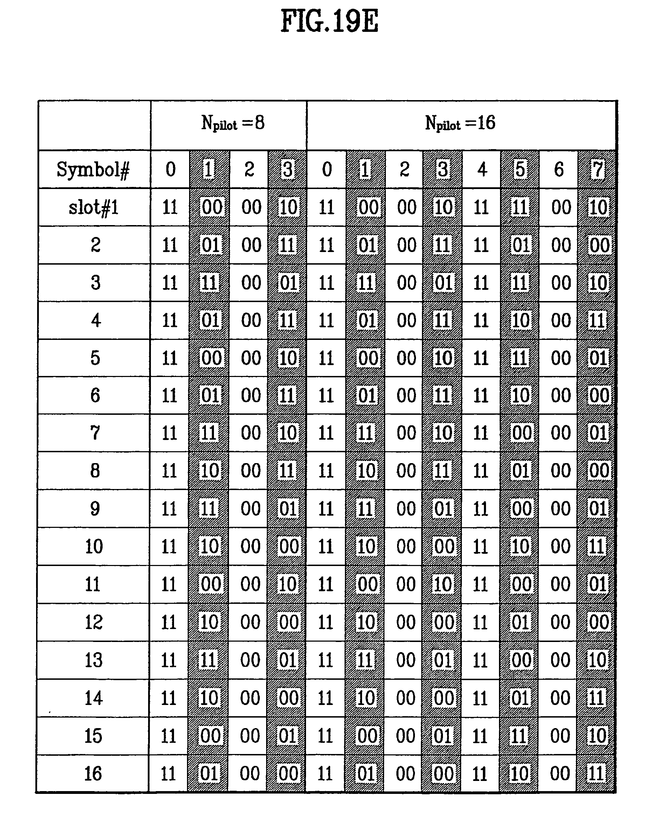

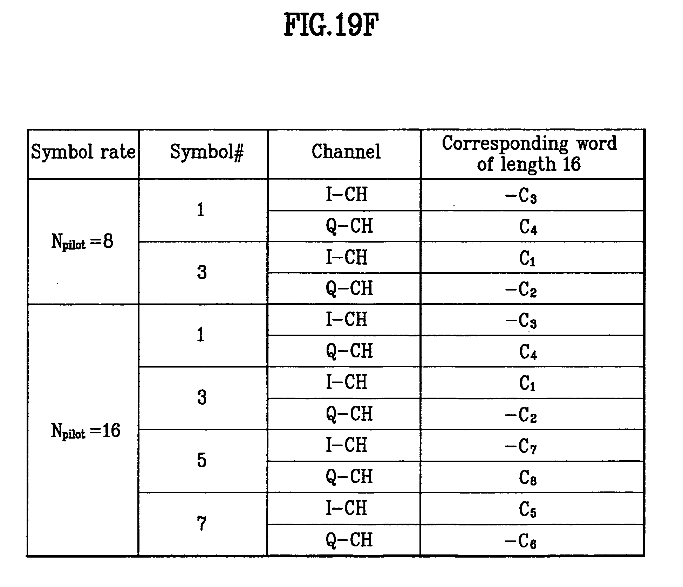

Figure 19E illustrates the new pilot symbol pattern for the diversity antenna when STTD encoding is used on the SCCPCH. For the diversity pilot symbol pattern on SCCPCH, STTD is applied to the shaded pilot symbols #1, and #3 of $N_{pilot} = 8$, and shaded pilot symbols #1, #3, #5, and #7 of $N_{pilot} = 16$ in Figure 19E, whereas the non-shaded pilot symbols #0 and #2 of $N_{pilot} = 8$, and non-shaded #0, #2, #4, #6 of $N_{pilot} = 16$ are encoded to be orthogonal to those of Figure 16C. Figure 19F illustrates the mapping relationship between the words $C_1$-$C_8$ of Figure 12A and shaded pilot symbol patterns of Figure 19E.

Since the above is based on words $C_1$-$C_8$, the previous discussion regarding the uplink DPCCH and downlink DPCH, PCCPCH and SCCPH is readily applicable. One of ordinary skill in the art can readily appreciate the features for downlink using diversity antenna based on previous disclosure, and a detailed disclosure is omitted.

**Alternative Example for Uplink DPCCH and Downlink DPCH and PCCPCH**

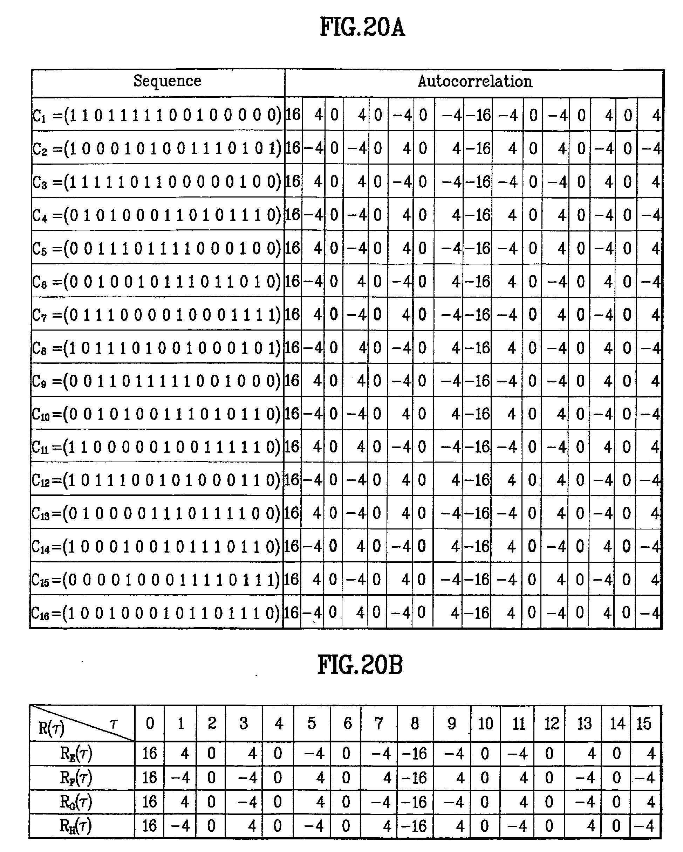

Figure 20A is a table illustrating frame synchronization words $C_1$-$C_{16}$ (i=16) and autocorrelated function in accordance with another preferred example system.
The frame synchronization words $C_1$-$C_{16}$ can be classified into the PCSP of the first example system, as follows:

$$E = \{C_1, C_3, C_9, C_{11}\}$$

$$F = \{C_2, C_4, C_{10}, C_{12}\}$$

$$G = \{C_5, C_7, C_{13}, C_{15}\}$$

$$H = \{C_6, C_8, C_{14}, C_{16}\}$$

The classification of the alternative frame synchronization words $C_1$-$C_{16}$ are also applicable to equations (1)-(6), and have the same properties and characteristics of the first example system. Figure 20B is a table illustrating the autocorrelation function of the pilot bits of each frame synchronization word classified in the PCSP. In this particular case, each class contains four sequences and the sequences of the same class have the same autocorrelation function.

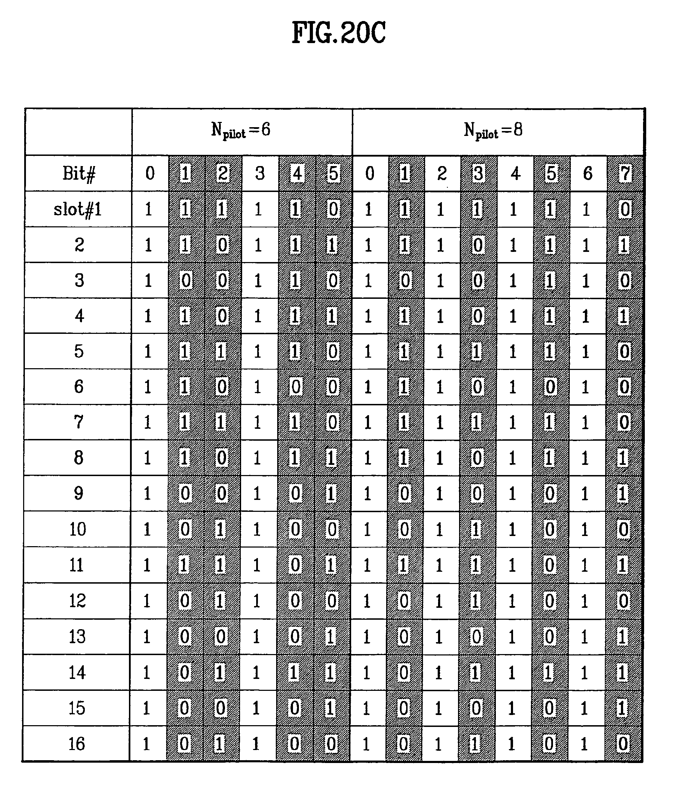

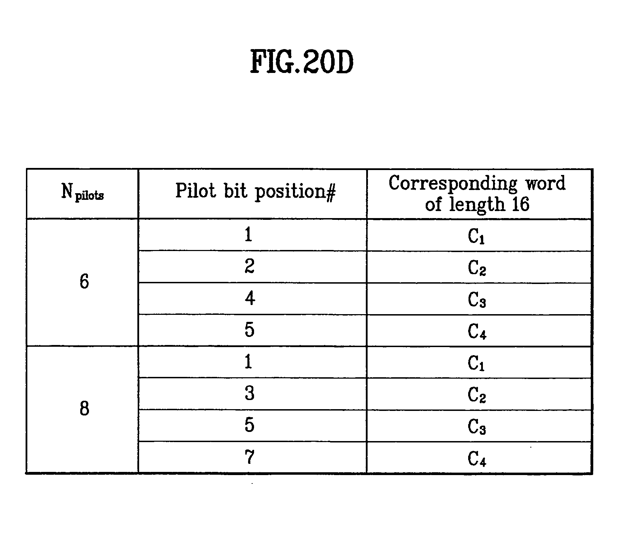

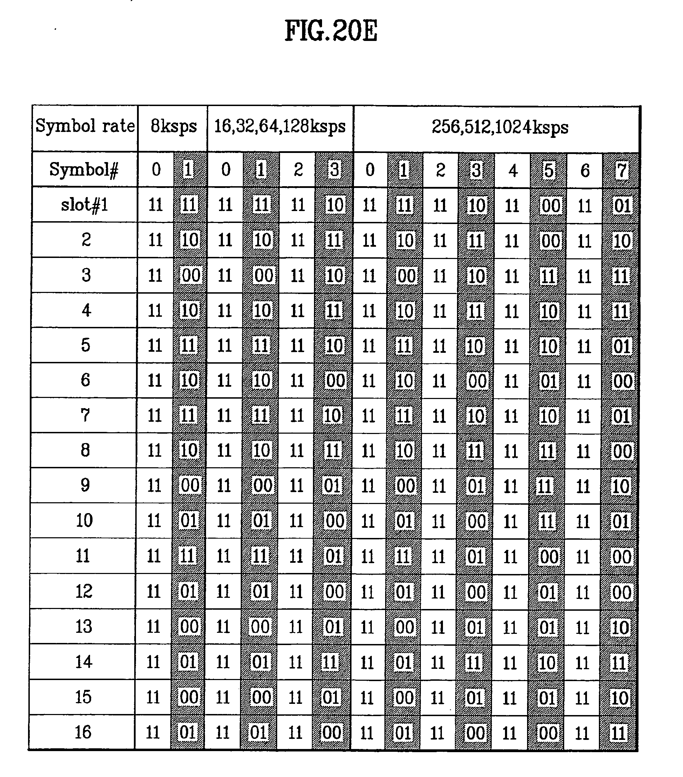

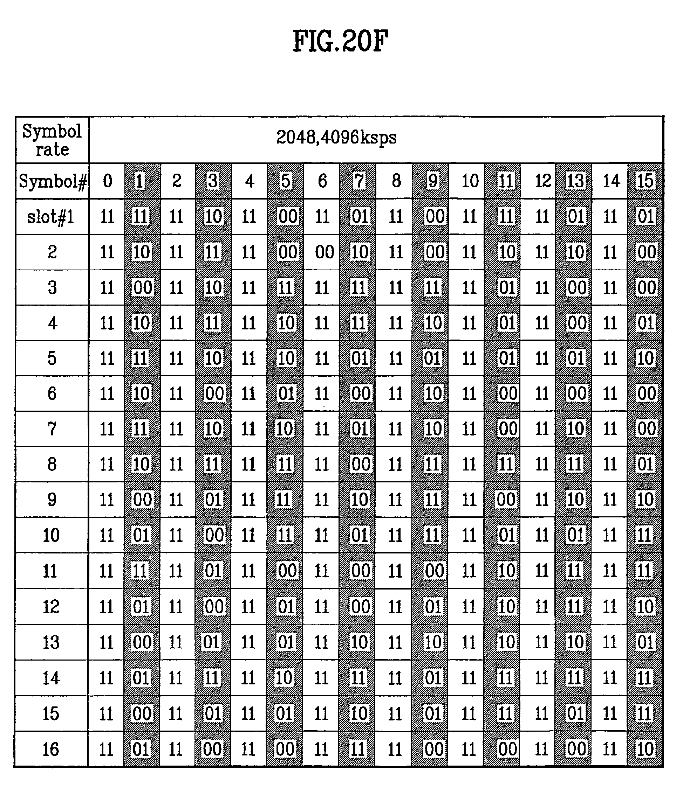

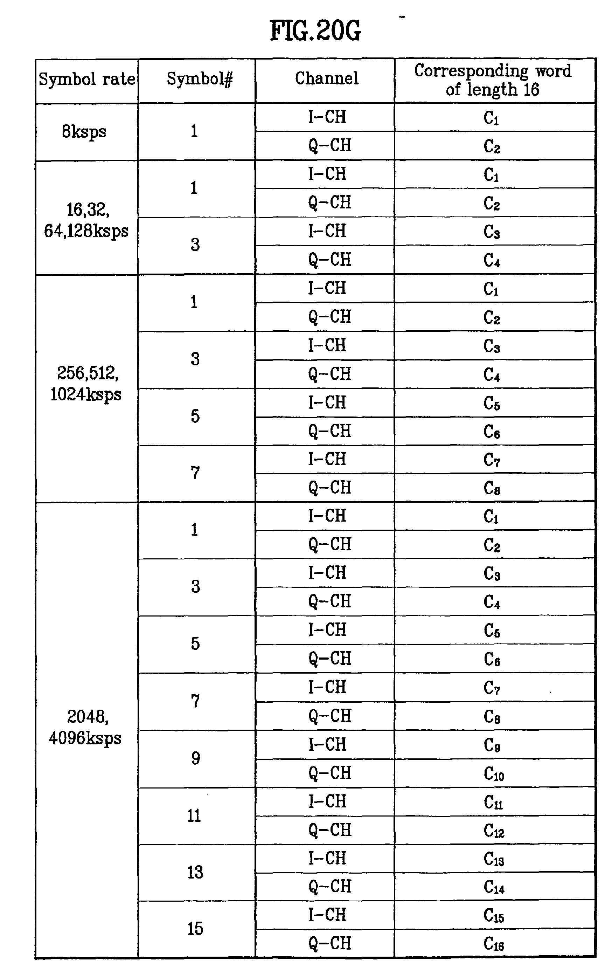

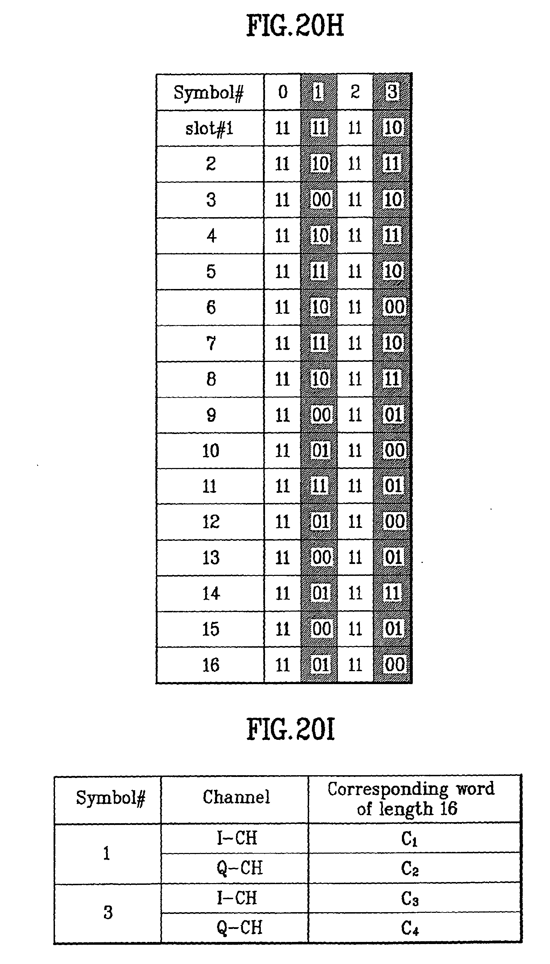

Figure 20C illustrates the pilot bit pattern of uplink DPCCH with $N_{pilot}$=6 and 8 and Figure 20D illustrates a mapping relationship between the alternative frame synchronization words $C_1$-$C_{16}$ of Figure 20A and the shaded frame synchronization words of Figure 20C. Figures 20E and 20F illustrate the pilot symbol pattern of downlink DPCH with 8, 16, 32, 64, 128, 256, 512, 1024, 2048 and 4096 ksps, and Figure 20G illustrates a mapping relationship between the alternative frame synchronization words $C_1$-$C_{16}$ of Figure 20A and the shaded frame synchronization words of Figures 20E and 20F. Figure 20H illustrates the pilot symbol pattern of downlink PCCPCH and Figure 20I illustrates a mapping relationship between the alternative frame synchronization words $C_1$-$C_{16}$ of Figure 20A and the shaded frame synchronization words of Figure 20H.

Since the above is based on alternative words $C_1$-$C_{16}$, which have the same features as the words $C_1$-$C_8$ of the first example system, the previous discussion regarding the uplink DPCCH and downlink DPCH, PCCPCH and SCCPH of the first example system is readily applicable. One of ordinary skill in the art can readily appreciate the features of this example system based on previous disclosure, and a detailed disclosure is omitted.

The frame synchronization words of the preferred example system are especially suitable for frame synchronization confirmation. By adding the autocorrelation functions of shaded frame synchronization words, double maximum values equal in magnitude and opposite polarity at zero and middle shifts are obtained. This property can be used to slot-by-slot and double-check frame synchronization timing and reduce the synchronization search time. Further the example system allows a simpler construction of the correlator circuit for a receiver, thereby reducing the complexity of the receiver. Moreover, the example system allows accurate establishment of the frame synchronization. Due to various advantages of the example system, the first preferred example system has been accepted by the 3GPP, as shown in TS 25.211 v2.0.1, distributed June 1999, whose entire disclosure is hereby incorporated by reference therein.

**Preferred Example for L=15**

The above exemplary pilot patterns have various advantages including frame synchronization confirmation. In the above example systems, the physical channel of the up-link or down-link has a chip ratio of 4.096Mcps, which results from the use of a pilot pattern based on a length of 16 slots for the frame synchronization. In other words, the chip ratio is based on a slot length of $2^n$. However, if the chip ratio changes from 4.096Mcps to 3.84Mcps, alternative pilot patterns are needed since one radio frame is based on a slot length of 15 slots. Hence, alternative pilot patterns are needed for 15 slots (L=15) due to OHG harmonization.

Figure 21 illustrates a preferred example system for the new frame synchronization words $C_1$-$C_{i\text{-th}}$, which has the autocorrelation function of lowest out-of-phase coefficient and the lowest magnitude of cross-correlation function with minus peak value at middle shift, where i=8. The frame synchronization words are used to design the regular pilot patterns and diversity antenna pilot patterns of uplink DPCH, and downlink DPCH and SCCPCH of the preferred example system. By using the two correlation functions, it is possible to double check frame synchronization at zero and middle shifts. When performance evaluation of single-check and double-check frame synchronization confirmation is carried out over AWGN environment, the words $C_1$-$C_8$ of Figure 21 are suitable for frame synchronization confirmation

The frame synchronization words $C_1$-$C_8$ have the following two-valued auto-correlation function:

$$R_i(\tau) = \begin{cases} 15, & \tau = 0 \\ -1, & \tau \neq 0 \end{cases}, \quad i = 1, 2, \cdots, 8 \tag{13}$$

where $R_i(\tau)$ is the auto-correlation function of frame synchronization word $C_i$. Similar to L=16, the words of Figure 21 can be divided into 4 classes, as follows:

$$E = \{C_1, \ C_2\}$$

$$F = \{C_3, \ C_4\}$$

$$G = \{C_5, \ C_6\}$$

$$H = \{C_7, \ C_8\}$$

The two words within the same class are PCSP. The cross-correlation spectrum for the preferred pair $\{C_1, C_2\}$, $\{C_3, C_4\}$, $\{C_5, C_6\}$, or $\{C_7, C_8\}$ is

$$R_{i,j}(\tau) = \begin{cases} -15, & \tau = 7 \\ 1, & \tau \neq 7 \end{cases} \tag{14}$$

$$R_{j,i}(\tau + 1) = \begin{cases} -15, & \tau = 7 \\ 1, & \tau \neq 7 \end{cases} \tag{15}$$

where $R_{i,j}(\tau)$ is cross-correlation function between two words of preferred pair of E, F, G, H, and $i, j$ = 1, 2, 3, ...., 8. By combining such auto-correlation and cross-correlation functions, the following equations (16) and (17) are obtained:

$$\sum_{i=1}^{\alpha} R_i(\tau) = \begin{cases} \alpha \cdot 15, & \tau = 0 \\ -\alpha, & \tau \neq 0 \end{cases}, \quad \alpha = 1, 2, 3, ..., 8 \tag{16}$$

$$\sum_{i=1}^{\alpha/2} (R_{2i-1,2i}(\tau) + R_{2i,2i-1}(\tau + 1)) = \begin{cases} -\alpha \cdot 15, & \tau = 7 \\ \alpha, & \tau \neq 7 \end{cases}, \quad \alpha = 2, 4, 6, 8 \tag{17}$$

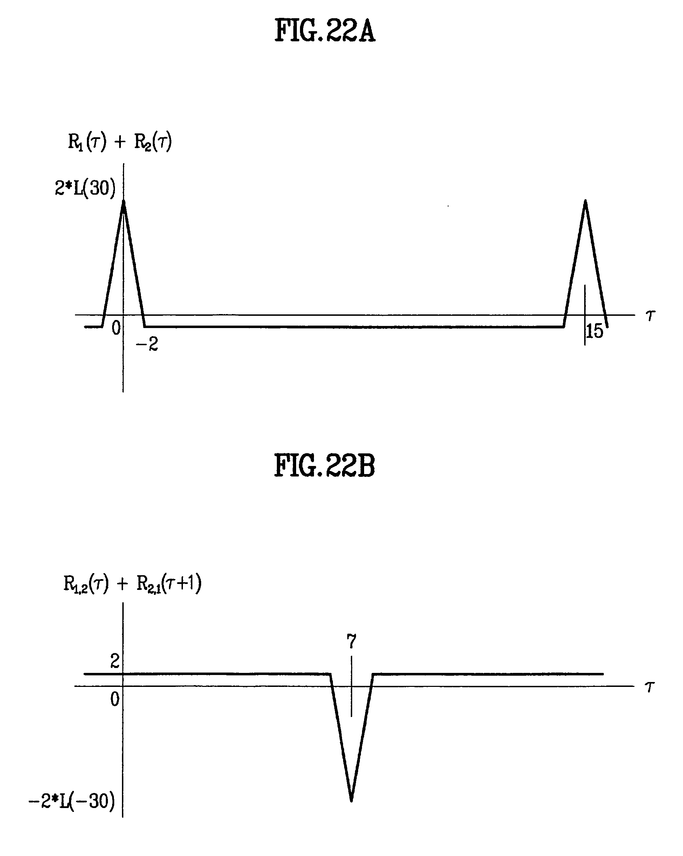

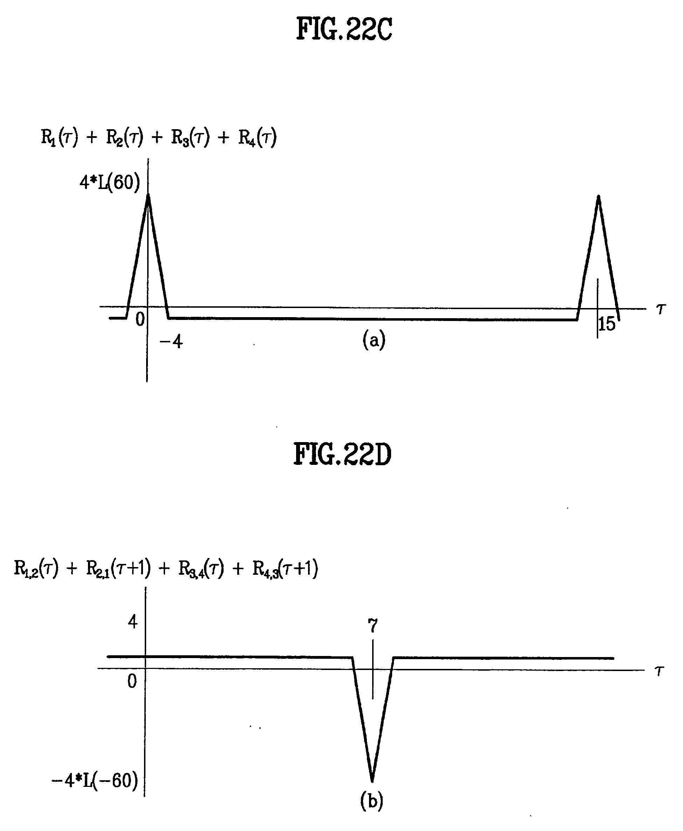

From equations (16) and (17), when $\alpha$=2, Figure 22A illustrates the addition of two auto-correlation functions, and Figure 22B illustrates the addition of two cross-correlation functions between the two frame synchronization words within the same class. Similarly, from equations (16) and (17), when $\alpha$=4, Figure 22C illustrates the addition of four auto-correlation functions, and Figure 22D illustrates the addition of four cross-correlation functions between the four frame synchronization words of two classes E and F.

Since the auto-correlation function of the frame synchronization words $C_1$-$C_8$ in accordance with this preferred example system has the lowest out-of-phase coefficient, single-check frame synchronization confirmation is feasible by applying the positive threshold value at (a) of the autocorrelation function output of Figure 22C. Furthermore, double-check frame synchronization confirmation is also achieved by setting the negative threshold value at (b) of the cross-correlation function output of Figure 22D.

Figures 23A illustrates the pilot bit patterns on uplink DPCCH with $N_{pilot}$ = 2, 3, and 4, and Figure 23C illustrates the pilot bit patterns on uplink DPCCH with $N_{pilot}$ = 2,3, and 4 in accordance with an alternative example system compared to Figure 23A. Further, Figures 23E and 23F illustrate the pilot bit patterns on uplink DPCCH with $N_{pilot}$ = 5, 6, 7, and 8. The shaded parts of Figures 23A, 23C, 23E and 23F can be used for frame synchronization words, and the value of pilot bit other than the frame synchronization word is 1. Figures 23B and 23D illustrate the mapping relationship between the frame synchronization words of Figure 21, and shaded frame synchronization words of Figures 23A and 23D, respectively. Further, Figure 23G illustrates the mapping relationship between the frame synchronization words of Figure 21, and the shaded frame synchronization words of Figures 23E and 23F.

The various description of above for uplink DPCCH when L= 16 is readily applicable to this preferred example system when L=1 5, including the correlator circuits (with some modifications) and the generally characteristics. For example, as shown in f rame synchronization words $C_1$-$C_8$ of Figure 21, each word has substantially the same number of 1 and 0. In this preferred example system, the result of $b_1$-$b_0$ is plus or minus one, e.g., close to zero. Further, when th e number of slots is 15, i.e., odd, the result of $b_3$-$b_4$ equals plus or minus one, e.g., close to zero. Further, sin ce two frame synchronization words are used for $N_{pilot}$ = 2, 3, a nd 4 and there are fifteen timeslots in a radio frame, the num ber of pilot bits used for synchronization is 30 per frame. F or $N_{pilot}$ = 5, 6, 7 and 8, since four synchronization words are used for fifteen timeslots in a radio frame, the number of pil ot bits used for synchronization is 60 per frame. Moreover, t he result of the addition of two or four autocorrelation functions and cross-correlation functions between two or four frame synchronizatio n words corresponds to Figures 22A-22D.

With the implementation of the novel pilot patterns, the values for the number of bits per field are shown below in Table 5 and Table 6 with reference to Figure 4. The channel bit and symbol rates given in Table 5 are the rates immediately before spreading.

**Table 5: DPDCH fields**

| Channel Bit Rate (kbps) | Channel Symbol Rate (ksps) | SF | Bits/Frame | Bits/Slot | $N_{data}$ |
|---|---|---|---|---|---|
| 15 | 15 | 256 | 150 | 10 | 10 |
| 30 | 30 | 128 | 300 | 20 | 20 |
| 60 | 60 | 64 | 600 | 40 | 40 |
| 120 | 120 | 32 | 1200 | 80 | 80 |
| 240 | 240 | 16 | 2400 | 160 | 160 |
| 480 | 480 | 8 | 4800 | 320 | 320 |
| 960 | 960 | 4 | 9600 | 640 | 640 |

There are two types of Uplink Dedicated Physical Channels; those that include TFCI(e.g. for several simultaneous services) and those that do not include TFCI(e.g. for fixed-rate services). These types are reflected by the duplicated rows of Table 6. The channel bit and symbol rates given in Table 6 are the rates immediately before spreading.

**Table 6: DPCCH fields**

| Channel Bit Rate (kbps) | Channel Symbol Rate (ksps) | SF | Bits/Frame | Bits/Slot | $N_{pilot}$ | $N_{TPC}$ | $N_{TFCI}$ | $N_{FBI}$ |
|---|---|---|---|---|---|---|---|---|
| 15 | 15 | 256 | 150 | 10 | 6 | 2 | 2 | 0 |
| 15 | 15 | 256 | 150 | 10 | 8 | 2 | 0 | 0 |
| 15 | 15 | 256 | 150 | 10 | 5 | 2 | 2 | 1 |
| 15 | 15 | 256 | 150 | 10 | 7 | 2 | 0 | 1 |

(continued)

| Channel Bit Rate (kbps) | Channel Symbol Rate (ksps) | SF | Bits/Frame | Bits/Slot | $N_{pilot}$ | $N_{TPC}$ | $N_{TFCI}$ | $N_{FBI}$ |
|---|---|---|---|---|---|---|---|---|
| 15 | 15 | 256 | 150 | 10 | 6 | 2 | 0 | 2 |
| 15 | 15 | 256 | 150 | 10 | 5 | 1 | 2 | 2 |

The Random Access Channel (RACH) is an uplink transport channel that is used to carry control information from the UE. The RACH may also carry short user packets. The RACH is always received from the entire cell. Figure 23H illustrates the structure of random access channel. The 10 ms message is split into 15 slots, each of length $T_{slot}$ = 2560 chips. Each slot has two parts, a data part that carries Layer 2 information and a control part that carries Layer 1 control information. The data and control parts are transmitted in parallel.

The data part includes $10*2^k$ bits, where k=0,1,2,3. This corresponds to a spreading factor of 256, 128, 64, and 32 respectively for the message data part. The control part has 8 known pilot bits to support channel estimation for coherent detection and 2 bits of rate information. This corresponds to a spreading factor of 256 for the message control part.

With the implementation of the novel pilot patterns, the values for the number of bits per field are shown in Table 7 with reference to Figure 23H.

**Table 7: Random-access message data fields.**

| Channel Bit Rate (kbps) | Channel Symbol Rate (ksps) | SF | Bits/Frame | Bits/Slot | $N_{data}$ |
|---|---|---|---|---|---|
| 15 | 15 | 256 | 150 | 10 | 10 |
| 30 | 30 | 128 | 300 | 20 | 20 |
| 60 | 60 | 64 | 600 | 40 | 40 |
| 120 | 120 | 32 | 1200 | 80 | 80 |

Figure 23I illustrates the random access message control fields and there is always 8 pilot symbols per slot for channel estimation. Due to the unique characteristics of the frame synchronization words in accordance with the preferred example system, the frame synchronization words $C_1$-$C_8$ can be used in the pilot bit pattern of the RACH for channel estimation. Figure 23J illustrates the pilot bit pattern of the RACH, and the mapping relationship is the same as the mapping relationship illustrated in Figure 23G for $N_{pilot}$=8. Due to the novel characteristics of the frame synchronization words $C_1$-$C_8$, which can also be used solely for channel estimation, it is easy to reuse the pilot patterns, which allows commonality between different uplink channels.

Figure 24A illustrates the pilot symbol patterns on downl ink DPCH when $N_{pilot}$ = 2, 4, 8, and 16. The shaded parts of Figu re 24A can be used for frame synchronization symbols, each sym bol having one frame synchronization word for the I channel br anch and another frame synchronization word for the Q channel branch, and the value of pilot symbol other than the frame syn chronization word is 11. Figure 24B illustrates the mapping re lationship between the frame synchronization words $C_1$-$C_8$ of Figure 21 and shaded pilot symbol patterns of Figure 24A

Figure 24C illustrates the pilot symbol patterns of downl ink DPCH for the diversity antenna using STTD. For the diversi ty pilot symbol pattern on downlink DPCH, STTD is applied to t he shaded pilot symbols #1 and #3 for $N_{pilot}$=8, and #1, #3, #5, and #7 for $N_{pilot}$ = 16. The non-shaded pilot symbols of #0 and #2 for $N_{pilot}$ = 8 and 0#, #2, #4 and #6 for $N_{pilot}$ = 16 are encoded to be orthogonal to the pilot symbol of Figure 24A. However, the diversity pilot pattern fo r downlink DPCH with $N_{pilot}$ = 4 are STTD encoded since STTD enco ding requires two symbols. Since the STTD encoded pilot symbol pattern is orthogonal to ordinary pilot symbol pattern, the S TTD encoded pilot pattern can also be used for antenna verific ation of feedback mode diversity. Figure 24D illustrates the mapping relationship between the frame synchronization words $C_1$- $C_8$ of Figure 21 and shaded pilot symbol patterns of Figure 24C.

With the implementation of the novel pilot patterns, the below Table 8 shows the number of bits per slot of the various fields with reference to Figure 8. There are basically two types of downlink Dedicated Physical Channel; those that include TFCI (e.g. for several simultaneous services) and those that do not include TFCI(e.g. for fixed-rate services). These types are reflected by the duplicated rows of Table 8. The channel bit and symbol rates given in Table 8 are the rates immediately before spreading. If there is no TFCI, then the TFCI field is left blank (*).

**Table 8: DPDCH and DPCCH fields**

| Channel Bit Rate (kbps) | Channel Symbol Rate (ksps) | SF | Bits/Frame | | | Bits/Slot | DPDCH Bits/Slot | | DPCCH Bits/Slot | | |
|---|---|---|---|---|---|---|---|---|---|---|---|
| | | | DPDCH | DPCCH | TOT | | $N_{Data}$ | $N_{Data}$ | $N_{TF}$ | $N_{TP}$ | $N_{Pi}$ |
| 15 | 7.5 | 512 | 60 | 90 | 150 | 10 | 2 | 2 | 0 | 2 | 4 |
| 15 | 7.5 | 512 | 30 | 120 | 150 | 10 | 0 | 2 | 2 | 2 | 4 |
| 30 | 15 | 256 | 150 | 150 | 300 | 20 | 2 | 8 | 0 | 2 | 8 |
| 30 | 15 | 256 | 120 | 180 | 300 | 20 | 0 | 8 | 2 | 2 | 8 |
| 60 | 30 | 128 | 450 | 150 | 600 | 40 | 6 | 24 | 0 | 2 | 8 |
| 60 | 30 | 128 | 420 | 180 | 600 | 40 | 4 | 24 | 2 | 2 | 8 |
| 120 | 60 | 64 | 900 | 300 | 1200 | 80 | 4 | 56 | 8* | 4 | 8 |
| 240 | 120 | 32 | 2100 | 300 | 2400 | 160 | 20 | 120 | 8* | 4 | 8 |
| 480 | 240 | 16 | 4320 | 480 | 4800 | 320 | 48 | 240 | 8* | 8 | 16 |
| 960 | 480 | 8 | 9120 | 480 | 9600 | 640 | 112 | 496 | 8* | 8 | 16 |
| 1920 | 960 | 4 | 18720 | 480 | 19200 | 1280 | 240 | 1008 | 8* | 8 | 16 |

Figure 25A illustrates the pilot symbol patterns for down link SCCPCH for $N_{pilot}$ = 8 and 16, and Figure 25B illustrates th e mapping relationship of the frame synchronization words $C_1$-$C_8$ of Figure 21 and shaded pilot symbol patterns of Figure 25A.

Further, Figure 25C illustrates the pilot symbol patterns of downlink SCCPCH for Npilot = 8 and 16 for the diversity anten na using STTD, and Figure 25D illustrates the mapping relation ship between the frame synchronization words $C_1$-$C_8$ of Figure 21 and shaded pilot symbol patterns of Figure 25C.

With the implementation of the novel pilot patterns, the values for the number of bits per field are given in Table 9 with reference to Figure 11B. The channel bit and symbol rates given in Table 9 are the rates immediately before spreading. In the Secondary Common Control Physical Channel, it is possible to have burst transmission based on radio frame units. When burst transmission is .performed, pilot symbols shall be added to the head of the burst. The number of symbols and the symbol pattern of the pilot symbols to be attached shall take the pattern of Slot #15.

**Table 9: Secondary CCPCH fields with pilot bits**

| Channel Bit Rate (kbps) | Channel Symbol Rate (ksps) | SF | Bits/Frame | Bits/Slot | $N_{data}$ | $N_{pilot}$ | $N_{TFCI}$ |
|---|---|---|---|---|---|---|---|
| 30 | 15 | 256 | 300 | 20 | 12 | 8 | 0 |
| 30 | 15 | 256 | 300 | 20 | 10 | 8 | 2 |
| 60 | 30 | 128 | 600 | 40 | 32 | 8 | 0 |
| 60 | 30 | 128 | 600 | 40 | 30 | 8 | 2 |
| 120 | 60 | 64 | 1200 | 80 | 72 | 8 | 0 |
| 120 | 60 | 64 | 1200 | 80 | 64 | 8 | 8 |
| 240 | 120 | 32 | 2400 | 160 | 152 | 8 | 0 |
| 240 | 120 | 32 | 2400 | 160 | 144 | 8 | 8 |
| 480 | 240 | 16 | 4800 | 320 | 304 | 16 | 0 |
| 480 | 240 | 16 | 4800 | 320 | 296 | 16 | 8 |
| 960 | 480 | 8 | 9600 | 640 | 624 | 16 | 0 |
| 960 | 480 | 8 | 9600 | 640 | 616 | 16 | 8 |

(continued)

| Channel Bit Rate (kbps) | Channel Symbol Rate (ksps) | SF | Bits/Frame | Bits/Slot | $N_{data}$ | $N_{pilot}$ | $N_{TFCI}$ |
|---|---|---|---|---|---|---|---|
| 1920 | 960 | 4 | 19200 | 1280 | 1264 | 16 | 0 |
| 1920 | 960 | 4 | 19200 | 1280 | 1256 | 16 | 8 |

As can be appreciated, the various description of above f or downlink DPCH when L=16 is readily applicable to this prefe rred example system when L=15, including the correlator circuits ( with some modifications) and the generally characteristics. M oreover, the result of the addition of two or four autocorrelation functions and cross-correlation functions between two or four frame synchronizatio n words corresponds to Figures 22A-22D.

In order to evaluate the performance of the frame synchronization words in accordance with the preferred example system for 15 slots per frame, the following events and parameters are first defined:

$H_1$ : The event that the autocorrelator output exceeds the predetermined threshold at zero slot offset.

$H_2$ : The event that the autocorrelator output exceeds the predetermined threshold at zero slot offset or the cross-correlator output is smaller than $-1 \times$(predetermined.threshold) at 7 slot offset.

$H_3$ : The event that the autocorrelator exceeds the predetermined threshold at slot offset except zero.

$H_4$ : The event that the cross-correlator output is smaller than $-1 \times$(predetermined threshold) at slot offset except 7.

$P_S$ : Probability of a frame synchronization confirmation success.

$P_{FA}$ : Probability of a false alarm.

The frame synchronization is confirmed if the output of the correlator using the frame synchronization word exceeds the predetermined threshold. The success of the frame synchronization confirmation is determined when the successive $S_R$ frame synchronization is confirmed. Otherwise, the frame synchronization confirmation failure is determined. Thus, the probability of a frame synchronization confirmation success is defined by

$$P_S = \begin{cases} (Pr\,ob(H_1))^{S_R}, & single\,check \\ (Pr\,ob(H_2))^{S_R}, & double\,check \end{cases} \qquad (18)$$

The probability of a false alarm can be expressed as

$$\begin{aligned} P_{FA} &= Pr\,ob(H_3) \\ &= Pr\,ob(H_4) \end{aligned} \qquad (19)$$

The parameters of Figure 26A are used to evaluate the performance of the pilot bit pattern on uplink DPCCH over AWGN. Figure 26B illustrates the probability of frame synchronization confirmation success $P_S$ on uplink DPCCH with $N_{pilot}$ =6 over AWGN channel. Further, Figure 26C illustrates the probability of a false alarm $P_{FA}$ on uplink DPCCH with $N_{pilot}$ =6 over AWGN channel. The $P_S$ and $P_{FA}$ are given as a function of $E_b/N_0$ ratio ($E_b$ = energy per bit, $N_0$ = noise power spectral density).

The $P_S$ of single-check and double-check frame synchronization confirmation with $S_R$ = 3 on uplink DPCCH is smaller than 0.945 and 0.99 at-5dB, respectively. Further, about 4dB gain is obtained by empl oying double-check method compared to single-check method. From Figure 26C, the probability of a false alar m with normalized threshold = 0.6 at-5dB is smaller than $2.5 \times 10^{-4}$. The pilot pattern can be used for frame synchronization conf irmation since perfect frame synchronization confirmation succ ess with zero false alarm was detected at Eb/No = 0dB when dou ble-check frame synchronization confirmation method was used.

Figure 27 is a comparision chart between the example systems for 15 timeslots and 16 slots. Including the various advantag es for L=16, the pilot bit/symbol patterns for L=15 in accorda nce with the preferred example system have additional advantages. By using this property/characteristics of the frame synchroniz ation words, double-check frame synchronization scheme can be obtained. There is s ignificant gain about 4dB by employing the double-check frame synchronization confirmation method compared to si ngle-check method. However, in the case of 15 slots, the complexity of the correlator circuit is doubled since an autocorrelator for positive peak detection and a cross-correlator for negative peak detection are used.

Since the auto-correlation function of the frame synchronization words of the 15 slots has the lowest out-of-phase coefficient, the single-check frame synchronization confirmation method can also be employed; whereas, in the case of 16 slots, there is some problems due to +4 or -4 out-of-phase coefficients. The pilot patterns of 15 slots is very suitable for frame synchronization confirmation since perfect frame synchronization confirmation success with zero false alarm was detected at Eb/No = 0dB on uplink DPCH when double-check frame synchronization confirmation method was used. Due to the various advantageous of the preferred example system, the pilot bit/symbol patterns of 15 slots have been again accepted by the 3GPP.

### STTD Encoring for Downlink

The 3GPP RAN has a description in TS s1.11 v1.1.0 on a downlink physical channel transmit diversity on application of a open loop transmit diversity and a closed loop transmit diversity in different downlink physical channels. The open loop transmit diversity uses STTD encoding based on spatial or temporal block coding. As described above, the described example systems suggest new downlink pilot patterns using the STTD encoding into consideration. The STTD encoding is used optionally at the base station and preferably required at the user equipment.

Figure 28A illustrates a block diagram of an STTD transmitter 60 according to the 3GPP RAN standards for open loop transmit diversity. A data provided to the STTD transmitter in a non-diversity mode passes through a channel encoder 61 for channel coding, a rate matcher 62 for rate matching, and an interleaver 63 for interleaving, and therefrom to a first multiplexer 64. The multiplexer 64 multiplexes a final interleaved data, a TFCI field, and a TPC field. The STTD encoder 65 provides data patterns to be respectively transmitted through a first transmission antenna 67 and a second transmission antenna 68 to a second multiplexer 66. In other words, the second multiplexer 66 has symbols $S_1$ and $S_2$ by QPSK provided thereto together with symbols $-S_2^*$ and $S_1^*$ produced to be orthogonal to the symbols $S_1$ and $S_2$.

Figure 28B explains an STTD encoding of an STTD transmitter 60 according to the 3 GPP RAN standards. For example, it is assumed that QPSK symbols provided to the STTD encoder 65 is "$S_1$=1 1" in a first symbol period 0 T, and "$S_2$= 1 0" in a second symbol period T 2T. The symbols produced to be orthogonal to the QPSK symbols at the STTD encoder 65 is "0 0" in the first symbol period 0 T, and "1 0" in the second symbol period T 2T.

The symbols produced according to the STTD encoding have the following characteristics. The symbols "0 0" produced in the first symbol period 0 T are symbols converted from QPSK symbols $S_2$ in the second symbol period T 2T provided to the STTD encoder 65, and the symbols "1 0" produced in the second symbol period T 2T are symbols converted from the QPSK symbols $S_1$ in the first symbol period 0 T provided to the STTD encoder 65.

The symbols "$-S_2^*$ and $S_1^*$" are produced in respective symbol periods through shifting, complementary and conversion process according to the STTD encoding. Eventually, since the symbols "$-S_2^*$ and $S_1^*$ = 0 0, 1 0" and the QPSK symbols $S_1$ and $S_2$ = 1 1, 1 0 provided to the STTD encoder 65 have correlation values "0", they are orthogonal to each other.

The STTD encoded pilot symbol patterns of Figure 19A are orthogonal to the pilot symbol patterns of Figure 15A and a method for producing the pilot symbol patterns of Figure 19A by applying the STTD encoding principle to the pilot symbol patterns of Figure 15A will be explained with reference to Figure 28B.

The STTD encoding is preferably carried out in units of two symbols as bundles. In other words, if it is assumed that the two symbols are "$S_1$=A+jB" and "$S_2$=C+jD", the STTD encoding is carried out with $S_1$ and $S_2$ tied as a unit. In this instance, "A" and "C" are pilot bits for the I channel branch and "B" and "C" are pilot bits for the Q channel branch. An STTD encoding of "$S_1$ $S_2$" produces "$-S_2^*$ $S_1^*$" (where * denotes a conjugate complex). At the end of the encoding, the STTD encoded two symbols will be "$-S_2^*$=-C+jD" and "$S_1^*$=A-jB".

Specifically, when the symbol rate is 8ksps ($N_{pilot}$=4) of Figure 15A, "$S_1$=1+j, $S_2$=$C_1$+j$C_2$" of respective symbol #0 and symbol #1 are STTD encoded into "$-S_2^*$=$-C_1$+j$C_2$" of symbol #0 and "$S_1^*$=1-j0" of symbol #1. When symbol rate is 16, 32, 64 or 128ksps (Npilot=8) in Figure 15A, "$S_1$=$C_1$+j$C_2$, $S_2$=$C_3$+j$C_4$" at symbol #1 and symbol #3 are STTD encoded into "$-S_2^*$=$-C_3$+j$C_4$" of symbol #1 and "$S_1^*$=$C_1$-j$C_2$" of symbol #3 of Figure 19A. The non-shaded symbol #0 and symbol #2 in Figure 19A are made orthogonal to the non-shaded symbol #0 and symbol #2 in Figure 15A. In other words, "11", "11" in Figure 15A are made to be "11", "00" in Figure 19A. When the symbol rate is 256, 512, 1024ksps ($N_{pilot}$=16), there are four shaded pilot symbols. Therefore, the pilot symbols are STTD encoded by two shaded symbols, e.g., "$S_1$=$C_1$+j$C_2$, $S_2$=$C_3$+j$C_4$" of shaded symbol #1 and symbol #3 of Figure 19A, are STTD encoded into "$-S_2^*$=$-C_3$+j$C_4$" of symbol #1 and "$S_1^*$=$C_1$-j$C_2$" of symbol #3 of Figure 19A, and "$S_1$=$C_5$+j$C_6$, $S_2$=$C_7$+j$C_8$" of a third and a fourth shaded symbol #5 and symbol #7 of Figure 15A, are STTD encoded into "$-S_2^*$=$-C_7$+j$C_8$" of symbol #5 and "$S_1^*$=$C_5$-j$C_6$" of symbol #7 of Figure 19A. The non-shaded symbol #0, symbol #2, symbol #4, and symbol #6 of Figure 19A, are orthogonal to the non-shaded symbol #0, symbol #2, symbol #4, and symbol #6 of Figure 15A. That is, "11", "11", "11", "11" of Figure 15A are made into "11", "00", "11", "00" of Figure 19A.

The symbols of Figure 19A which is produced by applying the STTD encoding to the pilot symbol patterns in Figure 15A have the following characteristics. In Figure 15A, when the symbol rate is 8ksps ($N_{pilot}$=4), 16, 32, 64, or 128ksps ($N_{pilot}$=8), or 256, 512, or 1024ksps ($N_{pilot}$=16) , the shaded column sequences are classed into four PCSP 'E', 'F', 'G' or 'H' starting from the lowest symbol number, and the column sequences comprises words $C_1$, $C_2$, $C_3$, and $C_4$ and $C_5$, $C_6$, $C_7$, and $C_8$ in accordance with the preferred example system in an order corresponding to the classes, to express each PCSP as E={$C_1$, $C_5$} , F={$C_2$, $C_6$} , G={$C_3$, $C_7$}, and H={$C_4$, $C_8$}, as described above. Since the pilot symbol patterns of Figure 19A are the pilot symbol patterns in Figure 15A after the STTD encoding, when the symbol rate is 256, 512, or 1024ksps ($N_{pilot}$=16) , the column sequences are arranged in "-$C_3$, $C_4$, $C_1$, and -$C_2$" and "-$C_7$, $C_8$, $C_5$, -$C_6$" when the shaded column sequences are classed in 'E', 'F', 'G' and 'H' starting from the lowest symbol number. Hence, E={-$C_3$, -$C_7$}, F={$C_4$, $C_8$}, G={$C_1$, $C_5$}, and H={-$C_2$, -$C_6$}. Compare Figures 15B and 19B.

As per the non-shaded pilot symbol patterns, when each slot has 4 pilot bits, "10" is allocated to all slots of symbol #1. When each slot has 8 pilot bits, "11" is allocated to all slots of symbol #0, and "00" to all slots of symbol #2. When each slot has 16 pilot bits, "11" is allocated to all slots of symbol #0, "00" to all slots of slot #2, "11" is allocated to all slots of symbol #4, and "00" to all slots of symbol #6. Accordingly, cross correlation of the non-shaded symbols of Figure 19A, i.e., the column sequences having "10($N_{pilot}$=4 bits)", "11($N_{pilot}$=8 bits and $N_{pilot}$=16 bits)", or "00($N_{pilot}$-8 bits and $N_{pilot}$=16 bits)", with the shaded column sequences have values "0" for all time shifts " ". Further, when a slot has 4, 8, or 16 pilot bits, the example system arranges the pilot symbol patterns such that a cross correlation of a word of I channel branch and a word of a Q channel branch in every symbol number is "0" at a time shift " =0".

The above description of STTD encoding is readily applicable to downlink PCCPCH (compare Figures 16A and 19C) and downlink Secondary CCPCH (compare Figures 16C and 19E) for 16 slots. Further, the STTD encoding is readily applicable to downlink DPCH (compare Figures 24A and 24C) and downlink SCCPCH (compare Figures 25A and 25C) for 15 slots.

**First Embodiment for Odd Numbered Slots**

The present invention results in 15 slot-length pilot pattern having a minimum side lobe coefficient, and is optimal to frame synchronization for physical channel of up-link or down-link when the chip rate is 3.84Mcps instead of 4.09Mcps (16 slot-length). Such correlation characteristic of the pilot pattern can be alternatively explained based on the following for a slot length of $2l+1$ ($l$=1,2,3,4,...) including L=15 when $l$= 7.

First, when a length of a sequence having a minimum side lobe value is defined as $2l+1$ and the sequence with the length of $2l+1$ be $C_1$, the auto correlation value of $C_1$ is expressed by the following:

$$R_{C1}(j) = (2l+1) - 4z \qquad (4z=0,4,8,16,....) \qquad (20)$$

where the maximum auto correlation value of sequence $C_1$ is $2l+1$, and the auto correlation value corresponds to a value obtained by reducing a multiple of 4 from the maximum correlation value. Here, if $l$ is an odd number, e.g., $l$=7, $l$ may be expressed as $l=2i+1$ ($i$=0,1,2,3,...). Accordingly, equation (20) can be expressed as follows.

$$R_{C1}(j) = 2(2i+1) + 1 - 4z$$

$$= 4i + 3 - 4z$$

$$= 4(i-z+1) - 1$$

$$(21)$$

From equation (21), the sequence $C_1$ has the minimum correlation value of "-1" when $i$-z+1=1 (where, z≥1, $i$ ≥0). For example, $R_{C1}(j)$ =-1 when z=1 and $i$=0, or z=2 and $i$=1. The case for z=0 is not considered because the sequence $C_1$ has the maximum correlation value at the time point or time shift of "0". The minimum correlation value is referred to as minimum side lobe value because it corresponds to a correlation value at the side lobe, except for the time point of "0". If $l$ is an even number, $l$ may be expressed as $l=2i$ ($i$=1,2,3,...). Accordingly, equation (20) can be expressed as follows:

$$R_{C1}(j) = 2(2i) + 1 - 4z$$

$$= 4(i-z) + 1 \tag{22}$$

From equation (22), the sequence $C_1$ has the minimum correlation value of "1" when $i$-z=0 (where, z≥1, i≥1). For example, $R_{C1}(j)$ =1 when z=1 and i=1, or z=2 and i=2. The case for z=0 is not considered because the sequence $C_1$ has the maximum correlation value at the time point of "0". The auto correlation characteristic of the sequence $C_1$, represented by the following equations (23) and (24), is obtained from the equations (20), (21) and (22).

$$R_{c1}(j) = \begin{pmatrix} 2l + 1, \, j = 0 \\ 1, \, j \neq 0 \end{pmatrix} \quad (l = 1,3,5,\ldots)$$

$$R_{c1}(j) = \begin{pmatrix} 2l + 1, \, j = 0 \\ 1, \, j \neq 0 \end{pmatrix} \quad (l = 2,4,6,\ldots)$$

$$(23)$$

$$(24)$$

Another code sequence $C_2$ with a length of $2l$+1 can be defined by the following based on the code sequence $C_1$

$$C_2 = -T^{l+1} C_1 \tag{25}$$

where T represents left cyclic shift, "-" means inversion of a binary code which takes the complement of 1. In other words, $C_2$ is the code sequence obtained by cyclic-shifting of the code sequence $C_1$ by $l$+1 to the left and inverting the result of the cyclic-shifting. $C_1$ and $C_2$ have the following characteristic:

$$R_{C1,C2}(j) = R_{C2,C1}(j+1)$$

$$= -R_{C1}(j+l+1)$$

$$= -R_{C2}(j+l+1) \tag{26}$$

Based on equations (20) to (26), the following are obtained.

$$R_{C1}(j) + R_{C2}(j) = 2R_{C1}(j) \tag{27}$$

$$R_{C1,.C2}(j) + R_{C2,C1}(j+1) = -2R_{C1}(j+l+1) \tag{28}$$

If the code sequences $C_1$ and $C_2$ represent the auto correlation characteristic of equation (23), an auto correlation result, as shown in Figure 29B, is obtained when these code sequences are applied to equation (27), and an auto correlation result, as shown in Figure 30B, is obtained when they are applied to equation (28). As a result, frame synchronization can be confirmed by applying the code sequences $C_1$ and $C_2$ which have the minimum side lobe value and length of $2l+1$, to equations (27) and (28).

Figures 29A and 29B show the configuration of an apparatus and correlation result, respectively, for illustrating a frame synchronization method using an optimal pilot pattern based on the code sequences $C_1$ and $C_2$ being defined as follows.

$$C_1 = (C_{1,0}, C_{1,1}, C_{1,2}, \ldots, C_{1,l\cdots}, C_{1,\cdot 2l})$$

$$C_2 = (C_{2,0}, C_{2,1}, C_{2,2}, \ldots, C_{2,l\cdots}, C_{2,2l})$$

Referring to Figure 29A, a first matching filter 10 receives the code sequence $C_1$ to perform the auto correlation, thereby outputting the correlation result of equation (23) or (24). The first, matching filter 100 outputs the auto correlation result of equation (23) because the length of the sequences $C_1$ and $C_2$ is not an even number in the configuration of Figure 29A. A second matching filter 110 receives the code sequence $C_2$ and outputs the auto correlation result of equation (25). The outputs of first and second matching filters 100 and 110 are summed up to produce the result shown in Figure 29B. The sum is compared with a prescribed correlation threshold ($V_T$), and the time (0 or $2l+1$) when the sum exceeds the correlation threshold is considered as the point of time of detecting the frame synchronization.

Figures 30A and 30B show an apparatus and correlation result, respectively, for illustrating a frame synchronization method using an optimal pilot pattern. Matching filters 120 and 130 of Figure 30A perform cross correlation for input code sequences.

The third matching filter 120 receives the code sequence $C_2$ and carries out cross correlation with a weight for the code sequence $C_1$, assigned thereto. Accordingly, the result of equation (26), $-R_{C2}(j+l+1)$, is outputted from the third matching filter 120. The fourth matching filter 130 receives the code sequence $C_1$ and carries out cross correlation with a weight for the code sequence $C_2$, assigned thereto, thereby outputting the result of equation (26), $-R_{C2}(j+l+1)$ Here, the weight assigned to the fourth matching filter 130 corresponds to the value obtained by cyclic-shifting the code sequence $C_2$ to the left by 1.

The outputs of the third and fourth matching filters 120 and 130 are summed up, producing the result of Figure 30B. The sum is compared with a prescribed correlation threshold ($-V_T$), and the time ($l$) when the sum is lower than the correlation threshold is considered as the point of time of detecting the frame synchronization.

Figure 31 shows an apparatus which uses a frame synchronization method of an optimal pilot pattern according to another embodiment of the present invention. The apparatus of Figure 31 is a combination of the apparatuses of Figures 29A and 30B. Accordingly, the operations and outputs of matching filters 100, 110, 120 and 130 of Figure 31 are the same as those of Figures 29A and 30A. The apparatus of Figure 31 allows double check during frame synchronization detection, which is different from the apparatus of Figures 29A and 30A, due to maximum correlation results with polarities opposite to each other appearing at the point of time ($\tau$) of '0' and/or "$2l+1$" , and "$l$" . For example, when $l=7$ and L=15, the correlation result corresponds to Figures 22A and 22B.

Figures 32A and 32B show an apparatus and correlation result, respectively, using a frame synchronization method of an optimal pilot pattern according to another embodiment of the present invention. This apparatus adds up the sum of the auto correlation results according to first and second matching filters 100 and 110 of Figure 31 and the sum of the cross correlation results according to third and fourth matching filters 120 and 130 of Figure 31 and uses the added result for detecting the frame synchronization. The final result used for detecting the final frame synchronization is shown in Figure 32B. Such result is similar to even numbered slot length of L=16 illustrated in Figure 13A. Hence, similar to the apparatus of Figures 14D and 14G, where such apparatus can be also used for L=15, the apparatus of Figures 29, 30A and 32A can be readily applied to L=16.

In the apparatus configuration of Figure 33A, the final added result is compared with a prescribed correlation threshold, ($\pm V_T$), and the time when the result is higher or lower than the threshold is considered as the point of time of detecting the frame synchronization. In other words, double check during frame synchronization detection is achieved.

Figure 21 above illustrates a pilot pattern for frame synchronization detection in the physical channel in case that the chip rate of 3.84Mcps (L=15 slots) is used instead of 4.09Mcps in the physical channel of up-link or down-link.

When the auto correlation characteristic of the pilot pattern with the slot length of 15 of Figure 21 is applied to equation (23), the following equation (29) is obtained.

$$R_{C1}(\tau) = R_{C2}(\tau) = R_{C3}(\tau) = R_{C4}(\tau) = (15 \quad \tau=0, \quad -1 \quad \tau=0) \tag{29}$$

Since the length of each code sequence of Figure is 15, $I$ becomes 7 according to 15=2$I$+1. The maximum correlation value equals '15'. $R_{c1}(\tau)$, $R_{c2}(\tau)$, $R_{c3}(\tau)$ and $R_{c4}(\tau)$ correspond to auto correlation results of the code sequences $C_1$, $C_2$, $C_3$ and $C_4$. When these auto correlation results of the code sequences are combined and added up, the following equations (30) and (31) are obtained, which corresponds to Figures '22A, 22B and 22C, 22D, respectively.

$$R_{C1}(\tau) + R_{C2}(\tau) = R_{C3}(\tau) + R_{C4}(\tau) = (30 \quad \tau=0, \quad -2 \quad \tau\neq0) \tag{30}$$

$$R_{C1}(\tau) + R_{C2}(\tau) + R_{C3}(\tau) + R_{C4}(\tau) = (60 \quad \tau=0, \quad -4 \quad \tau\neq0) \tag{31}$$

The present invention performs auto correlation and cross correlation for the 15 slot-length code sequences having the above auto correlation characteristic by slots, adds up the correlation results, and uses the added value for frame synchronization detection. Hence, for uplink, the apparatus of Figures 29A, 30A, 31 and 32 can be readily applicable for L=15, and other odd numbered slots.

Based on above equations, the pilot patterns of Figures 23A, 23C, 23E and 23F for the uplink, Figures 23J for the RACH, and Figures 24A, 24C, 25A and 25C for the downlink are generated.

Each of the aforementioned exemplified code sequences $C_1$, $C_2$, $C_3$, $C_4$, $C_5$, $C_6$, $C_7$ and $C_8$ is assigned to each bit# or symbol# of the physical channel by slots, having the following characteristic. Firstly, the minimum correlation value appears when the point of time of delay is "0' in the cross correlation result of the code sequences of adjacent bits number or symbols number. Secondly, the minimum correlation value appears at the side lobe except for the point of time of delay of '0' in the auto correlation result of the code sequences $C_1$, $C_2$, $C_3$, $C_4$, $C_5$, $C_6$, $C_7$ and $C_8$. The code sequence $C_2$ is obtained by cyclic-shifting and inverting the code sequence $C_1$, and the $C_4$ is obtained by cyclic-shifting and inverting the $C_3$. This is for the purpose of facilitating double check during frame synchronization detection using the cross correlation result of the $C_1$ and $C_2$, or $C_3$ and $C_4$. The code sequences $C_5$, $C_6$, $C_7$ and $C_8$ are obtained by cyclic-shifting the code sequences $C_1$, $C_2$, $C_3$, $C_4$, respectively.

There will be explained below a method of detecting the frame synchronization using the pilot patterns with 15 slot-length in case of the symbol rate of 8Ksps ($N_{Pilot}$=4) in the down-link DPCH. The description based on $N_{pilot}$=4 for convenience, but such apparatus are readily applicable for other symbol rate/pilot bits for downlink DPCH, downlink DPCH with STTD, downlink SCCPCH and downlink SCCPCH with STTD. Figures 33A and 33B show an apparatus and correlation result, as a frame synchronization method according to a first embodiment of the present invention. A first matched filter 200 receives the code sequence $C_1$ of the I channel branch of the symbol#1 to perform auto correlation. The output corresponds to the result of equation (29). A second matched filter 210 receives the code sequence $C_2$ of the Q channel branch of the symbol#1 to carry out auto correlation, and outputs the same correlation result as the output of first matched filter 20. The outputs of first and second matched filters 200 and 210 are added up.

Simultaneously, a third matched filter 220 receives the code sequence $C_2$ of the Q channel branch of the symbol#1 to perform cross correlation with the weight for the code sequence $C_1$ assigned thereto. Accordingly, the third matched filter 220 outputs the cross correlation result which shows the maximum correlation value '-15' having the negative polarity at the point of time when the delay or time shift is '7', and shows the minimum correlation value '1' at the point of time of delay other than the time when the delay is '7'.

Fourth matched filter 230 accepts the code sequence $C_1$ of the I channel branch of the symbol#1 to carry out cross correlation with the weight for the code sequence $C_2$ assigned thereto, and outputs the same result as that of third matched filter 220. The weight assigned to third matched filter 220 is "$C_{1,14},......,C_{1,2}, C_{1,1}, C_{1,0}$", and the weight assigned to fourth matched filter 230 is "$C_{2,13}, ..... , C_{2,1, C2,0}, C_{2,14}$" which is obtained by cyclic-shifting the code sequence $C_2$ by 1 to the left. The outputs of third and fourth matched filters 22 and 23 are added up, producing the result of Figure 36B.

The sum of the auto correlation results according to first and second matched filters 200 and 210 is added to the sum of the cross correlation results according to third and fourth matched filters 220 and 230, to be used for frame synchronization. Figure 33B shows the result used for the final frame synchronization detection. In the apparatus of Figure 33A, the final result is compared with prescribed correlation thresholds ($\pm V_T$), and the point of time when the result is higher or lower than the threshold is considered as the point of time of detecting frame synchronization. In other words, double check is achieved during frame synchronization detection.

Figure 34 shows an apparatus using a frame synchronization method according to another embodiment of the present invention, when the symbol rate is 8Ksps ($N_{pilot}$=4) in the down-link DPCH. In the apparatus configuration of Figure 34, the sum of the auto correlation results according to first and second matched filters 200 and 210 is compared with a prescribed correlation threshold ($V_T$), and the point of time when the sum is higher than the threshold is considered as the point of time of detecting frame synchronization. Furthermore, the sum of the auto correlation results according to third and fourth matched filters 220 and 230 is compared with a prescribed correlation threshold (-$V_T$), and the point of time when the sum is lower than the threshold is considered as the point of time of detecting frame synchronization.

The apparatus of Figure 34 allows double checking during frame synchronization detection, similar to the apparatus of Figure 33A. The difference between the apparatuses of Figures 33 and 34 is that the comparison with the correlation threshold by the apparatus of Figure 34 is separately performed.

Figures 35A and 35B show an apparatus and correlation result, respectively, using a frame synchronization method when the symbol rate is 8Ksps ($N_{pilot}$=4) in the down-link DPCH. Referring to Figure 35A, a first matched filter 200 receives the code sequence $C_1$ of the I channel branch of the symbol#1 to perform auto correlation. Its output corresponds to the aforementioned equation (29). A second matched filter 21 receives the code sequence $C_2$ of the Q channel branch of the symbol#1 to carry out auto correlation, and outputs the same correlation result as the output of first matched filter 200. The outputs of first and second matched filters 200 and 210 are added up, producing the result shown in Figure 35B.

Figures 36A and 36B show an apparatus and correlation result, respectively, using a frame synchronization method when the symbol rate is 8Ksps ($N_{pilot}$=4) in the down-link DPCH. A third filter 220 receives the code sequence $C_2$ of the Q channel branch of the symbol#1 to perform cross correlation with the weight for the code sequence $C_1$ assigned thereto. Accordingly, it outputs the cross correlation result which shows the maximum correlation value '-15' having the negative polarity at the point of time when the delay is '7', and shows the minimum correlation value '1' at the point of time of delay other than the time when the delay is '7'. A fourth matched filter 23 accepts the code sequence $C_1$ of the I channel branch of the symbol#1 to carry out cross correlation with the weight for the code sequence $C_2$ assigned thereto, and outputs the same result as that of third matched filter 220.

Here, the weight assigned to third matched filter 220 is "$C_{1,14}$ ....... $C_{1,2}$, $C_{1,1}$, $C_{1,0}$", and the weight assigned to fourth matched filter 230 is "$C_{2,13}$, ......,$C_{2,1}$, $C_{2,0}$, $C_{2,4}$" which is obtained by cyclic-shifting the code sequence $C_2$ by 1 to the left. The outputs of third and fourth matched filters 220 and 230 are added up, producing the result shown in Figure 36B. The sum is compared with a prescribed correlation threshold (-$V_T$), and the point of time when the result is lower than the threshold is considered as the point of time of detecting frame synchronization.

The present invention can also allow double checking during frame synchronization detection using the apparatus configuration of Figure 33A. In a first case, the output (A) of first matched filter 200 and output (D) of third matched filter 220 are used for frame synchronization detection without any change of the inputs of matched filters 200, 210, 220 and 230. In a second case, the output (A) of first matched filter 200 and output (E) of fourth matched filter 230 are used for frame synchronization detection. In a third case, the output (B) of second matched filter 210 and output (D) of third matched filter 220 for detecting frame synchronization. In a fourth case, the output (B) of second filter 210 and output (E) of fourth filter 230 for frame synchronization detection. The correlation result used in the above four cases is shown in Figure 37.

Figure 38 shows a general apparatus using the frame synchronization method of an optimal pilot pattern according to the present invention for uplink and downlink. Referring to Figure 38, correlators 100', 110', 120' and 130' correlation-process input code sequences and output corresponding results. The aforementioned matched filter is an example of the correlator.

According to the frame synchronization method using an optimal pilot pattern of the present invention, the optimal pilot pattern with the length of 2$l$+1 having the minimum side lobe value can be applied without any change to frame synchronization detection when the chip rate of 3.8Mcps based on odd length slots is used in the up-link or down-link physical channels of the next generation mobile communication system. As can be appreciated, the apparatus illustrated above can be applied to other chip rates and chip rates based on even numbered slots, e.g., L=16. Accurate frame synchronization detection can be performed by adequately correlation-processing the pilot pattern with the length of 21+1. Moreover, double check in the frame synchronization detection is available, resulting in fast frame synchronization. This reduces searching time for synchronization.

## 1. Second Embodiments for Odd Numbered Slots

A method of confirming a frame synchronization through a use of correlation results based on respective slots is described in the following preferred embodiments. An optimum pilot pattern is used to confirm a frame synchronization, in using a chip ratio of 3.84Mcps instead of a chip ratio of 4.096Mcps as a length of 16 slots, in the physical channel of an up-link or down-link.

The pilot pattern of the 15-slot length shown in Figure 21 can be expressed based on a correlation process as shown below in Table 10.

**Table 10**

| column sequence (15-slots length) |
|---|
| $C_1$=(a1,a3,a5,....,a29)=(100011110101100) |
| $C_2$=(a2,a4,a6,....,a30)=(101001101110000) |
| $C_3$=(b1,b3,b5,....,b29)=(110001001101011) |
| $C_4$=(b2,b4,b6,....,b30)=(001010000111011) |
| $C_5$=(c1,c3,c5,....,c29)=(111010110010001) |
| $C_6$=(c2,c4,c6,....,c30)=(110111000010100) |
| $C_7$=(d1,d3,d5,....,d29)=(100110101111000) |
| $C_8$=(d2,d4,d6,....,d30)=(000011101100101) |

As described above, one of the important characteristics for the pilot patterns of the 15-slots length shown in Table 10, is the auto-correlation characteristic. The pilot patterns of the 15-slots length have the following auto-correlation characteristic of equation 30.

$$R_{C1}(\tau) = R_{C2}(\tau) = R_{C3}(\tau) = R_{C4}(\tau) = \begin{pmatrix} 15, & \tau = 0 \\ -1, & \tau \neq 0 \end{pmatrix} \qquad (30)$$

wherein $R_{c1}(\tau)$ indicates an auto-correlation result of a column sequence $C_1$, $R_{c2}(\tau)$ represents an auto-correlation result of a column sequence $C_2$, $R_{c3}(\tau)$ presents an auto-correlation result of a column sequence $C_3$, and $R_{c4}(\tau)$ provides an auto-correlation result of a column sequence $C_4$.

When the correlation results of these respective column sequences are combined and added up, the results are expressed as follows:

$$R_{C1}(\tau) + R_{C2}(\tau) + R_{C3}(\tau) + R_{C4}(\tau) = \begin{pmatrix} 30, & \tau = 0 \\ -2, & \tau \neq 0 \end{pmatrix} \qquad (31)$$

$$R_{C1}(\tau) + R_{C2}(\tau) + R_{C3}(\tau) + R_{C4}(\tau) = \begin{pmatrix} 60, & \tau = 0 \\ -4, & \tau \neq 0 \end{pmatrix} \qquad (32)$$

The auto-correlation result of the pilot pattern used in the present invention has the same value in all four of the following cases:

(1) when a sequence is circularly shifted;
(2) when a sequence is converted in time, and thereafter, is shifted circularly;
(3) when a sequence is converted into a complement number, and thereafter, is circularly shifted; and
(4) when a sequence is converted in time, thereafter, is converted into a complement number, and then circularly shifted.

In one of the preferred embodiments of the present invention, the column sequences or words of the 15-slot length are correlation-processed by each slot, and the correlation results are added up. Thereafter, the added result is compared with a correlation threshold $V_T$, and the frame synchronization is confirmed by checking the comparison result.

The following Table 11 shows correlation results per delay time point or time shift of the 15-slot length.

**Table 11**

| τ | 0 | 1 | 2 | 3 | 4 | 5 | 6 | 7 | 8 | 9 | 10 | 11 | 12 | 13 | 14 | 15 |
|---|---|---|---|---|---|---|---|---|---|---|----|----|----|----|----|----|
| R(τ) | 15 | -1 | -1 | -1 | -1 | -1 | -1 | -1 | -1 | -1 | -1 | -1 | -1 | -1 | -1 | -1 |

As shown in Table 11, in performing the correlation process by using the pilot pattern of the 15-slot length, the maximum correlation value 15 can be gained at the time point of 'τ=0', and the correlation value of -1 is obtained at the sidelobe. At this time, a correlation threshold $V_T$ is used in order to heighten an efficiency of a frame synchronization detection. In other words, it is regarded as the detection time point for gaining the frame synchronization, only when the auto-correlation result of the 15-slot length sequence is more than the correlation threshold value.

Based on Table 10, the pilot patterns of Figures 23E and 23F can be organized based on Tables 12 and 13, respectively, for uplink DPCH. Such organization is also readily applicable to all uplink, RACH and downlink pilot patterns described above for L=15.

**Table 12**

| | | Npilot = 5 | | | | | Npilot = 6 | | | | | |
|---|---|---|---|---|---|---|---|---|---|---|---|---|
| Bit# | 0 | 1 | 2 | 3 | 4 | 0 | 1 | 2 | 3 | 4 | 5 | |
| slot#1 | A1 | a2 | 1 | b1 | b2 | 1 | a1 | a2 | 1 | b1 | b2 | |
| slot#2 | A3 | a4 | 1 | b3 | b4 | 1 | a3 | a4 | 1 | b3 | b4 | |
| slot#3 | A5 | a6 | 1 | b5 | b6 | 1 | a5 | a6 | 1 | b5 | b6 | |
| slot#4 | A7 | a8 | 1 | b7 | b8 | 1 | a7 | a8 | 1 | b7 | b8 | |
| slot#5 | A9 | a10 | 1 | b9 | b10 | 1 | a9 | a10 | 1 | b9 | b10 | |
| slot#6 | All | a12 | 1 | b11 | b12 | 1 | all | a12 | 1 | b11 | b12 | |
| slot#7 | A13 | a14 | 1 | b13 | b14 | 1 | a13 | a14 | 1 | b13 | b14 | |
| slot#8 | A15 | a16 | 1 | b15 | b16 | 1 | a15 | a16 | 1 | b15 | b16 | |
| slot#9 | A17 | a18 | 1 | b17 | b18 | 1 | a17 | a18 | 1 | b17 | b18 | |
| slot#10 | A19 | a20 | 1 | b19 | b20 | 1 | a19 | a20 | 1 | b19 | b20 | |
| slot#11 | A21 | a22 | 1 | b21 | b22 | 1 | a21 | a22 | 1 | b21 | b22 | |
| slot#12 | A23 | a24 | 1 | b23 | b24 | 1 | a23 | a24 | 1 | b23 | b24 | |
| slot#13 | A25 | a26 | 1 | b25 | b26 | 1 | a25 | a26 | 1 | b25 | b26 | |
| slot#14 | A27 | a28 | 1 | b27 | b28 | 1 | a27 | a28 | 1 | b27 | b28 | |
| slot#15 | A29 | a30 | 1 | b29 | b30 | 1 | a29 | a30 | 1 | b29 | b30 | |
| | $C_1$ | $C_2$ | | $C_3$ | $C_4$ | | $C_1$ | $C_2$ | | $C_3$ | $C_4$ | |

**Table 13**

| | | Npilot = 7 | | | | | | | Npilot = 8 | | | | | | | |
|---|---|---|---|---|---|---|---|---|---|---|---|---|---|---|---|---|
| Bit# | 0 | 1 | 2 | 3 | 4 | 5 | 6 | 0 | 1 | 2 | 3 | 4 | 5 | 6 | 7 | |
| slot#1 | 1 | a1 | a2 | 1 | b1 | b2 | 1 | 1 | a1 | 1 | a2 | 1 | B1 | 1 | b2 | |
| slot#2 | 1 | a3 | a4 | 1 | b3 | b4 | 1 | 1 | a3 | 1 | a4 | 1 | B3 | 1 | b4 | |
| slot#3 | 1 | a5 | a6 | 1 | b5 | b6 | 1 | 1 | a5 | 1 | a6 | 1 | b5 | 1 | b6 | |
| slot#4 | 1 | a7 | a8 | 1 | b7 | b8 | 1 | 1 | a7 | 1 | a8 | 1 | b7 | 1 | b8 | |
| slot#5 | 1 | a9 | a10 | 1 | b9 | b10 | 1 | 1 | a9 | 1 | a10 | 1 | b9 | 1 | b10 | |
| slot#6 | 1 | a11 | a12 | 1 | b11 | b12 | 1 | 1 | a11 | 1 | a12 | 1 | b11 | 1 | b12 | |
| slot#7 | 1 | a13 | a14 | 1 | b13 | b14 | 1 | 1 | a13 | 1 | a14 | 1 | b13 | 1 | b14 | |
| slot#8 | 1 | a15 | a16 | 1 | b15 | b16 | 1 | 1 | a15 | 1 | a16 | 1 | b15 | 1 | b16 | |

(continued)

| Bit# | | Npilot = 7 | | | | | | Npilot = 8 | | | | | | | |
|---|---|---|---|---|---|---|---|---|---|---|---|---|---|---|---|
| | 0 | 1 | 2 | 3 | 4 | 5 | 6 | 0 | 1 | 2 | 3 | 4 | 5 | 6 | 7 |
| slot#9 | 1 | a17 | a18 | 1 | b17 | b18 | 1 | 1 | a17 | 1 | a18 | 1 | b17 | 1 | b18 |
| slot#10 | 1 | a19 | a20 | 1 | b19 | b20 | 1 | 1 | a19 | 1 | a20 | 1 | b19 | 1 | b20 |
| slot#11 | 1 | a21 | a22 | 1 | b21 | b22 | 1 | 1 | a21 | 1 | a22 | 1 | b21 | 1 | b22 |
| slot#12 | 1 | a23 | a24 | 1 | b23 | b24 | 1 | 1 | a23 | 1 | a24 | 1 | b23 | 1 | b24 |
| slot#13 | 1 | a25 | a26 | 1 | b25 | b26 | 1 | 1 | a25 | 1 | a26 | 1 | b25 | 1 | b26 |
| slot#14 | 1 | a27 | a28 | 1 | b27 | b28 | 1 | 1 | a27 | 1 | a28 | 1 | b27 | 1 | b28 |
| slot#15 | 1 | a29 | a30 | 1 | b29 | b30 | 1 | 1 | a29 | 1 | a30 | 1 | b29 | 1 | b30 |
| | | $C_1$ | $C_2$ | | $C_3$ | $C_4$ | | | $C_1$ | | $C_2$ | | $C_3$ | | $C_4$ |

Figures 39A and 39B depict an apparatus and correlation results, respectively, using a frame synchronization confirming method by using correlation results for each slot.

Table 14 sets forth an auto-correlation result [$PLc(\tau)$] represented at output A of a matched filter 100 shown in Figure 39A, and output B of a threshold comparator 90, in using the sequence of the 15-slots length shown in Table 10.

**Table 14**

| $\tau$ | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Slot# | 1 | 2 | 3 | 4 | 5 | 6 | 7 | 8 | 9 | 10 | 11 | 12 | 13 | 14 | 15 |
| A point | 15 | 1 | -1 | -1 | -1 | -1 | -1 | -1 | -1 | -1 | -1 | -1 | -1 | -1 | -1 |
| B point | H | L | L | L | L | L | L | L | L | L | L | L | L | L | L |

As shown in Figure 39B, in a case of performing the correlation process by using the pilot pattern of the 15-slots length, the maximum correlation value '15' can be gained at a time point of '$\tau$=0', and the minimum correlation value -1 is obtained at the sidelobe. The correlation threshold $V_T$ is set at a value less than the maximum correlation value '15', and it is regarded as a frame synchronization detection time point when the correlation result ($R_c(\tau)$] based on each delay time point $\tau$, from the matched filter 100, is more than the correlation threshold value.

If noise over '$V_T+1$' occurs in this case, an error detection in the frame synchronization occurs. Such error detection probability in the frame synchronization is decided from a relation between the correlation threshold and the sidelobe correlation value.

In Table 13, the output of the threshold comparator 90 according to a delay variable $\tau$ is represented in the apparatus of Figure 39A. In comparing the predetermined threshold $V_T$ in the threshold comparator 90 to the output of the matched filter 100, over the threshold $V_T$ is indicated as 'H' and under the threshold $V_T$ is provided as 'L'.

In the apparatus of Figure 39A, the frame synchronization can be confirmed, by checking the output of the threshold comparator 90 in the correlation result for any one out of the sequences based on individual slots, $C_1$, $C_2$, $C_3$ and $C_4$.

Figures 40A and 40B illustrate an apparatus and correlation results using a frame synchronization confirming method by each slot. Table 15 provides correlation values, ($R_{c1}(\tau)$] and [$R_{c2}(\tau)$], of outputs A and B of matched filters 200 and 210 of Figure 40A, in using the sequence of the 15-slots length of Table 10.

Table 15 illustrates a correlation value at output C, which is obtained by adding up output A of the first matched filter 200, [$R_{c1}(\tau)$], and output B of the second matched filter 210, [$R_{c2}(\tau)$], by an adder 220 and illustrates an output D of the threshold comparator 90, which is as a result obtained by comparing the correlation value of output C, [$R_{c1}(\tau)$]+ ($R_{c2}(\tau)$], with the predetermined correlation threshold value.

**Table 15**

| $\tau$ | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Slot# | 1 | 2 | 3 | 4 | 5 | 6 | 7 | 8 | 9 | 10 | 11 | 12 | 13 | 14 | 15 |
| A point | 15 | -1 | -1 | -1 | -1 | -1 | -1 | -1 | -1 | -1 | -1 | -1 | -1 | -1 | -1 |
| B point | 15 | -1 | -1 | -1 | -1 | -1 | -1 | -1 | -1 | -1 | -1 | -1 | -1 | -1 | -1 |

(continued)

| $\tau$ | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| C point | 30 | -2 | -2 | -2 | -2 | -2 | -2 | -2 | -2 | -2 | -2 | -2 | -2 | -2 | -2 |
| D point | H | L | L | L | L | L | L | L | L | L | L | L | L | L | L |

As shown in Figure 40B, in a case of performing the correlation process by using the pilot pattern of the 15-slots length, and then adding up two correlation results, the maximum correlation value '30' can be gained at a time point of '$\tau$=0', and the minimum correlation value -2 is obtained at the sidelobe. At this time, the correlation threshold $V_T$ is a value less than the maximum correlation value '30', and it is regarded as a frame synchronization detection time point when an added-up value $[R_{c1}(\tau)]+[R_{c2}(\tau)]$, of the correlation results based on each delay time point $\tau$, from the matched filters 200 and 210, is more than the correlation threshold value.

If noise over '$V_T$+2' occurs in this case, an error detection in the frame synchronization occurs. Such error detection probability in the frame synchronization is decided from a relation between the correlation threshold and the sidelobe correlation value.

In Table 15, the output D of the threshold comparator 90 according to a delay variable $\tau$ is represented in the apparatus illustrated in Figure 40A. In adding up the outputs of the matched filters 200 and 210 and comparing the predetermined threshold $V_T$ in the threshold comparator 40B to this added-up value $[R_{c1}(\tau)]+[R_{c2}(\tau)]$, over the threshold $V_T$ is indicated as 'H' and under the threshold $V_T$ is provided as 'L'.

In the apparatus of Figure 40A, the frame synchronization can be confirmed, by combining more than one correlation result for the sequences per slot, namely for $C_1$, $C_2$, $C_3$ and $C_4$, and checking the output of the threshold comparator 90 from the combined result.

Figures 41A and 41B illustrate an apparatus and correlation results using a frame synchronization confirming method by each slot.

Table 16 provides correlation values, $[R_{c1}(\tau)]$,$[R_{c2}(\tau)]$, $[R_{c3}(\tau)]$ and $[R_{c4}(\tau)]$ of outputs A, B, C and D of matched filters 300, 310, 320, and 330 shown in Figure 40A, in using the sequence of the 15-slots length shown in Table 10.

Table 16 also illustrates '$[R_{c1}(\tau)]+[R_{c2}(\tau)]+[R_{c3}(\tau)]+[R_{c4}(\tau)]$' of output E of the adder 340, which is the added-up result of all the outputs of the respective matched filters 300, 310, 320, and 330, and also indicates an output of a threshold comparator 90 which is as a result gained by comparing this added-up correlation result with a predetermined correlation threshold value.

**Table 16**

| $\tau$ | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Slot# | 1 | 2 | 3 | 4 | 5 | 6 | 7 | 8 | 9 | 10 | 11 | 12 | 13 | 14 | 15 |
| A point | 15 | -1 | -1 | -1 | -1 | -1 | -1 | -1 | -1 | -1 | -1 | -1 | -1 | -1 | -1 |
| B point | 15 | -1 | -1 | -1 | -1 | -1 | -1 | -1 | -1 | -1 | -1 | -1 | -1 | -1 | -1 |
| C point | 15 | -1 | -1 | -1 | -1 | -1 | -1 | -1 | -1 | -1 | -1 | -1 | -1 | -1 | -1 |
| D point | 15 | -1 | -1 | -1 | -1 | -1 | -1 | -1 | -1 | -1 | -1 | -1 | -1 | -1 | -1 |
| E point | 60 | -4 | -4 | -4 | -4 | -4 | -4 | -4 | -4 | -4 | -4 | -4 | -4 | -4 | -4 |
| F point | H | L | L | L | L | L | L | L | L | L | L | L | L | L | L |

As shown in Figure 41B in a case of performing the correlation process by using the pilot pattern of the 15-slots length, and then adding up its all correlation results, the maximum correlation value '60' can be gained at a time point of '$\tau$=0', and the minimum correlation value -4 is obtained at the sidelobe. At this time, the correlation threshold $V_T$ is determined as a value less than the maximum correlation value '60', and it is regarded as a frame synchronization detection time point when the added-up value of the correlation results based on each delay time point $\tau$, from the respective matched filters 300, 310, 320, 330, is more than the correlation threshold value.

If noise over '$V_T$+4' occurs in this case, an error detection in the frame synchronization occurs. Such error detection probability in the frame synchronization is decided from a relation between the correlation threshold value and the sidelobe correlation value.

In Table 16, the output of the threshold comparator 90 according to a delay variable $\tau$ is represented in the construction of the apparatus illustrated in Figure 40A. In adding up the outputs of the matched filters 300, 310, 320, and 330, and comparing the predetermined correlation threshold $V_T$ in the threshold comparator 90 to this added-up value, over the threshold $V_T$ is indicated as 'H' and under the threshold $V_T$ is provided as 'L'.

In the apparatus of Figure 41A, the frame synchronization can be confirmed, by adding up all auto-correlation results for the sequences per slot, namely for $C_1$, $C_2$, $C_3$ and $C_4$, and checking the output of the threshold comparator 90 from this added-up result.

As above-mentioned, the matched filters, 100, 200, 210, 300, 310, 320, and 330, use coefficients of the same length for the inputted sequences of the 15-slots length in the equipmental construction shown in Figures 39A, 40A and 41A

**Alternative Embodiment of Uplink and Downlink Apparatus for Frame Synchronization**

The frame synchronization words of Figure 21 are used for the frame synchronization detection, in case of using 15 slots per frame. To use the frame synchronization words of Figure 21 for the frame synchronization detection, the following arrangement features are preferable.

The number of bit values '0' or '1' is greater by 1 than the number of bit values '1' or '0' in each code sequence $C_1$, $C_2$, $C_3$, $C_4$, $C_5$, $C_6$, $C_7$, $C_8$ to allow (1) the correlation value between the pilot sequences at all delay time points to be a minimum value when the pilot sequence all having the bit value '1' is inserted between the shaded sequences of uplink and dowlink, and (2) the pilot sequences to have the minimum correlation value between the pilot sequences at all delay time points or time shifts when the code sequence all having the bit value '0' is inserted between the pilot sequences $C_1$, $C_2$, $C_3$, $C_4$, $C_5$, $C_6$, $C_7$, $C_8$.

Further, each pilot sequences $C_1$, $C_2$, $C_3$, $C_4$, $C_5$, $C_6$, $C_7$, $C_8$ are designed to have the minimum correlation value between the pilot sequences (for example, $C_1$ and $C_2$, $C_2$ and $C_3$,...) adjacent to each other at the delay time point of '0'. The pilot sequences $C_5$, $C_6$, $C_7$ and $C_8$ are formed by the shifting of the pilot sequences $C_1$, $C_2$, $C_3$ and $C_4$. In other words, the pilot sequences $C_5$, $C_6$, $C_7$ and $C_8$ are formed by shifting the pilot sequences $C_1$, $C_2$, $C_3$ and $C_4$, have the minimum correlation value between the pilot sequences adjacent to each other at the delay time point of '0'.

Each pilot sequence $C_1$, $C_2$, $C_3$, $C_4$, $C_5$, $C_6$, $C_7$, $C_8$ is designed to have the minimum correlation value at any delay time point except at the delay time point of '0'.

The correlation value between the pilot sequences $C_1$ and $C_2$ has a maximum value having a negative polarity at an intermediate delay time point, and the correlation value between the pilot sequences $C_2$ and $C_1$ has a minimum value at any delay time point except at the intermediate delay time point. The correlation value between the pilot sequences $C_3$ and $C_4$ has a maximum value having a negative polarity at an intermediate delay time point, and the correlation value between the pilot sequences $C_4$ and $C_3$ has a minimum value at any delay time point except at the intermediate delay time point.

The correlation value between the pilot sequences $C_5$ and $C_6$ has a maximum value having a negative polarity at an intermediate delay time point, and the correlation value between the pilot sequences $C_6$ and $C_5$ has a minimum value at any delay time point except at the intermediate delay time point. The correlation value between the pilot sequences $C_7$ and $C_8$ has a maximum value having a negative polarity at an intermediate delay time point, and the correlation value between the pilot sequences $C_8$ and $C_7$ has a minimum value at any delay time point except at the intermediate delay time point.

Particularly, the pilot sequence $C_1$ is shifted and inverted to generate the pilot sequence $C_2$. The pilot sequence $C_3$ is shifted and inverted to generate the pilot sequence $C_4$. The pilot sequence $C_5$ is shifted and inverted to generate the pilot sequence $C_6$. The pilot sequence $C_7$ is shifted and inverted to generate the pilot sequence $C_8$.

The frame synchronization words of Figure 21 are designed based upon the above arrangement characteristics for use frame synchronization detection of uplink and downlink channels, and particularly, for double checking the frame synchronization detection.

As appreciated from the above arrangement characteristics, each pilot sequence of the frame synchronization words exhibits a self-correlation feature as follows:

$$R_{Ci}(\tau) = \begin{pmatrix} 15, \tau = 0 \\ -1, \tau \neq 0 \end{pmatrix}$$

$$(33)$$

where i = 1, 2, 3,..., 8, and $R_{ci}(\tau)$ represents self-correlation functions of each pilot sequence $C_1$ to $C_8$. As described above, the words are divided into PCSP of E, F, G and H.

The pairs of pilot sequences {Ci, Cj} contained in the same class, e.g. {$C_1$, $C_2$}, {$C_3$, C4}, {$C_5$, $C_6$}, and {$C_7$, $C_8$} have the cross-correlation characteristic as follows:

$$R_{C_j, C_i}(\tau) = \begin{pmatrix} -15, \tau = 7 \\ 1, \tau \neq 7 \end{pmatrix}$$

$$(34)$$

where i = 1 & j = 2, i = 3 & j = 4, i = 5 & j = 6, and i = 7 & j = 8.

$$R_{C_j, C_i}(\tau + 1) = \begin{pmatrix} -15, \tau = 7 \\ 1, \tau \neq 7 \end{pmatrix}$$

$$(35)$$

where j = 2 & i = 1, j = 4 & i = 3, j = 6 & i = 5, and j = 8 & i = 7.

In equation (34), $R_{ci,cj}(\tau)$ represents a cross-correlation function between the pair of code sequences in each class. In equation (35), $R_{cj,ci}(\tau+1)$ is a function of the cross-correlation of the code sequence $C_i$ with the code sequence $C_j$ shifted by a length of bit '1'.

The combination of the self-correlation feature of equation (33) with the cross-correlation feature of the equations (34) and (35) is given by the following:

$$\sum_{i=1}^{\alpha} R_{C_i}(\tau) = \begin{pmatrix} \alpha \cdot 15, & \tau = 0 \\ -\alpha, & \tau \neq 0 \end{pmatrix},$$

$$(36)$$

where $\alpha$ = 1, 2, 3, ..., 8.

$$\sum_{i=1}^{\alpha/2} [R_{C_{2i-1}, C_{2i}}(\tau) + R_{C_{2i}, C_{2i-1}}(\tau + 1)] = \begin{pmatrix} -\alpha \cdot 15, & \tau = 7 \\ \alpha, & \tau \neq 7 \end{pmatrix},$$

$$(37)$$

where $\alpha$ = 2, 4, 6, 8.

Figures 42A and 42B are graphs illustrating an embodiment of correlation results using a pilot pattern in accordance with a preferred embodiment and Figures 43A and 43B are graphs illustrating another embodiment of correlation results using a pilot pattern in accordance with a preferred embodiment.

The correlation results in Figures 42A to 43B are obtained from the equations (36) and (37), where Figures 42A and 42B show the correlation results when $\alpha$ = 2 in equations (36) and (37) and Figures 43A and 43B shows the correlation results when $\alpha$ = 4 in equations (36) and (37).

In more detail, Figure 42A shows the added result of the self-correlation functions when a = 2 in equation (36), and Figure 42B shows the added result of the cross-correlation functions when $\alpha$ = 2 in equation (37). Figure 43 shows the added result of the self-correlation functions when $\alpha$= 4 in equation (36) and Figure 43B shows the added result of the cross-correlation functions when $\alpha$ = 4 in equation (37).

With the observation of each correlation result in Figures 42A to 43B, a single check is executed upon the frame synchronization detection, and with the concurrent observation of the self-correlation and cross-correlation results in Figures 42A to 43B, a double check is executed upon the frame synchronization detection. Based on the above, the pilot patterns and pilot symbols of L=15, as described above, for uplink and downlink are generated.

The frame synchronization words, preferably, 8 words, of Figure 21 are generated from a single pilot sequence. The relationship between the frame synchronization words is given by the following equation (38). In more detail, the relationship between the pilot sequence $C_1$ and the other pilot sequences is given.

$$C_1(t+j+\tau) = -C_2(t+j+\tau+7)$$

$$= C_3(t-j-\tau+5)$$

$$= -C_4(t-j-\tau+12)$$

$$= C_5(t+j+\tau+10)$$

$$= -C_6(t+j+\tau+2)$$

$$= C_7(t-j-\tau)$$

$$= -C_8(t-j-\tau+7) \tag{38}$$

In equation (38), the pilot sequence $C_1$ is generated by inverting, cyclic shifting, or reversing the other code sequences.

Based upon equation (38), when $\alpha = 8$ in equation (36), the added result of the self-correlation functions is given by the following equation (40). Before calculating the added result, however, the sum (S) of the eight pilot sequences should be obtained by equation (39):

$$S(t+j+\tau) = C_1(t+j+\tau) - C_2(t+j+\tau+7) + C_3(t-j-\tau+5)$$

$$-C_4(t-j-\tau+12) + C_5(t+j+\tau+10) - C_6(t+j+\tau+2)$$

$$+C_7(t-j-\tau) - C8(t-j-\tau+7) = 8C_1(t+j+\tau) \tag{39}$$

By using equation (39), equation (36) can be expressed as equation (40), in case of $\alpha = 8$.

$$\sum_{i=1}^{8} R_{C_i}(\tau) = \sum_{i=1}^{8} \sum_{j=0}^{14} C_i(t+j) C_i(t+j+\tau)$$

$$= \sum_{j=0}^{14} C_1(t+j) \cdot [C1(t+j+\tau) - C2(t+j+\tau+7)$$

$$+ C3(t-j-\tau+5) - C4(t-j-\tau+12)$$

$$+ C5(t+j+\tau+10) - C6(t+j+\tau+2)$$

$$+ C7(t-j-\tau) - C8(t-j-\tau+7)]$$

$$= \sum_{j=0}^{14} C_1(t+j) \cdot S(t+j+\tau)$$

$$(40)$$

Assuming that the pilot sequences $C_1$, $C_2$, $C_3$, $C_4$, $C_5$, $C_6$, $C_7$, $C_8$ are defined by following equation (41), the index processed relation of equation (42) is given from equation (38).

$$C_1 = (C_{1,0}, C_{1,1}, \ldots, C_{1,14})$$

$$C_2 = (C_{2,0}, C_{2,1}, \ldots, C_{2,14})$$

$$C_3 = (C_{3,0}, C_{3,1}, \ldots, C_{3,14})$$

$$C_4 = (C_{4,0}, C_{4,1}, \ldots, C_{4,14})$$

$$C_5 = (C_{5,0}, C_{5,1}, \ldots, C_{5,14})$$

$$C_6 = (C_{6,0}, C_{6,1}, \ldots, C_{6,14})$$

$$C_7 = (C_{7,0}, C_{7,1}, \ldots, C_{7,14})$$

$$C_8 = (C_{8,0}, C_{8,1}, \ldots, C_{8,14}) \qquad (41)$$

$$C_{1,(j+\tau)(\text{mod}\,15)} = -C_{2,(j+\tau+7)(\text{mod}\,15)}$$

$$= C_{3,(-j-\tau+5)(\text{mod}\,15)}$$

$$= -C_{4,(-j-\tau+12)(\text{mod}\,15)}$$

$$= C_{5,(j+\tau+10)(\text{mod}\,15)}$$

$$= -C_{6,(j+\tau+2)(\text{mod}\,15)}$$

$$= C_{7,(-j-\tau)(\text{mod}\,15)}$$

$$= -C_{8,(-j-\tau+7)(\text{mod}\,15)}$$

$$(42)$$

By using the above, a correlation processing apparatus for the frame synchronization according to the present invention is embodied. In the correlation processing apparatus of the present invention, the eight frame synchronization words are stored in a memory, and at this time, if the index (i, j) of each pilot sequence represents a memory address, the relation between the frame synchronization words stored in the memory is based on equation (42)

Figure 44 illustrates the correlation processing apparatus for the uplink channel in accordance with a preferred embodiment of the present invention, in which a single check for each slot is executed upon the frame synchronization detection.

As an example, the number of pilot bits $N_{pilot}$ is 6 and the number of pilot sequences inputted for the frame synchronization detection is 4 in the correlation apparatus of Figure 44. In other words, $\alpha = 4$, so the pilot sequences $C_1$ to $C_4$ of Figure 21 are used.

Hence, the equation (40) is transformed into the following equation (43):

$$\sum_{i=1}^{4} R_{C,}(\tau) = \sum_{i=1}^{4} \sum_{j=0}^{14} C_i(t+j) C_i(t+j+\tau)$$

$$= \sum_{j=0}^{14} C_1(t+j) \cdot [C1(t+j+\tau) - C2(t+j+\tau+7)$$

$$+ C3(t-j-\tau+5) - C4(t-j-\tau+12)]$$

$$(43)$$

Since the characteristics of the frame synchronization words as indicated in equation (43) are utilized in the present invention, the correlation processing apparatus of Figure 44 implements a single correlator for the frame synchronization detection.

A signal in one frame unit of the uplink dedicated physical control channel is received, and the demodulated column sequences of the bit#1, bit#2, bit#4 and bit#5 in the pilot pattern of Figure 23E are inputted in the order of the slot number.

The four column sequences are inputted to a memory mapping/addressing block, in which the column sequences are stored in the frame unit and shifted and reversed by using the cross-correlation between the frame synchronization words of equation (42). In this case, the column sequences stored in the frame unit are given by the following equation (44). At this time, the index (i, j) of each column sequence represents the memory address.

$$\tilde{C}_1 = (\ \tilde{C}_{1,0},\ \tilde{C}_{1,1}, \cdots, \tilde{C}_{1,14})$$

$$\tilde{C}_2 = (\ \tilde{C}_{2,0},\ \tilde{C}_{2,1}, \cdots, \tilde{C}_{2,14})$$

$$\tilde{C}_3 = (\ \tilde{C}_{3,0},\ \tilde{C}_{3,1}, \cdots, \tilde{C}_{3,14})$$

$$\tilde{C}_4 = (\ \tilde{C}_{4,0},\ \tilde{C}_{4,1}, \cdots, \tilde{C}_{4,14}) \tag{44}$$

Each column sequence in equation (44) is shifted and reversed by the memory mapping/addressing block and then outputted. The outputs from the memory mapping/addressing block are added to provide the result value 'S1' as indicated by equation (45) to the correlator.

$$S1 = \tilde{C}_{1,(j+r)(\text{mod}\,15)} - \tilde{C}_{2,(j+r+7)(\text{mod}\,15)} + \tilde{C}_{3,(-j-r+5)(\text{mod}\,15)}$$
$$- \tilde{C}_{4,(-j-r+12)(\text{mod}\,15)} \tag{45}$$

The correlator correlates the previously stored pilot sequence $C_1$ and the result value 'S1' in equation (45) to thereby detect the frame synchronization. At this time, the correlated result is shown in Figure 43A and with the observation of the correlated result, a single check can be achieved upon the frame synchronization detection.

Figure 45 is a correlation processing apparatus for the downlink in accordance with a preferred embodiment of the present invention, in which the single check for each slot is executed upon the frame synchronization detection.

In this example, the symbol rate is 256, 512, 1024Ksps ($N_{pilot}$=16) , and the number of code sequences inputted for the frame synchronization detection is 8 in Figure 45. In other words, $\alpha = 8$, so the code sequences $C_1$ to $C_8$ of Figure 21 are used. The column sequences, which are mapped with the branch stream of each channel I or Q of the first, third, fifth and seventh pilot symbols(symbol#1, symbol#3, symbol#5, and symbol#7) are utilized.

Thus, equation (40) is used without any transformation, and the characteristics of the frame synchronization words as indicated in equation (40) are utilized. As a result, the correlation processing apparatus of Figure 45 implements a single correlator for the frame synchronization detection.

Referring to Figure 45, a signal in one frame unit of the downlink dedicated physical control channel is received, and the demodulated column sequences of the symbol#l, symbol#3, symbol#5, and symbol#7 in the pilot pattern of Figure 24A are inputted in the order of the slot number.

The eight column sequences are inputted to a memory mapping/addressing block, in which the column sequences are stored in the frame unit and shifted and reversed by using the cross-correlation between the frame synchronization words of equation (42). In this case, the column sequences stored in the frame unit are given by the following equation (46). At this time, the index (i, j) of each column sequence represents the memory address.

$$\hat{C}_1 = (\hat{C}_{1,0}, \hat{C}_{1,1}, \ldots, \hat{C}_{1,14})$$

$$\hat{C}_2 = (\hat{C}_{2,0}, \hat{C}_{2,1}, \ldots, \hat{C}_{2,14})$$

$$\hat{C}_3 = (\hat{C}_{3,0}, \hat{C}_{3,1}, \ldots, \hat{C}_{3,14})$$

$$\hat{C}_4 = (\hat{C}_{4,0}, \hat{C}_{4,1}, \ldots, \hat{C}_{4,14})$$

$$\hat{C}_5 = (\hat{C}_{5,0}, \hat{C}_{5,1}, \ldots, \hat{C}_{5,14})$$

$$\hat{C}_6 = (\hat{C}_{6,0}, \hat{C}_{6,1}, \ldots, \hat{C}_{6,14})$$

$$\hat{C}_7 = (\hat{C}_{7,0}, \hat{C}_{7,1}, \ldots, \hat{C}_{7,14})$$

$$\hat{C}_8 = (\hat{C}_{8,0}, \hat{C}_{8,1}, \ldots, \hat{C}_{8,14})$$

$$(46)$$

Each column sequence in the above equation (46) is shifted and reversed by the memory mapping/addressing block and then outputted. The outputs from the memory mapping/addressing block are added to provide the result value 'S2' as indicated by the following equation (47) to the correlator.

$$S2 = \widetilde{C}_{1,(j+r)(\mathrm{mod}\,15)} - \widetilde{C}_{2,(j+r+7)(\mathrm{mod}\,15)} + \widetilde{C}_{3,(-j-r+5)(\mathrm{mod}\,15)}$$

$$- \widetilde{C}_{4,(-j-r+12)(\mathrm{mod}\,15)} + \widetilde{C}_{5,(j+r+10)(\mathrm{mod}\,15)} - \widetilde{C}_{6,(j+r+2)(\mathrm{mod}\,15)}$$

$$+ \widetilde{C}_{7,(-j-r)(\mathrm{mod}\,15)} - \widetilde{C}_{8,(-j-r+7)(\mathrm{mod}\,15)}$$

$$(47)$$

The correlator correlates the previously stored pilot sequence $C_1$ and the result value 'S2' of equation (47) to thereby detect the frame synchronization. At this time, the correlated result of Figure 46 and with the observation of the correlated result, a single check can be achieved upon the frame synchronization detection.

In the frame synchronization confirming method through a use of correlation results per slot, the frame synchronization is confirmed by using the respective correlation process results added up properly in the sequence of the 15-slots length, to thereby reduce a probability for a frame synchronization error detection caused due to an occurrence of noise.

In addition, in using a chip ratio of 3.84Mcps in up-link and down-link of a mobile communication system, a pilot sequence of the 15-slots length is used as it is to perform a correlation process and confirm the frame synchronization from an adding-up result of its correlation results. Accordingly, the frame synchronization can be confirmed by a simple construction of the apparatus.

The correlation processing apparatus for the uplink and downlink channels according to the present invention adds the code sequences, while having different specific time delay and upward/downward ordering for each code sequence. Upon the addition of the code sequences, each sequence suffers from various kinds of channel characteristic to thereby obtain a time diversity effect.

In the case where the size of the code sequence stored is smaller than two frames, the continuity of the sequence by code sequences may be disconnected upon the correlation processing. However, the discontinuity of the sequence can provide the time diversity effect.

The number of the code sequences added is 2 or 3 or more, and in the case where the code sequences in the order of same the memory can be reduced. In contrast, in the case where the code sequences in the order of different direction are combined, the time diversity can be obtained by the discontinuity of the sequence.

In the case where the code sequences where the time delay difference is small are combined, the size of the memory can be reduced. In contrast, in the case where the code sequences where the time delay difference is large are combined, the time diversity can be obtained.

As discussed above, a frame synchronization apparatus and method using an optimal pilot pattern according to the present invention can use a single correlator in the uplink or downlink, irrespective of the number of the code sequences used, to thereby render the hardware for the frame synchronization at the receiving side substantially simple.

In addition, the simplified hardware construction does not require any complicated software, so the frame synchronization can be detected in a simple manner.

The foregoing embodiments are merely exemplary and are not to be construed as limiting the present invention. The present teaching can be readily applied to other types of apparatuses. The description of the present invention is intended to be illustrative, and not to limit the scope of the claims.

**Claims**

1. A frame synchronization method for a plurality of transmitted frames, each frame comprising $2l+1$ respective slots, where $l$ is an integer greater than or equal to 1, each slot comprising a respective bit from a first pilot bit sequence of length $2l+1$ bits and a respective bit from a second pilot bit sequence of length $2l+1$ bits, wherein the second pilot bit sequence is a cyclic-shifted and inverted version of the first pilot bit sequence, wherein the shift by which the second pilot bit sequence is cyclic-shifted is l+1 bits to the left, the method comprising the steps of:

   receiving the transmitted frames;
   obtaining from the received frames a first code sequence and a second code sequence, each of length $2l+1$ bits;
   performing a first auto correlation between the first received code sequence and the first pilot bit sequence;
   performing a second auto correlation between the second received code sequence and the second pilot bit sequence;
   performing a first cross correlation between the second received code sequence and the first pilot bit sequence;
   performing a second cross correlation between the first received code sequence and the second pilot bit sequence which is shifted by one bit;
   summing the outputs of the first auto correlation with corresponding outputs of the second auto correlation to form first summation values;
   summing the outputs of the first cross correlation with corresponding outputs of the second cross correlation to form second summation values; and
   detecting frame synchronization based on a point, at a time shift of 0, at which a first summation value exceeds a threshold value $V_T$ and a point, at a time shift of 1, at which a second summation value is less than $-V_T$.

2. The method of claim 1, wherein the outputs of the first auto correlation have the same characteristic as the outputs of the second auto correlation.

3. The method of claim 1, wherein the outputs of the first cross correlation have the same characteristic as the outputs of the second cross correlation.

**Patentansprüche**

1. Frame-Synchronisations-Verfahren für eine Mehrzahl von übertragenen Frames, wobei jeder Frame 2l+1 jeweilige Slots umfasst,
   wobei l eine ganze Zahl größer oder gleich 1 ist,
   und wobei jeder Slot ein jeweiliges Bit aus einer ersten Haupt-Bit-Sequenz mit einer Länge von 2l+1 Bits und ein jeweiliges Bit aus einer zweiten Haupt-Bit-Sequenz mit einer Länge von 2l+1 Bits umfasst,
   wobei die zweite Haupt-Bit-Sequenz eine zyklisch verschobene und invertierte Version der ersten Haupt-Bit-Sequenz ist,

wobei die Verschiebung, um welche die zweite Haupt-Bit-Sequenz zyklisch verschoben ist, l+1 Bits nach links beträgt, wobei das Verfahren die folgenden Schritte umfasst:

Empfangen der übertragenen Frames;
Erhalten einer ersten Code-Sequenz und einer zweiten Code-Sequenz aus den empfangenen Frames, wobei jede eine Länge von 2l+1 Bits aufweist;
Durchführen einer ersten Auto-Korrelation zwischen der ersten empfangenen Code-Sequenz und der ersten Haupt-Bit-Sequenz;
Durchführen einer zweiten Auto-Korrelation zwischen der zweiten empfangenen Code-Sequenz und der zweiten Haupt-Bit-Sequenz;
Durchführen einer ersten Kreuz-Korrelation zwischen der zweiten empfangenen Code-Sequenz und der ersten Haupt-Bit-Sequenz;
Durchführung einer zweiten Kreuz-Korrelation zwischen der ersten empfangenen Code-Sequenz und der zweiten Haupt-Bit-Sequenz, welche um ein Bit verschoben ist;
Summieren der Ausgaben der ersten Auto-Korrelation mit entsprechenden Ausgaben der zweiten Auto-Korrelation, um erste Summations-Werte zu bilden;
Summieren der Ausgabe der ersten Kreuz-Korrelation mit entsprechenden Ausgaben der zweiten Kreuz-Korrelation, um zweite Summations-Werte zu bilden; und
Detektieren von Frame-Synchronisation basierend auf einem Punkt, zu einer Zeit-Verschiebung von 0, bei welcher ein erster Summations-Wert einen Schwellwert $V_T$ überschreitet, und zu einer Zeit-Verschiebung von 1, bei welcher ein zweiter Summations-Wert kleiner als $-V_T$ ist.

2. Verfahren nach Anspruch 1,
wobei die Ausgaben der ersten Auto-Korrelation dieselbe Charakteristik aufweisen wie die Ausgaben der zweiten Auto-Korrelation.

3. Verfahren nach Anspruch 1,
wobei die Ausgaben der ersten Kreuz-Korrelation dieselbe Charakteristik aufweisen wie die Ausgaben der zweiten Kreuz-Korrelation.

**Revendications**

1. Procédé de synchronisation de trames pour une pluralité de trames émises, chaque trame comprenant 2$l$+1 créneaux, où $l$ est un entier égal ou supérieur à 1, chaque créneau comprenant un bit respectif issu d'une première séquence de bits pilotes d'une longueur de 2$l$+1 bits et un bit respectif issu d'une seconde séquence de bits pilotes d'une longueur de 2$l$+1 bits, dans lequel la seconde séquence de bits pilotes est une version décalée cycliquement et inversée de la première séquence de bits pilotes, dans lequel le décalage dont est décalée cycliquement la seconde séquence de bits pilotes est de $l$+1 vers la gauche, le procédé comprenant les étapes consistant à :

recevoir les trames émises ;
obtenir à partir des trames reçues une première séquence de code et une seconde séquence de code, toutes deux d'une longueur de 2$l$+1 bits ;
réaliser une première autocorrélation entre la première séquence de code reçue et la première séquence de bits pilotes ;
réaliser une seconde autocorrélation entre la seconde séquence de code reçue et la seconde séquence de bits pilotes ;
réaliser une première corrélation croisée entre la seconde séquence de code reçue et la première séquence de bits pilotes ;
réaliser une seconde corrélation croisée entre la première séquence de code reçue et la seconde séquence de bits pilotes qui est décalée d'un bit ;
totaliser les sorties de la première autocorrélation et les sorties correspondantes de la seconde autocorrélation afin de former des premières valeurs totalisées ;
totaliser les sorties de la première corrélation croisée et les sorties correspondantes de la seconde corrélation croisée afin de former des secondes valeurs totalisées ;
détecter la synchronisation des trames sur la base d'un point, à un décalage temporel de 0, où une première valeur totalisée dépasse une valeur de seuil $V_T$ et d'un point, à un décalage temporel de 1, où une seconde valeur totalisée est inférieure à $-V_T$.

**2.** Procédé selon la revendication 1, dans lequel les sorties de la première autocorrélation ont la même caractéristique que les sorties de la seconde autocorrélation.

**3.** Procédé selon la revendication 1, dans lequel les sorties de la première corrélation croisée ont la même caractéristique que les sorties de la seconde corrélation croisée.

# FIG.1

# FIG.2

shadowing

distance
attenuation

multipath

# FIG.3

slot

| Pilot | Data | Pilot | Data |
|-------|------|-------|------|

$N_P$
symbols

$N_D$
symbols

coded data symbols

pilot symbols

MUX → spreading and modulation →

→ correlator bank → DEMUX → Detection and RAKE combiner → channel decoding →

# FIG.4

DPDCH

| Data $N_{data}$ bits |
|---|

|  | 21 | 22 | 23 | 24 |
|---|---|---|---|---|
| DPCCH | Pilot $N_{pilot}$ bits | TFCI $N_{TFCI}$ bits | FBI $N_{FBI}$ bits | TPC $N_{TPC}$ bits |

$T_{slot}=0.625ms, \ 10*2^k \ bits(k=0..6)$

| slot#1 | slot#2 | | slot#i | | slot#16 |
|---|---|---|---|---|---|

$T_f=10ms$

| frame#1 | frame#2 | | frame#i | | frame#72 |
|---|---|---|---|---|---|

$T_{super}=720ms$

# FIG.5

| Channel Bit Rate(kbps) | Channel Symbol Rate(ksps) | SF | Bits/ Frame | Bits/ Slot | $N_{pilot}$ | $N_{TPC}$ | $N_{TFCI}$ | $N_{FBI}$ |
|---|---|---|---|---|---|---|---|---|
| 16 | 16 | 256 | 160 | 10 | 6 | 2 | 2 | 0 |
| 16 | 16 | 256 | 160 | 10 | 8 | 2 | 0 | 0 |
| 16 | 16 | 256 | 160 | 10 | 5 | 2 | 2 | 1 |
| 16 | 16 | 256 | 160 | 10 | 7 | 2 | 0 | 1 |
| 16 | 16 | 256 | 160 | 10 | [6] | [2] | [0] | [2] |
| 16 | 16 | 256 | 160 | 10 | [5] | [1] | [2] | [2] |

# FIG.6

| | $N_{pilot}=6$ | | | | | | $N_{pilot}=8$ | | | | | | | |
|---|---|---|---|---|---|---|---|---|---|---|---|---|---|---|
| Bit# | 0 | 1 | 2 | 3 | 4 | 5 | 0 | 1 | 2 | 3 | 4 | 5 | 6 | 7 |
| slot#1 | 1 | 1 | 1 | 1 | 1 | 1 | 1 | 1 | 1 | 1 | 1 | 1 | 1 | 1 |
| 2 | 1 | 1 | 1 | 1 | 0 | 1 | 1 | 1 | 1 | 1 | 1 | 0 | 1 | 1 |
| 3 | 1 | 0 | 1 | 1 | 0 | 1 | 1 | 0 | 1 | 1 | 1 | 0 | 1 | 1 |
| 4 | 1 | 1 | 0 | 1 | 0 | 1 | 1 | 1 | 1 | 0 | 1 | 0 | 1 | 1 |
| 5 | 1 | 1 | 0 | 1 | 1 | 1 | 1 | 1 | 1 | 0 | 1 | 1 | 1 | 1 |
| 6 | 1 | 1 | 0 | 1 | 1 | 1 | 1 | 1 | 1 | 0 | 1 | 1 | 1 | 1 |
| 7 | 1 | 0 | 1 | 1 | 0 | 0 | 1 | 0 | 1 | 1 | 1 | 0 | 1 | 0 |
| 8 | 1 | 1 | 0 | 1 | 0 | 1 | 1 | 1 | 1 | 0 | 1 | 0 | 1 | 1 |
| 9 | 1 | 1 | 1 | 1 | 0 | 0 | 1 | 1 | 1 | 1 | 1 | 0 | 1 | 0 |
| 10 | 1 | 0 | 1 | 1 | 0 | 1 | 1 | 0 | 1 | 1 | 1 | 0 | 1 | 1 |
| 11 | 1 | 1 | 1 | 1 | 1 | 0 | 1 | 1 | 1 | 1 | 1 | 1 | 1 | 0 |
| 12 | 1 | 0 | 1 | 1 | 0 | 1 | 1 | 0 | 1 | 1 | 1 | 0 | 1 | 1 |
| 13 | 1 | 0 | 0 | 1 | 0 | 1 | 1 | 0 | 1 | 0 | 1 | 0 | 1 | 1 |
| 14 | 1 | 1 | 0 | 1 | 0 | 0 | 1 | 1 | 1 | 0 | 1 | 0 | 1 | 0 |
| 15 | 1 | 0 | 1 | 1 | 0 | 0 | 1 | 0 | 1 | 1 | 1 | 0 | 1 | 0 |
| 16 | 1 | 0 | 0 | 1 | 0 | 0 | 1 | 0 | 1 | 0 | 1 | 0 | 1 | 0 |

# FIG.7

# FIG.8

DPCCH · DPDCH · DPCCH · DPDCH · DPCCH

| TFCI $N_{TFCI}$ bits | Data1 $N_{data1}$ bits | TPC $N_{TPC}$ bits | Data2 $N_{data2}$ bits | Pilot $N_{pilot}$ bits |

25 — 26 — 27

$T_{slot}=0.625ms, 10*2^k bits(k=0..7)$

| slot#1 | slot#2 | | slot#i | | slot#16 |

$T_f=10ms$

| frame#1 | frame#2 | | frame#i | | frame#72 |

$T_{super}=720ms$

# FIG.9

| Symbol rate | 8ksps | | 16,32,64,128ksps | | | | 256,512,1024ksps | | | | | | | |
|---|---|---|---|---|---|---|---|---|---|---|---|---|---|---|
| Symbol# | 0 | 1 | 0 | 1 | 2 | 3 | 0 | 1 | 2 | 3 | 4 | 5 | 6 | 7 |
| slot#1 | 11 | 11 | 11 | 11 | 11 | 11 | 11 | 11 | 11 | 11 | 11 | 11 | 11 | 10 |
| 2 | 11 | 11 | 11 | 11 | 11 | 01 | 11 | 10 | 11 | 10 | 11 | 10 | 11 | 01 |
| 3 | 11 | 10 | 11 | 01 | 11 | 01 | 11 | 10 | 11 | 01 | 11 | 11 | 11 | 01 |
| 4 | 11 | 01 | 11 | 10 | 11 | 01 | 11 | 11 | 11 | 01 | 11 | 00 | 11 | 10 |
| 5 | 11 | 10 | 11 | 10 | 11 | 11 | 11 | 11 | 11 | 00 | 11 | 01 | 11 | 10 |
| 6 | 11 | 10 | 11 | 10 | 11 | 11 | 11 | 11 | 11 | 11 | 11 | 01 | 11 | 10 |
| 7 | 11 | 01 | 11 | 01 | 11 | 00 | 11 | 10 | 11 | 11 | 11 | 01 | 11 | 10 |
| 8 | 11 | 00 | 11 | 10 | 11 | 01 | 11 | 01 | 11 | 00 | 11 | 10 | 11 | 00 |
| 9 | 11 | 00 | 11 | 11 | 11 | 00 | 11 | 11 | 11 | 10 | 11 | 00 | 11 | 01 |
| 10 | 11 | 10 | 11 | 01 | 11 | 01 | 11 | 01 | 11 | 11 | 11 | 11 | 11 | 00 |
| 11 | 11 | 10 | 11 | 11 | 11 | 10 | 11 | 10 | 11 | 10 | 11 | 11 | 11 | 10 |
| 12 | 11 | 11 | 11 | 01 | 11 | 01 | 11 | 01 | 11 | 10 | 11 | 10 | 11 | 00 |
| 13 | 11 | 10 | 11 | 00 | 11 | 01 | 11 | 10 | 11 | 01 | 11 | 11 | 11 | 10 |
| 14 | 11 | 11 | 11 | 10 | 11 | 00 | 11 | 00 | 11 | 10 | 11 | 10 | 11 | 00 |
| 15 | 11 | 00 | 11 | 01 | 11 | 00 | 11 | 01 | 11 | 10 | 11 | 00 | 11 | 00 |
| 16 | 11 | 00 | 11 | 00 | 11 | 00 | 11 | 10 | 11 | 00 | 11 | 00 | 11 | 00 |

# FIG.10

EP 1 039 654 B1

# FIG.11A

256chips

| (Tx OFF) | Data 10bits | Pilot 8bits |

0.625ms, 20bits

| slot#1 | slot#2 | | slot#i | | slot#16 |

$T_f$=10ms

| frame#1 | frame#2 | | frame#i | | frame#72 |

$T_{super}$ =720ms

# FIG.11B

| Data $N_{data}$ bits | Pilot $N_{pilot}$ bits |

$T_{slot}$=0.625ms, $20*2^k$ bits(k=0..6)

| slot#1 | slot#2 | | slot#i | | slot#16 |

$T_f$=10ms

| frame#1 | frame#2 | | frame#i | | frame#72 |

$T_{super}$ =720ms

## FIG.12A

| Frame Synchronization Words |
|---|
| Slot Number      1 2 3 4 5 ..........................L |
| $C_1$=( 1 1 0 1 1 1 1 1 0 0 1 0 0 0 0 0 ) |
| $C_2$=( 1 0 0 0 1 0 1 0 0 1 1 1 0 1 0 1 ) |
| $C_3$=( 1 1 0 1 1 1 0 0 0 0 1 0 0 0 1 1 ) |
| $C_4$=( 0 1 1 1 0 1 1 0 1 0 0 0 1 0 0 1 ) |
| $C_5$=( 1 0 1 1 0 0 0 0 0 1 0 0 1 1 1 1 ) |
| $C_6$=( 1 1 1 0 0 1 0 1 0 0 0 0 1 1 0 1 0 ) |
| $C_7$=( 0 1 0 0 0 0 1 1 1 0 1 1 1 1 0 0 ) |
| $C_8$=( 1 1 1 0 1 0 0 1 0 0 0 0 1 0 1 1 0 ) |

## FIG.12B

| $R(\tau)$ $\diagdown$ $\tau$ | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| $R_E(\tau)$ | 16 | 4 | 0 | 4 | 0 | −4 | 0 | −4 | −16 | −4 | 0 | −4 | 0 | 4 | 0 | 4 |
| $R_F(\tau)$ | 16 | −4 | 0 | −4 | 0 | 4 | 0 | 4 | −16 | 4 | 0 | 4 | 0 | −4 | 0 | −4 |
| $R_G(\tau)$ | 16 | 4 | 0 | −4 | 0 | 4 | 0 | −4 | −16 | −4 | 0 | 4 | 0 | −4 | 0 | 4 |
| $R_H(\tau)$ | 16 | −4 | 0 | 4 | 0 | −4 | 0 | 4 | −16 | 4 | 0 | −4 | 0 | 4 | 0 | −4 |

$R_1$                  $R_2$

## FIG.13A

$(R_E(\tau) + R_F(\tau))$, or $(R_G(\tau) + R_H(\tau))$

## FIG.13B

$R_E(\tau) + R_F(\tau) + R_G(\tau) + R_H(\tau)$

# FIG.14A

| Bit# | $N_{pilot2}=5$ | | | | | $N_{pilot2}=6$ | | | | | |
|---|---|---|---|---|---|---|---|---|---|---|---|
|  | 0 | 1 | 2 | 3 | 4 | 0 | 1 | 2 | 3 | 4 | 5 |
| slot#1 | 1 | 1 | 1 | 1 | 0 | 1 | 1 | 1 | 1 | 1 | 0 |
| 2 | 1 | 0 | 1 | 1 | 1 | 1 | 1 | 0 | 1 | 1 | 1 |
| 3 | 0 | 0 | 1 | 0 | 1 | 1 | 0 | 0 | 1 | 0 | 1 |
| 4 | 1 | 0 | 1 | 1 | 1 | 1 | 1 | 0 | 1 | 1 | 1 |
| 5 | 1 | 1 | 1 | 1 | 0 | 1 | 1 | 1 | 1 | 1 | 0 |
| 6 | 1 | 0 | 1 | 1 | 1 | 1 | 1 | 0 | 1 | 1 | 1 |
| 7 | 1 | 1 | 1 | 0 | 1 | 1 | 1 | 1 | 1 | 0 | 1 |
| 8 | 1 | 0 | 1 | 0 | 0 | 1 | 1 | 0 | 1 | 0 | 0 |
| 9 | 0 | 0 | 1 | 0 | 1 | 1 | 0 | 0 | 1 | 0 | 1 |
| 10 | 0 | 1 | 1 | 0 | 0 | 1 | 0 | 1 | 1 | 0 | 0 |
| 11 | 1 | 1 | 1 | 1 | 0 | 1 | 1 | 1 | 1 | 1 | 0 |
| 12 | 0 | 1 | 1 | 0 | 0 | 1 | 0 | 1 | 1 | 0 | 0 |
| 13 | 0 | 0 | 1 | 0 | 1 | 1 | 0 | 0 | 1 | 0 | 1 |
| 14 | 0 | 1 | 1 | 0 | 0 | 1 | 0 | 1 | 1 | 0 | 0 |
| 15 | 0 | 0 | 1 | 1 | 0 | 1 | 0 | 0 | 1 | 1 | 0 |
| 16 | 0 | 1 | 1 | 1 | 1 | 1 | 0 | 1 | 1 | 1 | 1 |

# FIG.14B

| | Npilot2 = 7 | | | | | | | Npilot2 = 8 | | | | | | | |
|---|---|---|---|---|---|---|---|---|---|---|---|---|---|---|---|
| Bit# | 0 | 1 | 2 | 3 | 4 | 5 | 6 | 0 | 1 | 2 | 3 | 4 | 5 | 6 | 7 |
| slot#1 | 1 | 1 | 1 | 1 | 1 | 0 | 1 | 1 | 1 | 1 | 1 | 1 | 1 | 1 | 0 |
| 2 | 1 | 1 | 0 | 1 | 1 | 1 | 1 | 1 | 1 | 1 | 0 | 1 | 1 | 1 | 1 |
| 3 | 1 | 0 | 0 | 1 | 0 | 1 | 1 | 1 | 0 | 1 | 0 | 1 | 0 | 1 | 1 |
| 4 | 1 | 1 | 0 | 1 | 1 | 1 | 1 | 1 | 1 | 1 | 0 | 1 | 1 | 1 | 1 |
| 5 | 1 | 1 | 1 | 1 | 1 | 0 | 1 | 1 | 1 | 1 | 1 | 1 | 1 | 1 | 0 |
| 6 | 1 | 1 | 0 | 1 | 1 | 1 | 1 | 1 | 1 | 1 | 0 | 1 | 1 | 1 | 1 |
| 7 | 1 | 1 | 1 | 1 | 0 | 1 | 1 | 1 | 1 | 1 | 1 | 1 | 0 | 1 | 1 |
| 8 | 1 | 1 | 0 | 1 | 0 | 0 | 1 | 1 | 1 | 1 | 0 | 1 | 0 | 1 | 0 |
| 9 | 1 | 0 | 0 | 1 | 0 | 1 | 1 | 1 | 0 | 1 | 0 | 1 | 0 | 1 | 1 |
| 10 | 1 | 0 | 1 | 1 | 0 | 0 | 1 | 1 | 0 | 1 | 1 | 1 | 0 | 1 | 0 |
| 11 | 1 | 1 | 1 | 1 | 1 | 0 | 1 | 1 | 1 | 1 | 1 | 1 | 1 | 1 | 0 |
| 12 | 1 | 0 | 1 | 1 | 0 | 0 | 1 | 1 | 0 | 1 | 1 | 1 | 0 | 1 | 0 |
| 13 | 1 | 0 | 0 | 1 | 0 | 1 | 1 | 1 | 0 | 1 | 0 | 1 | 0 | 1 | 1 |
| 14 | 1 | 0 | 1 | 1 | 0 | 0 | 1 | 1 | 0 | 1 | 1 | 1 | 0 | 1 | 0 |
| 15 | 1 | 0 | 0 | 1 | 1 | 0 | 1 | 1 | 0 | 1 | 0 | 1 | 1 | 1 | 0 |
| 16 | 1 | 0 | 1 | 1 | 1 | 1 | 1 | 1 | 0 | 1 | 1 | 1 | 1 | 1 | 1 |

# FIG.14C

| $N_{pilot}$ | Pilot bit position# | Corresponding word of length 16 |
|---|---|---|
| 5 | 0 | $C_1$ |
| | 1 | $C_2$ |
| | 3 | $C_3$ |
| | 4 | $C_4$ |
| 6 | 1 | $C_1$ |
| | 2 | $C_2$ |
| | 4 | $C_3$ |
| | 5 | $C_4$ |
| 7 | 1 | $C_1$ |
| | 2 | $C_2$ |
| | 4 | $C_3$ |
| | 5 | $C_4$ |
| 8 | 1 | $C_1$ |
| | 3 | $C_2$ |
| | 5 | $C_3$ |
| | 7 | $C_4$ |

# FIG.14D

## FIG.14E

| | $R_x$ (0) | $R_x$ (1) | $R_x$ (2) | $R_x$ (3) | $R_x$ (4) | $R_x$ (5) | $R_x$ (6) | $R_x$ (7) | $R_x$ (8) | $R_x$ (9) | $R_x$ (10) | $R_x$ (11) | $R_x$ (12) | $R_x$ (13) | $R_x$ (14) | $R_x$ (15) |
|---|---|---|---|---|---|---|---|---|---|---|---|---|---|---|---|---|
| $A_1$ point | 16 | 4 | 0 | 4 | 0 | -4 | 0 | -4 | -16 | -4 | 0 | -4 | 0 | 4 | 0 | 4 |
| $A_2$ point | 16 | -4 | 0 | -4 | 0 | 4 | 0 | 4 | -16 | 4 | 0 | 4 | 0 | -4 | 0 | -4 |
| $A_3$ point | 16 | 4 | 0 | 4 | 0 | -4 | 0 | -4 | -16 | -4 | 0 | -4 | 0 | 4 | 0 | 4 |
| $A_4$ point | 16 | -4 | 0 | -4 | 0 | 4 | 0 | 4 | -16 | 4 | 0 | 4 | 0 | -4 | 0 | -4 |
| B point | 64 | 0 | 0 | 0 | 0 | 0 | 0 | 0 | -64 | 0 | 0 | 0 | 0 | 0 | 0 | 0 |

## FIG.14F

| | $R_x$ (0) | $R_x$ (1) | $R_x$ (2) | $R_x$ (3) | $R_x$ (4) | $R_x$ (5) | $R_x$ (6) | $R_x$ (7) | $R_x$ (8) | $R_x$ (9) | $R_x$ (10) | $R_x$ (11) | $R_x$ (12) | $R_x$ (13) | $R_x$ (14) | $R_x$ (15) |
|---|---|---|---|---|---|---|---|---|---|---|---|---|---|---|---|---|
| $A_1$ point +$A_2$ point | 32 | 0 | 0 | 0 | 0 | 0 | 0 | 0 | -32 | 0 | 0 | 0 | 0 | 0 | 0 | 0 |
| $A_3$ point +$A_4$ point | 32 | 0 | 0 | 0 | 0 | 0 | 0 | 0 | -32 | 0 | 0 | 0 | 0 | 0 | 0 | 0 |
| $A_1$ point +$A_4$ point | 32 | 0 | 0 | 0 | 0 | 0 | 0 | 0 | -32 | 0 | 0 | 0 | 0 | 0 | 0 | 0 |
| $A_2$ point +$A_3$ point | 32 | 0 | 0 | 0 | 0 | 0 | 0 | 0 | -32 | 0 | 0 | 0 | 0 | 0 | 0 | 0 |

# FIG.14G

| $C_1$ , $C_2$ , $C_3$ or $C_4$ | | | | | |
|---|---|---|---|---|---|
| R(0) | R(1) | | R(x) | | R(15) |

· · · · ·   · · · · ·

| Correlation Result $A_1$ , $A_2$ , $A_3$ or $A_4$ |
|---|

| $C_2$ , $C_3$ , $C_4$ or $C_1$ | | | | | |
|---|---|---|---|---|---|
| R(0) | R(1) | | R(x) | | R(15) |

· · · · ·   · · · · ·

| Correlation Result $A_2$ , $A_3$ , $A_4$ or $A_1$ |
|---|

$\oplus$

D

# FIG.14H

Received spread signal → **Despread circuit** 61 → **Rake combiner** 63 → **Deinterleaver circuit** 64 → **Decoder** 65 → Recovered data

**Estimator & sync. circuit** 62

60

## FIG.14I

| | $R_x$ (0) | $R_x$ (1) | $R_x$ (2) | $R_x$ (3) | $R_x$ (4) | $R_x$ (5) | $R_x$ (6) | $R_x$ (7) | $R_x$ (8) | $R_x$ (9) | $R_x$ (10) | $R_x$ (11) | $R_x$ (12) | $R_x$ (13) | $R_x$ (14) | $R_x$ (15) |
|---|---|---|---|---|---|---|---|---|---|---|---|---|---|---|---|---|
| $A_1$ point | 16 | −4 | −4 | 8 | 0 | −4 | 0 | 0 | −4 | 0 | 0 | −4 | 0 | 8 | −4 | −4 |
| $A_2$ point | 16 | 0 | 0 | −4 | −4 | −4 | 0 | 0 | 12 | 0 | 0 | −4 | −4 | −4 | 0 | 0 |
| $A_3$ point | 16 | 4 | 0 | 0 | 4 | 8 | 8 | 0 | 0 | 0 | 8 | 8 | 4 | 0 | 0 | 4 |
| $A_4$ point | 16 | 0 | 4 | −4 | 0 | 0 | −4 | 4 | 0 | 4 | −4 | 0 | 0 | −4 | 4 | 0 |
| B point | 64 | 0 | 0 | 0 | 0 | 0 | 4 | 4 | 8 | 4 | 4 | 0 | 0 | 0 | 0 | 0 |

## FIG.14J

## FIG.15A

| Symbol# | Npilot=4 | | Npilot=8 | | | | Npilot=16 | | | | | | | |
|---|---|---|---|---|---|---|---|---|---|---|---|---|---|---|
| | 0 | 1 | 0 | 1 | 2 | 3 | 0 | 1 | 2 | 3 | 4 | 5 | 6 | 7 |
| slot#1 | 11 | 11 | 11 | 11 | 11 | 10 | 11 | 11 | 11 | 10 | 11 | 11 | 11 | 01 |
| 2 | 11 | 10 | 11 | 10 | 11 | 11 | 11 | 10 | 11 | 11 | 11 | 01 | 11 | 11 |
| 3 | 11 | 00 | 11 | 00 | 11 | 01 | 11 | 00 | 11 | 01 | 11 | 11 | 11 | 01 |
| 4 | 11 | 10 | 11 | 10 | 11 | 11 | 11 | 10 | 11 | 11 | 11 | 10 | 11 | 00 |
| 5 | 11 | 11 | 11 | 11 | 11 | 10 | 11 | 11 | 11 | 10 | 11 | 00 | 11 | 01 |
| 6 | 11 | 10 | 11 | 10 | 11 | 11 | 11 | 10 | 11 | 11 | 11 | 01 | 11 | 00 |
| 7 | 11 | 11 | 11 | 11 | 11 | 01 | 11 | 11 | 11 | 01 | 11 | 00 | 11 | 10 |
| 8 | 11 | 10 | 11 | 10 | 11 | 00 | 11 | 10 | 11 | 00 | 11 | 01 | 11 | 11 |
| 9 | 11 | 00 | 11 | 00 | 11 | 01 | 11 | 00 | 11 | 01 | 11 | 00 | 11 | 10 |
| 10 | 11 | 01 | 11 | 01 | 11 | 00 | 11 | 01 | 11 | 00 | 11 | 10 | 11 | 00 |
| 11 | 11 | 11 | 11 | 11 | 11 | 10 | 11 | 11 | 11 | 10 | 11 | 00 | 11 | 10 |
| 12 | 11 | 01 | 11 | 01 | 11 | 00 | 11 | 01 | 11 | 00 | 11 | 01 | 11 | 11 |
| 13 | 11 | 00 | 11 | 00 | 11 | 01 | 11 | 00 | 11 | 01 | 11 | 11 | 11 | 10 |
| 14 | 11 | 01 | 11 | 01 | 11 | 00 | 11 | 01 | 11 | 00 | 11 | 10 | 11 | 11 |
| 15 | 11 | 00 | 11 | 00 | 11 | 10 | 11 | 00 | 11 | 10 | 11 | 11 | 11 | 01 |
| 16 | 11 | 01 | 11 | 01 | 11 | 11 | 11 | 01 | 11 | 11 | 11 | 10 | 11 | 00 |

# FIG.15B

| Symbol rate | Symbol# | Channel | Corresponding word of length $L=16$ |
|---|---|---|---|
| $N_{pilot}=4$ | 1 | I-CH | $C_1$ |
| | | Q-CH | $C_2$ |
| $N_{pilot}=8$ | 1 | I-CH | $C_1$ |
| | | Q-CH | $C_2$ |
| | 3 | I-CH | $C_3$ |
| | | Q-CH | $C_4$ |
| $N_{pilot}=16$ | 1 | I-CH | $C_1$ |
| | | Q-CH | $C_2$ |
| | 3 | I-CH | $C_3$ |
| | | Q-CH | $C_4$ |
| | 5 | I-CH | $C_5$ |
| | | Q-CH | $C_6$ |
| | 7 | I-CH | $C_7$ |
| | | Q-CH | $C_8$ |

# FIG.15C

| $C_1$ of I-CH at symbol#1 | | | | | |
|---|---|---|---|---|---|
| R(0) | R(1) | | R(x) | | R(15) |

Correlation Result $A_1$

| $C_2$ of Q-CH at symbol#1 | | | | | |
|---|---|---|---|---|---|
| R(0) | R(1) | | R(x) | | R(15) |

Correlation Result $A_2$

| $C_3$ of I-CH at symbol#3 | | | | | |
|---|---|---|---|---|---|
| R(0) | R(1) | | R(x) | | R(15) |

Correlation Result $A_3$

| $C_4$ of Q-CH at symbol#3 | | | | | |
|---|---|---|---|---|---|
| R(0) | R(1) | | R(x) | | R(15) |

Correlation Result $A_4$

A

$A_1$

$A_2$

$A_3$

$A_4$

B

# FIG.16A

| Symbol# | 0 | 1 | 2 | 3 |
|---------|---|---|---|---|
| slot#1  | 11 | 11 | 11 | 10 |
| 2       | 11 | 10 | 11 | 11 |
| 3       | 11 | 00 | 11 | 01 |
| 4       | 11 | 10 | 11 | 11 |
| 5       | 11 | 11 | 11 | 10 |
| 6       | 11 | 10 | 11 | 11 |
| 7       | 11 | 11 | 11 | 01 |
| 8       | 11 | 10 | 11 | 00 |
| 9       | 11 | 00 | 11 | 01 |
| 10      | 11 | 01 | 11 | 00 |
| 11      | 11 | 11 | 11 | 10 |
| 12      | 11 | 01 | 11 | 00 |
| 13.     | 11 | 00 | 11 | 01 |
| 14      | 11 | 01 | 11 | 00 |
| 15      | 11 | 00 | 11 | 10 |
| 16      | 11 | 01 | 11 | 11 |

# FIG.16B

| Symbol# | Channel | Corresponding word of length 16 |
|---------|---------|-------------------------------|
| 1       | I–CH    | $C_1$ |
|         | Q–CH    | $C_2$ |
| 3       | I–CH    | $C_3$ |
|         | Q–CH    | $C_4$ |

# FIG.16C

| | $N_{pilot}=8$ | | | | $N_{pilot}=16$ | | | | | | | |
|---|---|---|---|---|---|---|---|---|---|---|---|---|
| Symbol# | 0 | 1 | 2 | 3 | 0 | 1 | 2 | 3 | 4 | 5 | 6 | 7 |
| slot#1 | 11 | 11 | 11 | 10 | 11 | 11 | 11 | 10 | 11 | 11 | 11 | 01 |
| 2 | 11 | 10 | 11 | 11 | 11 | 10 | 11 | 11 | 11 | 01 | 11 | 11 |
| 3 | 11 | 00 | 11 | 01 | 11 | 00 | 11 | 01 | 11 | 11 | 11 | 01 |
| 4 | 11 | 10 | 11 | 11 | 11 | 10 | 11 | 11 | 11 | 10 | 11 | 00 |
| 5 | 11 | 11 | 11 | 10 | 11 | 11 | 11 | 10 | 11 | 00 | 11 | 01 |
| 6 | 11 | 10 | 11 | 11 | 11 | 10 | 11 | 11 | 11 | 01 | 11 | 00 |
| 7 | 11 | 11 | 11 | 01 | 11 | 11 | 11 | 01 | 11 | 00 | 11 | 10 |
| 8 | 11 | 10 | 11 | 00 | 11 | 10 | 11 | 00 | 11 | 01 | 11 | 11 |
| 9 | 11 | 00 | 11 | 01 | 11 | 00 | 11 | 01 | 11 | 00 | 11 | 10 |
| 10 | 11 | 01 | 11 | 00 | 11 | 01 | 11 | 00 | 11 | 10 | 11 | 00 |
| 11 | 11 | 11 | 11 | 10 | 11 | 11 | 11 | 10 | 11 | 00 | 11 | 10 |
| 12 | 11 | 01 | 11 | 00 | 11 | 01 | 11 | 00 | 11 | 01 | 11 | 11 |
| 13 | 11 | 00 | 11 | 01 | 11 | 00 | 11 | 01 | 11 | 11 | 11 | 10 |
| 14 | 11 | 01 | 11 | 00 | 11 | 01 | 11 | 00 | 11 | 10 | 11 | 11 |
| 15 | 11 | 00 | 11 | 10 | 11 | 00 | 11 | 10 | 11 | 11 | 11 | 01 |
| 16 | 11 | 01 | 11 | 11 | 11 | 01 | 11 | 11 | 11 | 10 | 11 | 00 |

# FIG.16D

| Symbol rate | Symbol# | Channel | Corresponding word of length 16 |
|---|---|---|---|
| $N_{pilot}=8$ | 1 | I-CH | $C_1$ |
| | | Q-CH | $C_2$ |
| | 3 | I-CH | $C_3$ |
| | | Q-CH | $C_4$ |
| $N_{pilot}=16$ | 1 | I-CH | $C_1$ |
| | | Q-CH | $C_2$ |
| | 3 | I-CH | $C_3$ |
| | | Q-CH | $C_4$ |
| | 5 | I-CH | $C_5$ |
| | | Q-CH | $C_6$ |
| | 7 | I-CH | $C_7$ |
| | | Q-CH | $C_8$ |

# FIG.17A

# FIG.17B

# FIG.17C

# FIG.18A

| Parameters | Downlink |
|---|---|
| Slot per frame | 16 |
| Number of bits in the DPCCH(Pilot/TPC/TFCI) | 4/2/0 |
| Number of bits in the DPDCH per each slot | 4 |
| Spreading factor(DPDCH) | 512 |
| Spreading factor(DPCCH) | 512 |
| Modulation | QPSK |
| 3dB bandwidth | 4.096MHz |
| Shaping filter | Root raised cosine(roll off 0.22) |
| Power amplifier | Ideal |
| Propogation channel | AWGN |

## FIG.18B

## FIG.18C

71

# FIG.18D

AWGN
Downlink DPCCH $N_{pilot} = 4$
and SF=512
Threshold=25

-■- preferred embodiment
-●- current pilot pattern

Prob. of frame sync. confirm. success

Eb/No(dB)

# FIG.19A

| Symbol# | N_pilot = 4 | | N_pilot = 8 | | | | N_pilot = 16 | | | | | | | |
|---|---|---|---|---|---|---|---|---|---|---|---|---|---|---|
| | 0 | 1 | 0 | 1 | 2 | 3 | 0 | 1 | 2 | 3 | 4 | 5 | 6 | 7 |
| slot#1 | 01 | 10 | 11 | 00 | 00 | 10 | 11 | 00 | 00 | 10 | 11 | 11 | 00 | 10 |
| 2 | 00 | 10 | 11 | 01 | 00 | 11 | 11 | 01 | 00 | 11 | 11 | 01 | 00 | 00 |
| 3 | 10 | 10 | 11 | 11 | 00 | 01 | 11 | 11 | 00 | 01 | 11 | 11 | 00 | 10 |
| 4 | 00 | 10 | 11 | 01 | 00 | 11 | 11 | 01 | 00 | 11 | 11 | 10 | 00 | 11 |
| 5 | 01 | 10 | 11 | 00 | 00 | 10 | 11 | 00 | 00 | 10 | 11 | 11 | 00 | 01 |
| 6 | 00 | 10 | 11 | 01 | 00 | 11 | 11 | 01 | 00 | 11 | 11 | 10 | 00 | 00 |
| 7 | 01 | 10 | 11 | 11 | 00 | 10 | 11 | 11 | 00 | 10 | 11 | 00 | 00 | 01 |
| 8 | 00 | 10 | 11 | 10 | 00 | 11 | 11 | 10 | 00 | 11 | 11 | 01 | 00 | 00 |
| 9 | 10 | 10 | 11 | 11 | 00 | 01 | 11 | 11 | 00 | 01 | 11 | 00 | 00 | 01 |
| 10 | 11 | 10 | 11 | 10 | 00 | 00 | 11 | 10 | 00 | 00 | 11 | 10 | 00 | 11 |
| 11 | 01 | 10 | 11 | 00 | 00 | 10 | 11 | 00 | 00 | 10 | 11 | 00 | 00 | 01 |
| 12 | 11 | 10 | 11 | 10 | 00 | 00 | 11 | 10 | 00 | 00 | 11 | 01 | 00 | 00 |
| 13 | 10 | 10 | 11 | 11 | 00 | 01 | 11 | 11 | 00 | 01 | 11 | 00 | 00 | 10 |
| 14 | 11 | 10 | 11 | 10 | 00 | 00 | 11 | 10 | 00 | 00 | 11 | 01 | 00 | 11 |
| 15 | 10 | 10 | 11 | 00 | 00 | 01 | 11 | 00 | 00 | 01 | 11 | 11 | 00 | 10 |
| 16 | 11 | 10 | 11 | 01 | 00 | 00 | 11 | 01 | 00 | 00 | 11 | 10 | 00 | 11 |

# FIG.19B

| Symbol rate | Symbol# | Channel | Corresponding word of length 16 |
|---|---|---|---|
| $N_{pilot}=4$ | 0 | I–CH | $-C_1$ |
| | | Q–CH | $C_2$ |
| $N_{pilot}=8$ | 1 | I–CH | $-C_3$ |
| | | Q–CH | $C_4$ |
| | 3 | I–CH | $C_1$ |
| | | Q–CH | $-C_2$ |
| $N_{pilot}=16$ | 1 | I–CH | $-C_3$ |
| | | Q–CH | $C_4$ |
| | 3 | I–CH | $C_1$ |
| | | Q–CH | $-C_2$ |
| | 5 | I–CH | $-C_7$ |
| | | Q–CH | $C_8$ |
| | 7 | I–CH | $C_5$ |
| | | Q–CH | $-C_6$ |

## FIG.19C

| Symbol# | 0 | 1 | 2 | 3 |
|---------|-----|------|-----|------|
| slot#1 | 11 | 11 | 00 | 01 |
| 2 | 11 | 10 | 00 | 00 |
| 3 | 11 | 00 | 00 | 10 |
| 4 | 11 | 10 | 00 | 00 |
| 5 | 11 | 11 | 00 | 01 |
| 6 | 11 | 10 | 00 | 00 |
| 7 | 11 | 11 | 00 | 10 |
| 8 | 11 | 10 | 00 | 11 |
| 9 | 11 | 00 | 00 | 10 |
| 10 | 11 | 01 | 00 | 11 |
| 11 | 11 | 11 | 00 | 01 |
| 12 | 11 | 01 | 00 | 11 |
| 13 | 11 | 00 | 00 | 10 |
| 14 | 11 | 01 | 00 | 11 |
| 15 | 11 | 00 | 00 | 01 |
| 16 | 11 | 01 | 00 | 00 |

## FIG.19D

| Symbol# | Channel | Corresponding word of length 16 |
|---------|---------|--------------------------------|
| 1 | I-CH | $C_1$ |
| | Q-CH | $C_2$ |
| 3 | I-CH | $-C_3$ |
| | Q-CH | $-C_4$ |

# FIG.19E

| Symbol# | N_pilot =8 | | | | N_pilot =16 | | | | | | | |
|---|---|---|---|---|---|---|---|---|---|---|---|---|
| | 0 | 1 | 2 | 3 | 0 | 1 | 2 | 3 | 4 | 5 | 6 | 7 |
| slot#1 | 11 | 00 | 00 | 10 | 11 | 00 | 00 | 10 | 11 | 11 | 00 | 10 |
| 2 | 11 | 01 | 00 | 11 | 11 | 01 | 00 | 11 | 11 | 01 | 00 | 00 |
| 3 | 11 | 11 | 00 | 01 | 11 | 11 | 00 | 01 | 11 | 11 | 00 | 10 |
| 4 | 11 | 01 | 00 | 11 | 11 | 01 | 00 | 11 | 11 | 10 | 00 | 11 |
| 5 | 11 | 00 | 00 | 10 | 11 | 00 | 00 | 10 | 11 | 11 | 00 | 01 |
| 6 | 11 | 01 | 00 | 11 | 11 | 01 | 00 | 11 | 11 | 10 | 00 | 00 |
| 7 | 11 | 11 | 00 | 10 | 11 | 11 | 00 | 10 | 11 | 00 | 00 | 01 |
| 8 | 11 | 10 | 00 | 11 | 11 | 10 | 00 | 11 | 11 | 01 | 00 | 00 |
| 9 | 11 | 11 | 00 | 01 | 11 | 11 | 00 | 01 | 11 | 00 | 00 | 01 |
| 10 | 11 | 10 | 00 | 00 | 11 | 10 | 00 | 00 | 11 | 10 | 00 | 11 |
| 11 | 11 | 00 | 00 | 10 | 11 | 00 | 00 | 10 | 11 | 00 | 00 | 01 |
| 12 | 11 | 10 | 00 | 00 | 11 | 10 | 00 | 00 | 11 | 01 | 00 | 00 |
| 13 | 11 | 11 | 00 | 01 | 11 | 11 | 00 | 01 | 11 | 00 | 00 | 10 |
| 14 | 11 | 10 | 00 | 00 | 11 | 10 | 00 | 00 | 11 | 01 | 00 | 11 |
| 15 | 11 | 00 | 00 | 01 | 11 | 00 | 00 | 01 | 11 | 11 | 00 | 10 |
| 16 | 11 | 01 | 00 | 00 | 11 | 01 | 00 | 00 | 11 | 10 | 00 | 11 |

# FIG.19F

| Symbol rate | Symbol# | Channel | Corresponding word of length 16 |
|---|---|---|---|
| $N_{pilot} = 8$ | 1 | I–CH | $-C_3$ |
| | | Q–CH | $C_4$ |
| | 3 | I–CH | $C_1$ |
| | | Q–CH | $-C_2$ |
| $N_{pilot} = 16$ | 1 | I–CH | $-C_3$ |
| | | Q–CH | $C_4$ |
| | 3 | I–CH | $C_1$ |
| | | Q–CH | $-C_2$ |
| | 5 | I–CH | $-C_7$ |
| | | Q–CH | $C_8$ |
| | 7 | I–CH | $C_5$ |
| | | Q–CH | $-C_6$ |

## FIG.20A

| Sequence | Autocorrelation | | | | | | | | | | | | | | | |
|---|---|---|---|---|---|---|---|---|---|---|---|---|---|---|---|---|
| $C_1$ =(1 1 0 1 1 1 1 1 0 0 1 0 0 0 0 0) | 16 | 4 | 0 | 4 | 0 | −4 | 0 | −4 | −16 | −4 | 0 | −4 | 0 | 4 | 0 | 4 |
| $C_2$ =(1 0 0 0 1 0 1 0 0 1 1 1 0 1 0 1) | 16 | −4 | 0 | −4 | 0 | 4 | 0 | 4 | −16 | 4 | 0 | 4 | 0 | −4 | 0 | −4 |
| $C_3$ =(1 1 1 1 1 0 1 1 0 0 0 0 0 1 0 0) | 16 | 4 | 0 | 4 | 0 | −4 | 0 | −4 | −16 | −4 | 0 | −4 | 0 | 4 | 0 | 4 |
| $C_4$ =(0 1 0 1 0 0 0 1 1 0 1 0 1 1 1 0) | 16 | −4 | 0 | −4 | 0 | 4 | 0 | 4 | −16 | 4 | 0 | 4 | 0 | −4 | 0 | −4 |
| $C_5$ =(0 0 1 1 1 0 1 1 1 1 0 0 0 1 0 0) | 16 | 4 | 0 | −4 | 0 | 4 | 0 | −4 | −16 | −4 | 0 | 4 | 0 | −4 | 0 | 4 |
| $C_6$ =(0 0 1 0 0 1 0 1 1 1 0 1 1 0 1 0) | 16 | −4 | 0 | 4 | 0 | −4 | 0 | 4 | −16 | 4 | 0 | −4 | 0 | 4 | 0 | −4 |
| $C_7$ =(0 1 1 1 0 0 0 0 1 0 0 0 1 1 1 1) | 16 | 4 | 0 | −4 | 0 | 4 | 0 | −4 | −16 | −4 | 0 | 4 | 0 | −4 | 0 | 4 |
| $C_8$ =(1 0 1 1 1 0 1 0 0 1 0 0 0 1 0 1) | 16 | −4 | 0 | 4 | 0 | −4 | 0 | 4 | −16 | 4 | 0 | −4 | 0 | 4 | 0 | −4 |
| $C_9$ =(0 0 1 1 0 1 1 1 1 1 0 0 1 0 0 0) | 16 | 4 | 0 | 4 | 0 | −4 | 0 | −4 | −16 | −4 | 0 | −4 | 0 | 4 | 0 | 4 |
| $C_{10}$ =(0 0 1 0 1 0 0 1 1 1 0 1 0 1 1 0) | 16 | −4 | 0 | −4 | 0 | 4 | 0 | 4 | −16 | 4 | 0 | 4 | 0 | −4 | 0 | −4 |
| $C_{11}$ =(1 1 0 0 0 0 0 1 0 0 1 1 1 1 1 0) | 16 | 4 | 0 | 4 | 0 | −4 | 0 | −4 | −16 | −4 | 0 | −4 | 0 | 4 | 0 | 4 |
| $C_{12}$ =(1 0 1 1 1 0 0 1 0 1 0 0 0 1 1 0) | 16 | −4 | 0 | −4 | 0 | 4 | 0 | 4 | −16 | 4 | 0 | 4 | 0 | −4 | 0 | −4 |
| $C_{13}$ =(0 1 0 0 0 0 1 1 1 0 1 1 1 1 0 0) | 16 | 4 | 0 | −4 | 0 | 4 | 0 | −4 | −16 | −4 | 0 | 4 | 0 | −4 | 0 | 4 |
| $C_{14}$ =(1 0 0 0 1 0 0 1 0 1 1 1 0 1 1 0) | 16 | −4 | 0 | 4 | 0 | −4 | 0 | 4 | −16 | 4 | 0 | −4 | 0 | 4 | 0 | −4 |
| $C_{15}$ =(0 0 0 0 1 0 0 0 1 1 1 1 0 1 1 1) | 16 | 4 | 0 | −4 | 0 | 4 | 0 | −4 | −16 | −4 | 0 | 4 | 0 | −4 | 0 | 4 |
| $C_{16}$ =(1 0 0 1 0 0 0 1 0 1 1 0 1 1 1 0) | 16 | −4 | 0 | 4 | 0 | −4 | 0 | 4 | −16 | 4 | 0 | −4 | 0 | 4 | 0 | −4 |

## FIG.20B

| $R(\tau)$ \ $\tau$ | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| $R_E(\tau)$ | 16 | 4 | 0 | 4 | 0 | −4 | 0 | −4 | −16 | −4 | 0 | −4 | 0 | 4 | 0 | 4 |
| $R_F(\tau)$ | 16 | −4 | 0 | −4 | 0 | 4 | 0 | 4 | −16 | 4 | 0 | 4 | 0 | −4 | 0 | −4 |
| $R_G(\tau)$ | 16 | 4 | 0 | −4 | 0 | 4 | 0 | −4 | −16 | −4 | 0 | 4 | 0 | −4 | 0 | 4 |
| $R_H(\tau)$ | 16 | −4 | 0 | 4 | 0 | −4 | 0 | 4 | −16 | 4 | 0 | −4 | 0 | 4 | 0 | −4 |

# FIG.20C

| | $N_{pilot}=6$ | | | | | | $N_{pilot}=8$ | | | | | | | |
|---|---|---|---|---|---|---|---|---|---|---|---|---|---|---|
| Bit# | 0 | 1 | 2 | 3 | 4 | 5 | 0 | 1 | 2 | 3 | 4 | 5 | 6 | 7 |
| slot#1 | 1 | 1 | 1 | 1 | 1 | 0 | 1 | 1 | 1 | 1 | 1 | 1 | 1 | 0 |
| 2 | 1 | 1 | 0 | 1 | 1 | 1 | 1 | 1 | 1 | 0 | 1 | 1 | 1 | 1 |
| 3 | 1 | 0 | 0 | 1 | 1 | 0 | 1 | 0 | 1 | 0 | 1 | 1 | 1 | 0 |
| 4 | 1 | 1 | 0 | 1 | 1 | 1 | 1 | 1 | 1 | 0 | 1 | 1 | 1 | 1 |
| 5 | 1 | 1 | 1 | 1 | 1 | 0 | 1 | 1 | 1 | 1 | 1 | 1 | 1 | 0 |
| 6 | 1 | 1 | 0 | 1 | 0 | 0 | 1 | 1 | 1 | 0 | 1 | 0 | 1 | 0 |
| 7 | 1 | 1 | 1 | 1 | 1 | 0 | 1 | 1 | 1 | 1 | 1 | 1 | 1 | 0 |
| 8 | 1 | 1 | 0 | 1 | 1 | 1 | 1 | 1 | 1 | 0 | 1 | 1 | 1 | 1 |
| 9 | 1 | 0 | 0 | 1 | 0 | 1 | 1 | 0 | 1 | 0 | 1 | 0 | 1 | 1 |
| 10 | 1 | 0 | 1 | 1 | 0 | 0 | 1 | 0 | 1 | 1 | 1 | 0 | 1 | 0 |
| 11 | 1 | 1 | 1 | 1 | 0 | 1 | 1 | 1 | 1 | 1 | 1 | 0 | 1 | 1 |
| 12 | 1 | 0 | 1 | 1 | 0 | 0 | 1 | 0 | 1 | 1 | 1 | 0 | 1 | 0 |
| 13 | 1 | 0 | 0 | 1 | 0 | 1 | 1 | 0 | 1 | 0 | 1 | 0 | 1 | 1 |
| 14 | 1 | 0 | 1 | 1 | 1 | 1 | 1 | 0 | 1 | 1 | 1 | 1 | 1 | 1 |
| 15 | 1 | 0 | 0 | 1 | 0 | 1 | 1 | 0 | 1 | 0 | 1 | 0 | 1 | 1 |
| 16 | 1 | 0 | 1 | 1 | 0 | 0 | 1 | 0 | 1 | 1 | 1 | 0 | 1 | 0 |

# FIG.20D

| $N_{pilots}$ | Pilot bit position# | Corresponding word of length 16 |
|---|---|---|
| 6 | 1 | $C_1$ |
| | 2 | $C_2$ |
| | 4 | $C_3$ |
| | 5 | $C_4$ |
| 8 | 1 | $C_1$ |
| | 3 | $C_2$ |
| | 5 | $C_3$ |
| | 7 | $C_4$ |

# FIG.20E

| Symbol rate | 8ksps | | 16,32,64,128ksps | | | | 256,512,1024ksps | | | | | | | |
|---|---|---|---|---|---|---|---|---|---|---|---|---|---|---|
| Symbol# | 0 | 1 | 0 | 1 | 2 | 3 | 0 | 1 | 2 | 3 | 4 | 5 | 6 | 7 |
| slot#1 | 11 | 11 | 11 | 11 | 11 | 10 | 11 | 11 | 11 | 10 | 11 | 00 | 11 | 01 |
| 2 | 11 | 10 | 11 | 10 | 11 | 11 | 11 | 10 | 11 | 11 | 11 | 00 | 11 | 10 |
| 3 | 11 | 00 | 11 | 00 | 11 | 10 | 11 | 00 | 11 | 10 | 11 | 11 | 11 | 11 |
| 4 | 11 | 10 | 11 | 10 | 11 | 11 | 11 | 10 | 11 | 11 | 11 | 10 | 11 | 11 |
| 5 | 11 | 11 | 11 | 11 | 11 | 10 | 11 | 11 | 11 | 10 | 11 | 10 | 11 | 01 |
| 6 | 11 | 10 | 11 | 10 | 11 | 00 | 11 | 10 | 11 | 00 | 11 | 01 | 11 | 00 |
| 7 | 11 | 11 | 11 | 11 | 11 | 10 | 11 | 11 | 11 | 10 | 11 | 10 | 11 | 01 |
| 8 | 11 | 10 | 11 | 10 | 11 | 11 | 11 | 10 | 11 | 11 | 11 | 11 | 11 | 00 |
| 9 | 11 | 00 | 11 | 00 | 11 | 01 | 11 | 00 | 11 | 01 | 11 | 11 | 11 | 10 |
| 10 | 11 | 01 | 11 | 01 | 11 | 00 | 11 | 01 | 11 | 00 | 11 | 11 | 11 | 01 |
| 11 | 11 | 11 | 11 | 11 | 11 | 01 | 11 | 11 | 11 | 01 | 11 | 00 | 11 | 00 |
| 12 | 11 | 01 | 11 | 01 | 11 | 00 | 11 | 01 | 11 | 00 | 11 | 01 | 11 | 00 |
| 13 | 11 | 00 | 11 | 00 | 11 | 01 | 11 | 00 | 11 | 01 | 11 | 01 | 11 | 10 |
| 14 | 11 | 01 | 11 | 01 | 11 | 11 | 11 | 01 | 11 | 11 | 11 | 10 | 11 | 11 |
| 15 | 11 | 00 | 11 | 00 | 11 | 01 | 11 | 00 | 11 | 01 | 11 | 01 | 11 | 10 |
| 16 | 11 | 01 | 11 | 01 | 11 | 00 | 11 | 01 | 11 | 00 | 11 | 00 | 11 | 11 |

## FIG.20F

| Symbol rate | 2048,4096ksps | | | | | | | | | | | | | | | |
|---|---|---|---|---|---|---|---|---|---|---|---|---|---|---|---|---|
| Symbol# | 0 | 1 | 2 | 3 | 4 | 5 | 6 | 7 | 8 | 9 | 10 | 11 | 12 | 13 | 14 | 15 |
| slot#1 | 11 | 11 | 11 | 10 | 11 | 00 | 11 | 01 | 11 | 00 | 11 | 11 | 11 | 01 | 11 | 01 |
| 2 | 11 | 10 | 11 | 11 | 11 | 00 | 00 | 10 | 11 | 00 | 11 | 10 | 11 | 10 | 11 | 00 |
| 3 | 11 | 00 | 11 | 10 | 11 | 11 | 11 | 11 | 11 | 11 | 11 | 01 | 11 | 00 | 11 | 00 |
| 4 | 11 | 10 | 11 | 11 | 11 | 10 | 11 | 11 | 11 | 10 | 11 | 01 | 11 | 00 | 11 | 01 |
| 5 | 11 | 11 | 11 | 10 | 11 | 10 | 11 | 01 | 11 | 01 | 11 | 01 | 11 | 01 | 11 | 10 |
| 6 | 11 | 10 | 11 | 00 | 11 | 01 | 11 | 00 | 11 | 10 | 11 | 00 | 11 | 00 | 11 | 00 |
| 7 | 11 | 11 | 11 | 10 | 11 | 10 | 11 | 01 | 11 | 10 | 11 | 00 | 11 | 10 | 11 | 00 |
| 8 | 11 | 10 | 11 | 11 | 11 | 11 | 11 | 00 | 11 | 11 | 11 | 11 | 11 | 11 | 11 | 01 |
| 9 | 11 | 00 | 11 | 01 | 11 | 11 | 11 | 10 | 11 | 11 | 11 | 00 | 11 | 10 | 11 | 10 |
| 10 | 11 | 01 | 11 | 00 | 11 | 11 | 11 | 01 | 11 | 11 | 11 | 01 | 11 | 01 | 11 | 11 |
| 11 | 11 | 11 | 11 | 01 | 11 | 00 | 11 | 00 | 11 | 00 | 11 | 10 | 11 | 11 | 11 | 11 |
| 12 | 11 | 01 | 11 | 00 | 11 | 01 | 11 | 00 | 11 | 01 | 11 | 10 | 11 | 11 | 11 | 10 |
| 13 | 11 | 00 | 11 | 01 | 11 | 01 | 11 | 10 | 11 | 10 | 11 | 10 | 11 | 10 | 11 | 01 |
| 14 | 11 | 01 | 11 | 11 | 11 | 10 | 11 | 11 | 11 | 01 | 11 | 11 | 11 | 11 | 11 | 11 |
| 15 | 11 | 00 | 11 | 01 | 11 | 01 | 11 | 10 | 11 | 01 | 11 | 11 | 11 | 01 | 11 | 11 |
| 16 | 11 | 01 | 11 | 00 | 11 | 00 | 11 | 11 | 11 | 00 | 11 | 00 | 11 | 00 | 11 | 10 |

# FIG.20G

| Symbol rate | Symbol# | Channel | Corresponding word of length 16 |
|---|---|---|---|
| 8ksps | 1 | I-CH | $C_1$ |
| | | Q-CH | $C_2$ |
| 16,32, 64,128ksps | 1 | I-CH | $C_1$ |
| | | Q-CH | $C_2$ |
| | 3 | I-CH | $C_3$ |
| | | Q-CH | $C_4$ |
| 256,512, 1024ksps | 1 | I-CH | $C_1$ |
| | | Q-CH | $C_2$ |
| | 3 | I-CH | $C_3$ |
| | | Q-CH | $C_4$ |
| | 5 | I-CH | $C_5$ |
| | | Q-CH | $C_6$ |
| | 7 | I-CH | $C_7$ |
| | | Q-CH | $C_8$ |
| 2048, 4096ksps | 1 | I-CH | $C_1$ |
| | | Q-CH | $C_2$ |
| | 3 | I-CH | $C_3$ |
| | | Q-CH | $C_4$ |
| | 5 | I-CH | $C_5$ |
| | | Q-CH | $C_6$ |
| | 7 | I-CH | $C_7$ |
| | | Q-CH | $C_8$ |
| | 9 | I-CH | $C_9$ |
| | | Q-CH | $C_{10}$ |
| | 11 | I-CH | $C_{11}$ |
| | | Q-CH | $C_{12}$ |
| | 13 | I-CH | $C_{13}$ |
| | | Q-CH | $C_{14}$ |
| | 15 | I-CH | $C_{15}$ |
| | | Q-CH | $C_{16}$ |

# FIG.20H

| Symbol# | 0 | 1 | 2 | 3 |
|---|---|---|---|---|
| slot#1 | 11 | 11 | 11 | 10 |
| 2 | 11 | 10 | 11 | 11 |
| 3 | 11 | 00 | 11 | 10 |
| 4 | 11 | 10 | 11 | 11 |
| 5 | 11 | 11 | 11 | 10 |
| 6 | 11 | 10 | 11 | 00 |
| 7 | 11 | 11 | 11 | 10 |
| 8 | 11 | 10 | 11 | 11 |
| 9 | 11 | 00 | 11 | 01 |
| 10 | 11 | 01 | 11 | 00 |
| 11 | 11 | 11 | 11 | 01 |
| 12 | 11 | 01 | 11 | 00 |
| 13 | 11 | 00 | 11 | 01 |
| 14 | 11 | 01 | 11 | 11 |
| 15 | 11 | 00 | 11 | 01 |
| 16 | 11 | 01 | 11 | 00 |

# FIG.20I

| Symbol# | Channel | Corresponding word of length 16 |
|---|---|---|
| 1 | I-CH | $C_1$ |
| | Q-CH | $C_2$ |
| 3 | I-CH | $C_3$ |
| | Q-CH | $C_4$ |

# FIG.21

| Frame Synchronization Words |
|---|
| L=15, Slot No.    1 2 3 4  .........................15 |
| $C_1$=( 1 0 0 0 1 1 1 1 0 1 0 1 1 0 0 ) |
| $C_2$=( 1 0 1 0 0 1 1 0 1 1 1 0 0 0 0 ) |
| $C_3$=( 1 1 0 0 0 1 0 0 1 1 0 1 0 1 1 ) |
| $C_4$=( 0 0 1 0 1 0 0 0 0 1 1 1 0 1 1 ) |
| $C_5$=( 1 1 1 0 1 0 1 1 0 0 1 0 0 0 1 ) |
| $C_6$=( 1 1 0 1 1 1 0 0 0 0 1 0 1 0 0 ) |
| $C_7$=( 1 0 0 1 1 0 1 0 1 1 1 1 0 0 0 ) |
| $C_8$=( 0 0 0 0 1 1 1 0 1 1 0 0 1 0 1 ) |

## FIG.22A

$R_1(\tau) + R_2(\tau)$

$2*L(30)$

$0$

$-2$

$15$

$\tau$

## FIG.22B

$R_{1,2}(\tau) + R_{2,1}(\tau+1)$

$2$

$0$

$7$

$\tau$

$-2*L(-30)$

## FIG.22C

$$R_1(\tau) + R_2(\tau) + R_3(\tau) + R_4(\tau)$$

(a)

## FIG.22D

$$R_{1,2}(\tau) + R_{2,1}(\tau+1) + R_{3,4}(\tau) + R_{4,3}(\tau+1)$$

(b)

## FIG.23A

| | $N_{pilot}=2$ | | $N_{pilot}=3$ | | | $N_{pilot}=4$ | | | |
|---|---|---|---|---|---|---|---|---|---|
| Bit# | 0 | 1 | 0 | 1 | 2 | 0 | 1 | 2 | 3 |
| slot#1 | 1 | 1 | 1 | 1 | 1 | 1 | 1 | 1 | 1 |
| 2 | 0 | 0 | 0 | 1 | 0 | 1 | 0 | 1 | 0 |
| 3 | 0 | 1 | 0 | 1 | 1 | 1 | 0 | 1 | 1 |
| 4 | 0 | 0 | 0 | 1 | 0 | 1 | 0 | 1 | 0 |
| 5 | 1 | 0 | 1 | 1 | 0 | 1 | 1 | 1 | 0 |
| 6 | 1 | 1 | 1 | 1 | 1 | 1 | 1 | 1 | 1 |
| 7 | 1 | 1 | 1 | 1 | 1 | 1 | 1 | 1 | 1 |
| 8 | 1 | 0 | 1 | 1 | 0 | 1 | 1 | 1 | 0 |
| 9 | 0 | 1 | 0 | 1 | 1 | 1 | 0 | 1 | 1 |
| 10 | 1 | 1 | 1 | 1 | 1 | 1 | 1 | 1 | 1 |
| 11 | 0 | 1 | 0 | 1 | 1 | 1 | 0 | 1 | 1 |
| 12 | 1 | 0 | 1 | 1 | 0 | 1 | 1 | 1 | 0 |
| 13 | 1 | 0 | 1 | 1 | 0 | 1 | 1 | 1 | 0 |
| 14 | 0 | 0 | 0 | 1 | 0 | 1 | 0 | 1 | 0 |
| 15 | 0 | 0 | 0 | 1 | 0 | 1 | 0 | 1 | 0 |

## FIG.23B

| $N_{pilot}$ | Pilot bit position# | Corresponding word of length 15 |
|---|---|---|
| 2 | 0 | $C_1$ |
| | 1 | $C_2$ |
| 3 | 0 | $C_1$ |
| | 2 | $C_2$ |
| 4 | 1 | $C_1$ |
| | 3 | $C_2$ |

## FIG.23C

| | $N_{pilot}=2$ | | $N_{pilot}=3$ | | | $N_{pilot}=4$ | | | |
|---|---|---|---|---|---|---|---|---|---|
| Bit# | 0 | 1 | 0 | 1 | 2 | 0 | 1 | 2 | 3 |
| slot#1 | 1 | 1 | 1 | 1 | 1 | 1 | 1 | 1 | 1 |
| 2 | 1 | 0 | 0 | 1 | 0 | 1 | 0 | 1 | 0 |
| 3 | 1 | 1 | 0 | 1 | 1 | 1 | 0 | 1 | 1 |
| 4 | 1 | 0 | 0 | 1 | 0 | 1 | 0 | 1 | 0 |
| 5 | 1 | 0 | 1 | 1 | 0 | 1 | 1 | 1 | 0 |
| 6 | 1 | 1 | 1 | 1 | 1 | 1 | 1 | 1 | 1 |
| 7 | 1 | 1 | 1 | 1 | 1 | 1 | 1 | 1 | 1 |
| 8 | 1 | 0 | 1 | 1 | 0 | 1 | 1 | 1 | 0 |
| 9 | 1 | 1 | 0 | 1 | 1 | 1 | 0 | 1 | 1 |
| 10 | 1 | 1 | 1 | 1 | 1 | 1 | 1 | 1 | 1 |
| 11 | 1 | 1 | 0 | 1 | 1 | 1 | 0 | 1 | 1 |
| 12 | 1 | 0 | 1 | 1 | 0 | 1 | 1 | 1 | 0 |
| 13 | 1 | 0 | 1 | 1 | 0 | 1 | 1 | 1 | 0 |
| 14 | 1 | 0 | 0 | 1 | 0 | 1 | 0 | 1 | 0 |
| 15 | 1 | 0 | 0 | 1 | 0 | 1 | 0 | 1 | 0 |

## FIG.23D

| $N_{pilot}$ | Pilot bit position# | Corresponding word of length 15 |
|---|---|---|
| 2 | 1 | $C_1$ |
| 3 | 0 | $C_1$ |
| | 2 | $C_2$ |
| 4 | 1 | $C_1$ |
| | 3 | $C_2$ |

# FIG.23E

| | $N_{pilot}=5$ | | | | | $N_{pilot}=6$ | | | | | |
|---|---|---|---|---|---|---|---|---|---|---|---|
| Bit# | 0 | 1 | 2 | 3 | 4 | 0 | 1 | 2 | 3 | 4 | 5 |
| slot#1 | 1 | 1 | 1 | 1 | 0 | 1 | 1 | 1 | 1 | 1 | 0 |
| 2 | 0 | 0 | 1 | 1 | 0 | 1 | 0 | 0 | 1 | 1 | 0 |
| 3 | 0 | 1 | 1 | 0 | 1 | 1 | 0 | 1 | 1 | 0 | 1 |
| 4 | 0 | 0 | 1 | 0 | 0 | 1 | 0 | 0 | 1 | 0 | 0 |
| 5 | 1 | 0 | 1 | 0 | 1 | 1 | 1 | 0 | 1 | 0 | 1 |
| 6 | 1 | 1 | 1 | 1 | 0 | 1 | 1 | 1 | 1 | 1 | 0 |
| 7 | 1 | 1 | 1 | 0 | 0 | 1 | 1 | 1 | 1 | 0 | 0 |
| 8 | 1 | 0 | 1 | 0 | 0 | 1 | 1 | 0 | 1 | 0 | 0 |
| 9 | 0 | 1 | 1 | 1 | 0 | 1 | 0 | 1 | 1 | 1 | 0 |
| 10 | 1 | 1 | 1 | 1 | 1 | 1 | 1 | 1 | 1 | 1 | 1 |
| 11 | 0 | 1 | 1 | 0 | 1 | 1 | 0 | 1 | 1 | 0 | 1 |
| 12 | 1 | 0 | 1 | 1 | 1 | 1 | 1 | 0 | 1 | 1 | 1 |
| 13 | 1 | 0 | 1 | 0 | 0 | 1 | 1 | 0 | 1 | 0 | 0 |
| 14 | 0 | 0 | 1 | 1 | 1 | 1 | 0 | 0 | 1 | 1 | 1 |
| 15 | 0 | 0 | 1 | 1 | 1 | 1 | 0 | 0 | 1 | 1 | 1 |

# FIG.23F

| | N_pilot=7 | | | | | | | N_pilot=8 | | | | | | | |
|---|---|---|---|---|---|---|---|---|---|---|---|---|---|---|---|
| Bit# | 0 | 1 | 2 | 3 | 4 | 5 | 6 | 0 | 1 | 2 | 3 | 4 | 5 | 6 | 7 |
| slot#1 | 1 | 1 | 1 | 1 | 1 | 0 | 1 | 1 | 1 | 1 | 1 | 1 | 1 | 1 | 0 |
| 2 | 1 | 0 | 0 | 1 | 1 | 0 | 1 | 1 | 0 | 1 | 0 | 1 | 1 | 1 | 0 |
| 3 | 1 | 0 | 1 | 1 | 0 | 1 | 1 | 1 | 0 | 1 | 1 | 1 | 0 | 1 | 1 |
| 4 | 1 | 0 | 0 | 1 | 0 | 0 | 1 | 1 | 0 | 1 | 0 | 1 | 0 | 1 | 0 |
| 5 | 1 | 1 | 0 | 1 | 0 | 1 | 1 | 1 | 1 | 1 | 0 | 1 | 0 | 1 | 1 |
| 6 | 1 | 1 | 1 | 1 | 1 | 0 | 1 | 1 | 1 | 1 | 1 | 1 | 1 | 1 | 0 |
| 7 | 1 | 1 | 1 | 1 | 0 | 0 | 1 | 1 | 1 | 1 | 1 | 1 | 0 | 1 | 0 |
| 8 | 1 | 1 | 0 | 1 | 0 | 0 | 1 | 1 | 1 | 1 | 0 | 1 | 0 | 1 | 0 |
| 9 | 1 | 0 | 1 | 1 | 1 | 0 | 1 | 1 | 0 | 1 | 1 | 1 | 1 | 1 | 0 |
| 10 | 1 | 1 | 1 | 1 | 1 | 1 | 1 | 1 | 1 | 1 | 1 | 1 | 1 | 1 | 1 |
| 11 | 1 | 0 | 1 | 1 | 0 | 1 | 1 | 1 | 0 | 1 | 1 | 1 | 0 | 1 | 1 |
| 12 | 1 | 1 | 0 | 1 | 1 | 1 | 1 | 1 | 1 | 1 | 0 | 1 | 1 | 1 | 1 |
| 13 | 1 | 1 | 0 | 1 | 0 | 0 | 1 | 1 | 1 | 1 | 0 | 1 | 0 | 1 | 0 |
| 14 | 1 | 0 | 0 | 1 | 1 | 1 | 1 | 1 | 0 | 1 | 0 | 1 | 1 | 1 | 1 |
| 15 | 1 | 0 | 0 | 1 | 1 | 1 | 1 | 1 | 0 | 1 | 0 | 1 | 1 | 1 | 1 |

## FIG.23G

| $N_{pilot}$ | Pilot bit position# | Corresponding word of length 15 |
|---|---|---|
| 5 | 0 | $C_1$ |
|   | 1 | $C_2$ |
|   | 3 | $C_3$ |
|   | 4 | $C_4$ |
| 6 | 1 | $C_1$ |
|   | 2 | $C_2$ |
|   | 4 | $C_3$ |
|   | 5 | $C_4$ |
| 7 | 1 | $C_1$ |
|   | 2 | $C_2$ |
|   | 4 | $C_3$ |
|   | 5 | $C_4$ |
| 8 | 1 | $C_1$ |
|   | 3 | $C_2$ |
|   | 5 | $C_3$ |
|   | 7 | $C_4$ |

## FIG.23H

Data    Data $N_{data}$ bits

Control    Pilot $N_{pilot}$ bits    TFCI $N_{TFCI}$ bits

$T_{slot}=2560$ chips, $10*2^k$ bits$(k=0..3)$

slot#1 | slot#2 | | slot#i | | slot#15

Random–access message $T_{RACH}$ =10ms

## FIG.23I

| Channel bit rate(kbps) | Channel symbol rate(ksps) | SF | Bits/ frame | Bits/ slot | $N_{pilot}$ | $N_{TFCI}$ |
|---|---|---|---|---|---|---|
| 15 | 15 | 256 | 150 | 10 | 8 | 2 |

## FIG.23J

| Bit# | 0 | 1 | 2 | 3 | 4 | 5 | 6 | 7 |
|---|---|---|---|---|---|---|---|---|
| slot#1 | 1 | 1 | 1 | 1 | 1 | 1 | 1 | 0 |
| 2 | 1 | 0 | 1 | 0 | 1 | 1 | 1 | 0 |
| 3 | 1 | 0 | 1 | 1 | 1 | 0 | 1 | 1 |
| 4 | 1 | 0 | 1 | 0 | 1 | 0 | 1 | 0 |
| 5 | 1 | 1 | 1 | 0 | 1 | 0 | 1 | 1 |
| 6 | 1 | 1 | 1 | 1 | 1 | 1 | 1 | 0 |
| 7 | 1 | 1 | 1 | 1 | 1 | 0 | 1 | 0 |
| 8 | 1 | 1 | 1 | 0 | 1 | 0 | 1 | 0 |
| 9 | 1 | 0 | 1 | 1 | 1 | 1 | 1 | 0 |
| 10 | 1 | 1 | 1 | 1 | 1 | 1 | 1 | 1 |
| 11 | 1 | 0 | 1 | 1 | 1 | 0 | 1 | 1 |
| 12 | 1 | 1 | 1 | 0 | 1 | 1 | 1 | 1 |
| 13 | 1 | 1 | 1 | 0 | 1 | 0 | 1 | 0 |
| 14 | 1 | 0 | 1 | 0 | 1 | 1 | 1 | 1 |
| 15 | 1 | 0 | 1 | 0 | 1 | 1 | 1 | 1 |

# FIG.24A

| | $N_{pilot}$ =2 | $N_{pilot}$ =4 | | $N_{pilot}$ =8 | | | | $N_{pilot}$ =16 | | | | | | | |
|---|---|---|---|---|---|---|---|---|---|---|---|---|---|---|---|
| Symbol# | 0 | 0 | 1 | 0 | 1 | 2 | 3 | 0 | 1 | 2 | 3 | 4 | 5 | 6 | 7 |
| slot#1 | 11 | 11 | 11 | 11 | 11 | 11 | 10 | 11 | 11 | 11 | 10 | 11 | 11 | 11 | 10 |
| 2 | 00 | 11 | 00 | 11 | 00 | 11 | 10 | 11 | 00 | 11 | 10 | 11 | 11 | 11 | 00 |
| 3 | 01 | 11 | 01 | 11 | 01 | 11 | 01 | 11 | 01 | 11 | 01 | 11 | 10 | 11 | 00 |
| 4 | 00 | 11 | 00 | 11 | 00 | 11 | 00 | 11 | 00 | 11 | 00 | 11 | 01 | 11 | 10 |
| 5 | 10 | 11 | 10 | 11 | 10 | 11 | 01 | 11 | 10 | 11 | 01 | 11 | 11 | 11 | 11 |
| 6 | 11 | 11 | 11 | 11 | 11 | 11 | 10 | 11 | 11 | 11 | 10 | 11 | 01 | 11 | 01 |
| 7 | 11 | 11 | 11 | 11 | 11 | 11 | 00 | 11 | 11 | 11 | 00 | 11 | 10 | 11 | 11 |
| 8 | 10 | 11 | 10 | 11 | 10 | 11 | 00 | 11 | 10 | 11 | 00 | 11 | 10 | 11 | 00 |
| 9 | 01 | 11 | 01 | 11 | 01 | 11 | 10 | 11 | 01 | 11 | 10 | 11 | 00 | 11 | 11 |
| 10 | 11 | 11 | 11 | 11 | 11 | 11 | 11 | 11 | 11 | 11 | 11 | 11 | 00 | 11 | 11 |
| 11 | 01 | 11 | 01 | 11 | 01 | 11 | 01 | 11 | 01 | 11 | 01 | 11 | 11 | 11 | 10 |
| 12 | 10 | 11 | 10 | 11 | 10 | 11 | 11 | 11 | 10 | 11 | 11 | 11 | 00 | 11 | 10 |
| 13 | 10 | 11 | 10 | 11 | 10 | 11 | 00 | 11 | 10 | 11 | 00 | 11 | 01 | 11 | 01 |
| 14 | 00 | 11 | 00 | 11 | 00 | 11 | 11 | 11 | 00 | 11 | 11 | 11 | 00 | 11 | 00 |
| 15 | 00 | 11 | 00 | 11 | 00 | 11 | 11 | 11 | 00 | 11 | 11 | 11 | 10 | 11 | 01 |

# FIG.24B

| Symbol rate | Symbol# | Channel | Corresponding word of length 15 |
|---|---|---|---|
| $N_{pilot}=2$ | 0 | I-CH | $C_1$ |
| | | Q-CH | $C_2$ |
| $N_{pilot}=4$ | 1 | I-CH | $C_1$ |
| | | Q-CH | $C_2$ |
| $N_{pilot}=8$ | 1 | I-CH | $C_1$ |
| | | Q-CH | $C_2$ |
| | 3 | I-CH | $C_3$ |
| | | Q-CH | $C_4$ |
| $N_{pilot}=16$ | 1 | I-CH | $C_1$ |
| | | Q-CH | $C_2$ |
| | 3 | I-CH | $C_3$ |
| | | Q-CH | $C_4$ |
| | 5 | I-CH | $C_5$ |
| | | Q-CH | $C_6$ |
| | 7 | I-CH | $C_7$ |
| | | Q-CH | $C_8$ |

# FIG.24C

| Symbol# | $N_{pilot}=4$ | | $N_{pilot}=8$ | | | | $N_{pilot}=16$ | | | | | | | |
|---|---|---|---|---|---|---|---|---|---|---|---|---|---|---|
| | 0 | 1 | 0 | 1 | 2 | 3 | 0 | 1 | 2 | 3 | 4 | 5 | 6 | 7 |
| slot#1 | 01 | 10 | 11 | 00 | 00 | 10 | 11 | 00 | 00 | 10 | 11 | 00 | 00 | 10 |
| 2 | 10 | 10 | 11 | 00 | 00 | 01 | 11 | 00 | 00 | 01 | 11 | 10 | 00 | 10 |
| 3 | 11 | 10 | 11 | 11 | 00 | 00 | 11 | 11 | 00 | 00 | 11 | 10 | 00 | 11 |
| 4 | 10 | 10 | 11 | 10 | 00 | 01 | 11 | 10 | 00 | 01 | 11 | 00 | 00 | 00 |
| 5 | 00 | 10 | 11 | 11 | 00 | 11 | 11 | 11 | 00 | 11 | 11 | 01 | 00 | 10 |
| 6 | 01 | 10 | 11 | 00 | 00 | 10 | 11 | 00 | 00 | 10 | 11 | 11 | 00 | 00 |
| 7 | 01 | 10 | 11 | 10 | 00 | 10 | 11 | 10 | 00 | 10 | 11 | 01 | 00 | 11 |
| 8 | 00 | 10 | 11 | 10 | 00 | 11 | 11 | 10 | 00 | 11 | 11 | 10 | 00 | 11 |
| 9 | 11 | 10 | 11 | 00 | 00 | 00 | 11 | 00 | 00 | 00 | 11 | 01 | 00 | 01 |
| 10 | 01 | 10 | 11 | 01 | 00 | 10 | 11 | 01 | 00 | 10 | 11 | 01 | 00 | 01 |
| 11 | 11 | 10 | 11 | 11 | 00 | 00 | 11 | 11 | 00 | 00 | 11 | 00 | 00 | 10 |
| 12 | 00 | 10 | 11 | 01 | 00 | 11 | 11 | 01 | 00 | 11 | 11 | 00 | 00 | 01 |
| 13 | 00 | 10 | 11 | 10 | 00 | 11 | 11 | 10 | 00 | 11 | 11 | 11 | 00 | 00 |
| 14 | 10 | 10 | 11 | 01 | 00 | 01 | 11 | 01 | 00 | 01 | 11 | 10 | 00 | 01 |
| 15 | 10 | 10 | 11 | 01 | 00 | 01 | 11 | 01 | 00 | 01 | 11 | 11 | 00 | 11 |

# FIG.24D

| Symbol rate | Symbol# | Channel | Corresponding word of length 15 |
|---|---|---|---|
| $N_{pilot} = 4$ | 0 | I-CH | $-C_1$ |
| | | Q-CH | $C_2$ |
| $N_{pilot} = 8$ | 1 | I-CH | $-C_3$ |
| | | Q-CH | $C_4$ |
| | 3 | I-CH | $C_1$ |
| | | Q-CH | $-C_2$ |
| $N_{pilot} = 16$ | 1 | I-CH | $-C_3$ |
| | | Q-CH | $C_4$ |
| | 3 | I-CH | $C_1$ |
| | | Q-CH | $-C_2$ |
| | 5 | I-CH | $-C_7$ |
| | | Q-CH | $C_8$ |
| | 7 | I-CH | $C_5$ |
| | | Q-CH | $-C_6$ |

# FIG.25A

| | Npilot =8 | | | | Npilot =16 | | | | | | | |
|---|---|---|---|---|---|---|---|---|---|---|---|---|
| Symbol# | 0 | 1 | 2 | 3 | 0 | 1 | 2 | 3 | 4 | 5 | 6 | 7 |
| slot#1 | 11 | 11 | 11 | 10 | 11 | 11 | 11 | 10 | 11 | 11 | 11 | 10 |
| 2 | 11 | 00 | 11 | 10 | 11 | 00 | 11 | 10 | 11 | 11 | 11 | 00 |
| 3 | 11 | 01 | 11 | 01 | 11 | 01 | 11 | 01 | 11 | 10 | 11 | 00 |
| 4 | 11 | 00 | 11 | 00 | 11 | 00 | 11 | 00 | 11 | 01 | 11 | 10 |
| 5 | 11 | 10 | 11 | 01 | 11 | 10 | 11 | 01 | 11 | 11 | 11 | 11 |
| 6 | 11 | 11 | 11 | 10 | 11 | 11 | 11 | 10 | 11 | 01 | 11 | 01 |
| 7 | 11 | 11 | 11 | 00 | 11 | 11 | 11 | 00 | 11 | 10 | 11 | 11 |
| 8 | 11 | 10 | 11 | 00 | 11 | 10 | 11 | 00 | 11 | 10 | 11 | 00 |
| 9 | 11 | 01 | 11 | 10 | 11 | 01 | 11 | 10 | 11 | 00 | 11 | 11 |
| 10 | 11 | 11 | 11 | 11 | 11 | 11 | 11 | 11 | 11 | 00 | 11 | 11 |
| 11 | 11 | 01 | 11 | 01 | 11 | 01 | 11 | 01 | 11 | 11 | 11 | 10 |
| 12 | 11 | 10 | 11 | 11 | 11 | 10 | 11 | 11 | 11 | 00 | 11 | 10 |
| 13 | 11 | 10 | 11 | 00 | 11 | 10 | 11 | 00 | 11 | 01 | 11 | 01 |
| 14 | 11 | 00 | 11 | 11 | 11 | 00 | 11 | 11 | 11 | 00 | 11 | 00 |
| 15 | 11 | 00 | 11 | 11 | 11 | 00 | 11 | 11 | 11 | 10 | 11 | 01 |

# FIG.25B

| Symbol rate | Symbol# | Channel | Corresponding word of length 15 |
|---|---|---|---|
| $N_{pilot} = 8$ | 1 | I-CH | $C_1$ |
| | | Q-CH | $C_2$ |
| | 3 | I-CH | $C_3$ |
| | | Q-CH | $C_4$ |
| $N_{pilot} = 16$ | 1 | I-CH | $C_1$ |
| | | Q-CH | $C_2$ |
| | 3 | I-CH | $C_3$ |
| | | Q-CH | $C_4$ |
| | 5 | I-CH | $C_5$ |
| | | Q-CH | $C_6$ |
| | 7 | I-CH | $C_7$ |
| | | Q-CH | $C_8$ |

# FIG.25C

| | $N_{pilot}=8$ | | | | $N_{pilot}=16$ | | | | | | |
| --- | --- | --- | --- | --- | --- | --- | --- | --- | --- | --- | --- |
| Symbol# | 0 | 1 | 2 | 3 | 0 | 1 | 2 | 3 | 4 | 5 | 6 | 7 |
| slot#1 | 11 | 00 | 00 | 10 | 11 | 00 | 00 | 10 | 11 | 00 | 00 | 10 |
| 2 | 11 | 00 | 00 | 01 | 11 | 00 | 00 | 01 | 11 | 10 | 00 | 10 |
| 3 | 11 | 11 | 00 | 00 | 11 | 11 | 00 | 00 | 11 | 10 | 00 | 11 |
| 4 | 11 | 10 | 00 | 01 | 11 | 10 | 00 | 01 | 11 | 00 | 00 | 00 |
| 5 | 11 | 11 | 00 | 11 | 11 | 11 | 00 | 11 | 11 | 01 | 00 | 10 |
| 6 | 11 | 00 | 00 | 10 | 11 | 00 | 00 | 10 | 11 | 11 | 00 | 00 |
| 7 | 11 | 10 | 00 | 10 | 11 | 10 | 00 | 10 | 11 | 01 | 00 | 11 |
| 8 | 11 | 10 | 00 | 11 | 11 | 10 | 00 | 11 | 11 | 10 | 00 | 11 |
| 9 | 11 | 00 | 00 | 00 | 11 | 00 | 00 | 00 | 11 | 01 | 00 | 01 |
| 10 | 11 | 01 | 00 | 10 | 11 | 01 | 00 | 10 | 11 | 01 | 00 | 01 |
| 11 | 11 | 11 | 00 | 00 | 11 | 11 | 00 | 00 | 11 | 00 | 00 | 10 |
| 12 | 11 | 01 | 00 | 11 | 11 | 01 | 00 | 11 | 11 | 00 | 00 | 01 |
| 13 | 11 | 10 | 00 | 11 | 11 | 10 | 00 | 11 | 11 | 11 | 00 | 00 |
| 14 | 11 | 01 | 00 | 01 | 11 | 01 | 00 | 01 | 11 | 10 | 00 | 01 |
| 15 | 11 | 01 | 00 | 01 | 11 | 01 | 00 | 01 | 11 | 11 | 00 | 11 |

# FIG.25D

| Symbol rate | Symbol# | Channel | Corresponding word of length 15 |
|---|---|---|---|
| $N_{pilot}=8$ | 1 | I-CH | $-C_3$ |
| | | Q-CH | $C_4$ |
| | 3 | I-CH | $C_1$ |
| | | Q-CH | $-C_2$ |
| $N_{pilot}=16$ | 1 | I-CH | $-C_3$ |
| | | Q-CH | $C_4$ |
| | 3 | I-CH | $C_1$ |
| | | Q-CH | $-C_2$ |
| | 5 | I-CH | $-C_7$ |
| | | Q-CH | $C_8$ |
| | 7 | I-CH | $C_5$ |
| | | Q-CH | $-C_6$ |

# FIG.26A

| Parameters | Uplink |
|---|---|
| Number of slots per frame | 15 |
| Number of bits in the DPCCH(Pilot/TPC/TFCI/FBI) | 6/2/2/0 |
| Number of bits in the DPDCH per each slot | 10 |
| Spreading factor(DPDCH) | 256 |
| Spreading factor(DPCCH) | 256 |
| Modulation | HPSK |
| 3dB bandwidth | 3.84MHz |
| Shaping filter | Root raised cosine (roll off 0.22) |
| Power amplifier | Ideal |
| Propogation channel | AWGN |

## FIG.26B

AWGN
Uplink DPCCH with $N_{pilot}=6$
Normalized threshold=0.6

Prob. of frame sync. confirm. success

Eb/No(dB)

- ■ Double check $S_R=1$
- ● Single check $S_R=1$
- ▲ Double check $S_R=2$
- ▼ Single check $S_R=2$
- ◆ Double check $S_R=3$
- ✕ Single check $S_R=3$

## FIG.26C

AWGN
Uplink DPCCH with $N_{pilot}=6$
Normalized threshold=0.6

Prob. of a false alarm

Eb/No(dB)

## FIG.27

| Item | 15 slots | 16 slots |
|---|---|---|
| No. of slots per frame | 15 | 16 |
| No. of $N_{pilot}$ per slot | 1) Uplink<br>2, 3, 4, 5, 6, 7, 8<br>2) Downlink<br>2, 4, 8, 16 | 1) Uplink<br>5, 6, 7, 8<br>2) Downlink<br>4, 8, 16, 32 |
| Slot-Slot possible? | Yes | Yes |
| Double-check possible? | Yes,<br>(Two correlators such as auto-correlator and cross-correlator are used) | Yes<br>(Auto-correlator) |
| Single frame synchronization word can be used for frame synchronization? | Yes, since a frame synchronization word has -1 out-of-phase coefficients. | May not be feasible because of +4 or -4 out-of-phase coefficients.<br>The +4 or -4 side lobes can be zero through some particular processing using preferred pair of frame synchronization words. |
| Frame synchronization words | All 8 frame synchronization words are made out of a single PN code | All 8 frame synchronization words have +4 or -4 out-of-phase coefficient and minus peak value at middle shift. |
| Autocorrelation function | $R(\tau)=15$, $\tau=0$<br>$R(\tau)=-1$, elsewhere | $R(\tau)=16$, $\tau=0$<br>$R(\tau)=-16$, $\tau=8$<br>$R(\tau)=0$, +4, or -4, elsewhere |
|  |  |  |

EP 1 039 654 B1

# FIG.28A

Channelization code and
long scrambling code C,
spreading length=M

Tx.
Antenna 1

67

60

Pilot — Ant1

Diversity Pilot — Ant2

MUX

TPC

TFI

MUX
64

STTD
Encoder
65

Ant1

Ant2

MUX
66

Tx.
Antenna 2

68

Data

Channel
Encoder
61

Rate
matching
62

Interleaver
63

QPSK symbols

EP 1 039 654 B1

## FIG.28B

## FIG.29A

$$C_{1,0} \ C_{1,1} \ C_{1,2} \cdots C_{1,21} C_{1,0} \cdots \longrightarrow \boxed{\text{First matched filter}} \quad \frac{R_{C1}(j)}{A}$$

100

$$C_{1,21} \qquad C_{1,2} \ C_{1,1} \ C_{1,0}$$

110

$$C_{2,0} \ C_{2,1} \ C_{2,2} \cdots C_{2,21} C_{2,0} \cdots \longrightarrow \boxed{\text{Second matched filter}} \quad \frac{R_{C2}(j)}{B}$$

$$C_{2,21} \qquad C_{2,2} \ C_{2,1} \ C_{2,0}$$

$$\oplus \quad \frac{R_{C1}(j)+R_{C2}(j)}{=2R_{C1}(j)} \ C \longrightarrow$$

## FIG.29B

$R_{C1}(j)+R_{C2}(j)$

$4l+1$

$V_T$

$0$

$1$

$2l+1$

$j$ (Slot number)

$-2$

## FIG.30A

120

$C_{2,0} \ C_{2,1} \ C_{2,2} \cdots C_{2,21} C_{2,0} \cdots$ → Third matched filter

$C_{1,21} \qquad C_{1,2} \ C_{1,1} \ C_{1,0}$

$\dfrac{R_{C1,C2}(j)}{=-R_{C1}(j+l+1)}$ D

$-2R_{C1}(j+l+1)$ F

130

$C_{1,0} \ C_{1,1} \ C_{1,2} \cdots C_{1,21} C_{1,0} \cdots$ → Fourth matched filter

$C_{2,21-1} \qquad C_{2,1} \ C_{2,0} \ C_{2,21}$

$\dfrac{R_{C2,C1}(j+1)}{=-R_{C2}(j+l+1)}$ E

## FIG.30B

# FIG.31

$C_{1,0} C_{1,1} C_{1,2} \cdots C_{1,21} C_{1,0} \cdots$

100

First matched filter

$C_{1,21}$ $\cdots\cdots$ $C_{1,2}$ $C_{1,1}$ $C_{1,0}$

$R_{C1}(j)$ A

110

$C_{2,0} C_{2,1} C_{2,2} \cdots C_{2,21} C_{2,0} \cdots$

Second matched filter

$C_{2,21}$ $\cdots\cdots$ $C_{2,2}$ $C_{2,1}$ $C_{2,0}$

$R_{C2}(j)$ B

$\oplus$ $\dfrac{R_{C1}(j) + R_{C2}(j)}{= 2R_{C1}(j)}$ C

120

Third matched filter

$C_{1,21}$ $\cdots\cdots$ $C_{1,2}$ $C_{1,1}$ $C_{1,0}$

$\dfrac{R_{C1,C2}(j)}{= -R_{C1}(j+l+1)}$ D

130

Fourth matched filter

$C_{2,21-1}$ $\cdots\cdots$ $C_{2,1}$ $C_{2,0}$ $C_{2,21}$

$\dfrac{R_{C2,C1}(j+1)}{= -R_{C2}(j+l+1)}$ E

$\oplus$ $-2R_{C1}(j+l+1)$ F

# FIG.32A

## FIG.32B

# FIG.33A

# FIG.33B

# FIG.34

I channel of symbol#
$C_{1,0}C_{1,1}C_{1,2}\cdots C_{1,14}C_{1,0}\cdots$

Q channel of symbol#
$C_{2,0}C_{2,1}C_{2,2}\cdots C_{2,14}C_{2,0}\cdots$

First matched filter — 200    A

$C_{1,14}$ $C_{1,2}$ $C_{1,1}$ $C_{1,0}$

Second matched filter    B
— 210

$C_{2,14}$ $C_{2,2}$ $C_{2,1}$ $C_{2,0}$

Third matched filter    D
— 220

$C_{1,14}$ $C_{1,2}$ $C_{1,1}$ $C_{1,0}$

Fourth matched filter    E
— 230

$C_{2,13}$ $C_{2,1}$ $C_{2,0}$ $C_{2,14}$

C

F

# FIG.35A

I channel symbol# 1
$C_{1,0} C_{1,1} C_{1,2} \cdots C_{1,14} C_{1,0} \cdots$

First matched filter — 200

A

$C_{1,14} \quad C_{1,2} \; C_{1,1} \; C_{1,0}$

Q channel symbol# 1
$C_{2,0} C_{2,1} C_{2,2} \cdots C_{2,14} C_{2,0} \cdots$

Second matched filter

B

210

$C_{2,14} \quad C_{2,2} \; C_{2,1} \; C_{2,0}$

C

# FIG.35B

30

$V_T$

0

$-2$

7

15

j (Slot number)

# FIG.36A

Q channel of symbol# $\overline{C_{2,0}C_{2,1}C_{2,2}\cdots C_{2,14}C_{2,0}\cdots}$ → First matched filter — 220  D

$C_{1,14}$  ...  $C_{1,2}$ $C_{1,1}$ $C_{1,0}$

I channel of symbol# $\overline{C_{1,0}C_{1,1}C_{1,2}\cdots C_{1,14}C_{1,0}\cdots}$ → Second matched filter  E — 230

$C_{2,13}$  ...  $C_{2,1}$ $C_{2,0}$ $C_{2,14}$

$\oplus$ → F

# FIG.36B

# FIG.37

# FIG.38

## FIG.39A

C1

$a_1 a_3 a_5 \cdots a_{29} a_1 a_3$

100

matched
filter

A

90

Threshold
comparing
part

B

$a_{29} a_{27} \quad \cdots \quad a_5 a_3 a_1$

## FIG.39B

$R(\tau)$

15

$V_T$

1

0

−1

$\tau$

# FIG.40A

C1

$a_1 a_3 a_5 \cdots a_{29} a_1 a_3$ → First matched filter — A → 200

↑ ↑ ... ↑ ↑ ↑

$a_{29} a_{27}$ $a_5 a_3 a_1$

C2

$a_2 a_4 a_6 \cdots a_{30} a_2 a_4$ → Second matched filter — B → 210

↑ ↑ ... ↑ ↑ ↑

$a_{30} a_{28}$ $a_6 a_4 a_2$

⊕ 220 — C → Threshold comparing part 90 → D

# FIG.40B

$R(\tau)$

30

$V_T$

2

0

−2

$\tau$

# FIG. 41A

C1
$a_1 a_3 a_5 \cdots a_{29} a_1 a_3 \cdots$ → | First matched filter | $A[R_{C1}(\tau)]$

↑ ↑ ... ↑ ↑ ↑
$a_{29} a_{27}$ $a_5 a_3 a_1$

300

C2
$a_2 a_4 a_6 \cdots a_{30} a_2 a_4 \cdots$ → | Second matched filter | $B[R_{C2}(\tau)]$

↑ ↑ ... ↑ ↑ ↑
$a_{30} a_{28}$ $a_6 a_4 a_2$

310

C3
$b_1 b_3 b_5 \cdots b_{29} b_1 b_3 \cdots$ → | Third matched filter | $C[R_{C3}(\tau)]$

↑ ↑ ... ↑ ↑ ↑
$b_{29} b_{27}$ $b_5 b_3 b_1$

320

C4
$b_2 b_4 b_8 \cdots b_{30} b_2 b_4 \cdots$ → | Fourth matched filter | $D[R_{C4}(\tau)]$

↑ ↑ ... ↑ ↑ ↑
$b_{30} b_{28}$ $b_6 b_4 b_2$

330

340

$\oplus$ → E → | Threshold comparing part | → F

90

# FIG. 41B

$R(\tau)$

60

$V_T$

4

0

−4

$\tau$

121

# FIG.42A

$R_{ci}(\tau)+R_{cj}(\tau)$

30

0

2

15

$\tau$

# FIG.42B

$R_{ci,cj}(\tau)+R_{cj,ci}(\tau)$

2

7

0

$\tau$

−30

## FIG.43A

$$R_{c1}(\tau) + R_{c2}(\tau) + R_{c3}(\tau) + R_{c4}(\tau)$$

## FIG.43B

$$R_{c1c2}(\tau) + R_{c2c1}(\tau+1) + R_{c3c4}(\tau) + R_{c4c3}(\tau+1)$$

# FIG.44

# FIG.45

# FIG. 46

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5101501 A
- US 5103459 A
- US 5109390 A
- US 5416797 A

**Non-patent literature cited in the description**

- **T. Ojanpera et al.** WIDEBAND CDMA FOR THIRD GENERATION MOBILE COMMUNICATIONS. Artech House Publishers, 1998
- **Young Joon Song et al.** *Synchronization Sequence Design with Double Thresholds for Digital Cellular Telephone,* 18 August 1998